(19) **Europäisches Patentamt**

**European Patent Office**

**Office européen des brevets**

(11) **EP 1 248 216 A1**

(12) **EUROPEAN PATENT APPLICATION**

(43) Date of publication:
09.10.2002 Bulletin 2002/41

(51) Int Cl.⁷: **G06F 17/60**

(21) Application number: 01309701.9

(22) Date of filing: 16.11.2001

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **19.01.2001 CA 2331478**<br>      **01.03.2001 CA 2339063**<br>      **31.05.2001 CA 2349277**<br><br>(71) Applicant: **Cognos Incorporated**<br>**Ottawa, Ontario K1G 4k9 (CA)**<br><br>(72) Inventors:<br>• **Strutt, David**<br>**Ottawa, Ontario K1S 0T9 (CA)** | • **Helal, Robert**<br>**Ottawa, Ontario K1W 1G3 (CA)**<br><br>(74) Representative: **Gold, Tibor Z. et al**<br>**Kilburn & Strode**<br>**20 Red Lion Street**<br>**London WC1R 4PJ (GB)**<br><br>Remarks:<br>Claims 11-16, 19-30 and 33 are deemed to be abandoned due to non-payment of the claims fees (Rule 31 (2) EPC). |

(54) **Data warehouse model and methodology**

(57)     A business model for use in a data warehouse system adaptable for multiple organizations is provided. The business model comprises a set of dimensions representing business reference aspects of the multiple organizations, a set of measures representing measurements of business activity aspects of the multiple organizations, and relationships between the set of dimensions and measures. A subset of the set of measures represents the business activity aspects of the specific organization. A subset of the set of dimensions represents the business aspects of a particular organization. The relationships allow for functional areas of analysis to use common dimensions for cross-functional analysis.

Figure 1

EP 1 248 216 A1

**Description**

FIELD OF THE INVENTION

This invention relates generally to business intelligence systems and in particular to a business model of an integrated data warehouse system.

BACKGROUND OF THE INVENTION

Many large organizations use enterprise resource planning (ERP) systems to consolidate day-to-day transaction data and streamline business functions such as manufacturing. With their predefined, standard reporting capabilities, however, these ERP systems are not optimized to support the flexible, *ad hoc* business analysis and reporting businesses need today to make strategic decisions and improve business performance. Furthermore, ERP systems are not intended to serve as e-business analysis and reporting infrastructures.

Many companies turned to developing data warehouses to fill the requirement for consolidating data from across the organization, with a single consistent historical view, and designed for optimized reporting and analysis.

The ultimate objective of these systems was to ensure that the data needed to answer the relevant business questions was captured and in a form that would support timely information for decision-making. While the intent was sound, the challenges of bringing together business and IT to define best practices from both a business and technical standpoint presented challenges. As a result projects failed resulting in decision makers being left without crucial information.

Created by extracting data from operational or transactional systems (like ERP sources) and e-commerce systems and installing it in a more analysis- and reporting-friendly database, data warehouses are repositories of data that support management decision-making.

However, data warehouses are expensive to build and time consuming. (For example, they can take 18 to 24 months to create). Consequently, with enterprise information requirements evolving so fast today, data warehouses often fail to meet requirements when they are finally completed. Moreover, they require specialized skills and experience to build successfully.

Because of their sheer scope, data warehouses seldom produce the finely tuned analysis and reporting that e-business decision-making depends upon. Intended to be all things to all people, these warehouses focus on breadth of content, rather than the depth of vital information sweet spots users need.

Data warehouses are built upon a model which represents the organization. To build this model, an organization is first selected. Once the organization is selected, information about the organization is collected. This information is then processed into questions that the customer requires to be answered. These questions are grouped into areas of enquiry. From the areas of enquiry, a model upon which to base a data warehouse is built. This model is built to suit the needs of the organization for which it was built. If the model is not built correctly, the data warehouse which is built to suit the model will not function properly. Thus, there is a need for a way to alleviate the problem of having an incorrect model of an organization for building a data warehouse. There is also a need for a way to create a data model quickly.

SUMMARY OF THE INVENTION

The invention comprises a data warehouse business model rich and complete enough to be used by multiple organizations in a selected market. The business model contains a set of dimensions which represent various business reference aspects of multiple organizations in a market. The business model also contains a set of functional areas of analysis which relates to functional areas of a business. More than one functional area of analysis may jointly use the same dimensions. This allows for cross-functional analysis.

Different organizations may not necessarily require the use of all the dimensions or the use of all the functional areas of analysis. Thus, a subset of the dimensions may be used to represent one organization, while another subset of dimensions may represent another organization. However, preferably most organizations will most of the dimensions. Similarly, a subset of the functional areas of analysis may be used by one organization, while another subset of the functional areas of analysis may be used by another organization. Here, the areas of analysis may be tailored to an organization. It is also possible that two organizations may use the same dimensions or areas of analysis, but use different values for the business model components for analysis.

The method of creating such a rich and complete business model involves selecting a market, and then determining the organizations in that market. The organizations are then analyzed to collect organizational information. Business questions are determined from the collected information and merged into various areas of enquiry. From the group of areas of enquiry, the business model is designed.

When implementing the business model with a data model, the dimensions are implemented as dimension tables and the functional areas are implemented as fact tables. The data model may also contain placeholders so as to allow for configuration of the data model to a particular organization in the selected market. Furthermore, the data warehouse system which will be created using this data model may also allow for the configurability of different data source systems from which to collect the raw data to insert into the data warehouse.

In accordance with an aspect of the invention, there is provided a business model for use in a data warehouse system adaptable for multiple organizations is provided. The business model comprises a set of dimensions representing business reference aspects of the multiple organizations, a set of measures representing measurements of business activity aspects of the multiple organizations, and relationships between the set of dimensions and measures. A subset of the set of measures represents the business activity aspects of the specific organization. A subset of the set of dimensions represents the business aspects of a particular organization. The relationships allow for functional areas of analysis to use common dimensions for cross-functional analysis.

In accordance with another aspect of the invention, a method for creating a business model for use in a data warehouse system adaptable for multiple organizations. The method comprises steps of merging business questions of the multiple organizations into areas of analysis, decomposing the areas of analysis into a set of dimensions representing business reference aspects of the multiple organizations and a set of measures representing measurements of business activity aspects of the multiple organizations, and determining relationships between the set of dimensions and set of measures. A subset of the set of dimensions represents the business aspects of a particular organization. A subset of the set of measures represents the measurements of business activity aspects of the specific organization. The relationships allow for functional areas of analysis to use common dimensions for cross-functional analysis.

In accordance with another aspect of the invention, there is provided a method for creating a data warehouse system for managing the performance of an organization. The data warehouse system is adaptable for multiple organizations. The method comprises steps of creating a business model of organizations, implementing the business model in a data model, implementing configurable aspects of the data model in a configuration unit for setting the placeholders in the data model to the particular organization. The data model has placeholders that are settable such that the model represents a particular organization. The business model is used for answering business questions of the multiple organizations.

In accordance with another aspect of the invention, there is provided a dimensional framework for use as a foundation of a data warehouse system adaptable to multiple organizations. The dimensional framework comprises a set of dimensions of the multiple organizations. The dimensions represent business reference aspects of the multiple organizations. A subset of the dimensions represents the business reference aspects of a particular organization.

In accordance with another aspect of the invention, there is provided a method for creating a dimensional framework for use as a foundation of a data warehouse system adaptable for multiple organizations. The method comprises steps of collecting common dimensions of the multiple organizations, implementing the common dimensions into a dimensional framework data model, and implementing configurable aspects of the dimensional framework data model in a configuration unit for setting the placeholders in the dimensional framework to the particular organization. The dimensions represent the business reference aspects of the multiple organizations. The dimensional framework data model has placeholders settable such that the dimensional framework represents a particular organization.

In accordance with another aspect of the invention, there is provided a computer data signal embodied in a carrier wave and representing sequences of instructions which, when executed by a processor, cause the processor to perform a method for creating a business model for use in a data warehouse system adaptable for multiple organizations. The method comprises steps of merging business questions of the multiple organizations into areas of analysis, and decomposing the areas of analysis into a set of dimensions representing business reference aspects of the multiple organizations and a set of measures representing measurements of business activity aspects of the multiple organizations, and determining relationships between the set of dimensions and set of measures. A subset of the set of dimensions represents the business aspects of a particular organization. A subset of the set of measures represents the measurements of business activity aspects of the specific organization. The relationships allow for functional areas of analysis to use common dimensions for cross-functional analysis.

In accordance with another aspect of the invention, there is provided computer-readable media for storing instructions or statements for use in the execution in a computer of a method for creating a business model for use in a data warehouse system adaptable for multiple organizations. The method comprises steps of merging business questions of the multiple organizations into areas of analysis, decomposing the areas of analysis into a set of dimensions representing business reference aspects of the multiple organizations and a set of measures representing measurements of business activity aspects of the multiple organizations, and determining relationships between the set of dimensions and set of measures. A subset of the set of dimensions represents the business aspects of a particular organization. A subset of the set of measures represents the measurements of business activity aspects of the specific organization. The relationships allow for functional areas of analysis to use common dimensions for cross-functional analysis.

In accordance with another aspect of the invention, there is provided a computer program product for use in the execution in a computer of a data warehouse system adaptable for multiple organizations. The data warehouse system is used for managing performance of a particular organization. The data warehouse system comprises a set of dimensions representing business reference aspects of the multiple organizations, a set of measures representing measurements of business activity aspects of the multiple organizations, and relationships between the set of dimensions and measures. A subset of the set of dimensions represents the business aspects of a particular organization. A subset of the set of measures represents the business activity aspects of the specific organization. The relationships allow for functional areas of analysis to use common dimensions for cross-functional analysis.

In accordance with another aspect of the invention, there is provided a computer data signal embodied in a carrier wave and representing sequences of instructions which, when executed by a processor, cause the processor to perform a method for creating a data warehouse system adaptable for multiple organizations. The data warehouse system is used for managing performance of a particular organization. The method comprises steps of creating a business model of organizations, implementing the business model in a data model, and implementing configurable aspects of the data model in a configuration unit for setting the placeholders in the data model to the particular organization. The data model has placeholders that can be set such that the model represents a particular organization. The business model is used for answering business questions of the multiple organizations.

In accordance with another aspect of the invention, there is provided computer-readable media for storing instructions or statements for use in the execution in a computer of a method for creating a data warehouse system adaptable for multiple organizations. The data warehouse system is used for managing performance of a particular organization. The method comprises steps of creating a business model of organizations, implementing the business model in a data model, and implementing configurable aspects of the data model in a configuration unit for setting the placeholders in the data model to the particular organization. The data model has placeholders that can be set such that the model represents a particular organization, The business model is used for answering business questions of the multiple organizations.

In accordance with another aspect of the invention, there is provided a computer data signal embodied in a carrier wave and representing sequences of instructions which, when executed by a processor, cause the processor to perform a method for creating dimensional framework for use as a foundation of a data warehouse system adaptable for multiple organizations. The method comprises steps of collecting common dimensions of the multiple organizations, implementing the common dimensions into a dimensional framework data model, and implementing configurable aspects of the dimensional framework data model in a configuration unit for setting the placeholders in the dimensional framework to the particular organization. The dimensions represent the business reference aspects of the multiple organizations. The dimensional framework data model has placeholders settable such that the dimensional framework represents a particular organization.

In accordance with another aspect of the invention, there is provided computer-readable media for storing instructions or statements for use in the execution in a computer of a method for creating a dimensional framework for use as a foundation of a data warehouse system adaptable for multiple organizations. The method comprises steps of collecting common dimensions of the multiple organizations, implementing the common dimensions into a dimensional framework data model, and implementing configurable aspects of the dimensional framework data model in a configuration unit for setting the placeholders in the dimensional framework to the particular organization. The dimensions represent the business reference aspects of the multiple organizations. The dimensional framework data model has placeholders settable such that the dimensional framework represents a particular organization.

In accordance with another aspect of the invention, there is provided a computer program product for use in the execution in a computer of a dimensional framework for use as a foundation of a data warehouse system adaptable for multiple organizations adaptable for multiple organizations. The dimensional framework comprises a set of dimensions of the multiple organizations. The dimensions represent business reference aspects of the multiple organizations. A subset of the dimensions represents the business reference aspects of a particular organization.

BRIEF DESCRIPTION OF THE DRAWINGS

Embodiments of the invention will now be described with reference to the accompanying drawings, in which:

Figure 1 is a diagram showing the structure of an example of a business model of a data warehouse system;
Figure 2 is a diagram showing a component overview of a data warehouse system;
Figure 3 is an abstract model of a business model of a data warehouse system;
Figure 4 is a flow chart showing the creation of a business model of a data warehouse system;
Figure 5 is a flow chart showing the creation of a data warehouse system;
Figure 6 is a diagram showing an example of a business model of a data warehouse system;
Figure 7 is a diagram showing another example of a business model of a data warehouse system;

Figure 8 is a diagram showing an example of supply-side performance management of a data warehouse system;

Figure 9 is a diagram showing an example of demand-side performance management of a data warehouse system;

Figure 10 is a diagram showing an example of financial performance management of a data warehouse system;

Figure 11 is a diagram showing an example of a data model of a data warehouse system;

Figures 12A to 12Y are diagrams showing examples of star schemas of areas of analysis of a data model of a data warehouse system;

Figure 13 is a diagram showing the configurable aspects of a data warehouse system;

Figure 14 is a diagram showing a component view of the configuration environment of a data warehouse system;

Figure 15 is a diagram showing a configuration view of a data warehouse system;

Figure 16 is a screen shot of an example of a set of configuration placeholders of a data warehouse system;

Figure 17 is a flow diagram showing the steps to configure a data warehouse system;

Figure 18 is a component view of a configuration unit of a data warehouse system;

Figure 19 is a flow diagram showing steps to configure a data warehouse system;

Figure 20 is a screen shot of a data warehouse system console;

Figure 21 is another screen shot of a data warehouse system console.

Figure 22 is a diagram showing a screen-shot of financial analysis in a data warehouse application;

Figure 23 is a diagram showing a screen-shot of sales analysis in a data warehouse application;

Figure 24 is a diagram showing a screen-shot of inventory analysis in a data warehouse application;

Figure 25 is a screen shot illustrating a step of generating a report in a data warehouse system;

Figure 26 is a screen shot illustrating another step of generating a report in a data warehouse system; and

Figure 27 is a screen shot illustrating another step of generating a report in a data warehouse system.

## DETAILED DESCRIPTION OF THE EMBODIMENTS

In this description, the term business will be used to denote both commercial affairs and organizational affairs. The term data warehouse system will be used to denote a system implemented for the measurement and management of the performance of an organization. The organization may be commercial or non-commercial. A data warehouse system will include a data warehouse that is rich and complete enough to be applicable to many organizations and configurable to a specific organization. Finally, the term data warehouse system also relates to a business performance management system, including a business model and a query engine tool. The term business model in a data warehouse system relate to a business performance management model in a business performance management system. The term business performance management refers to the measurement and management of the performance of an organization.

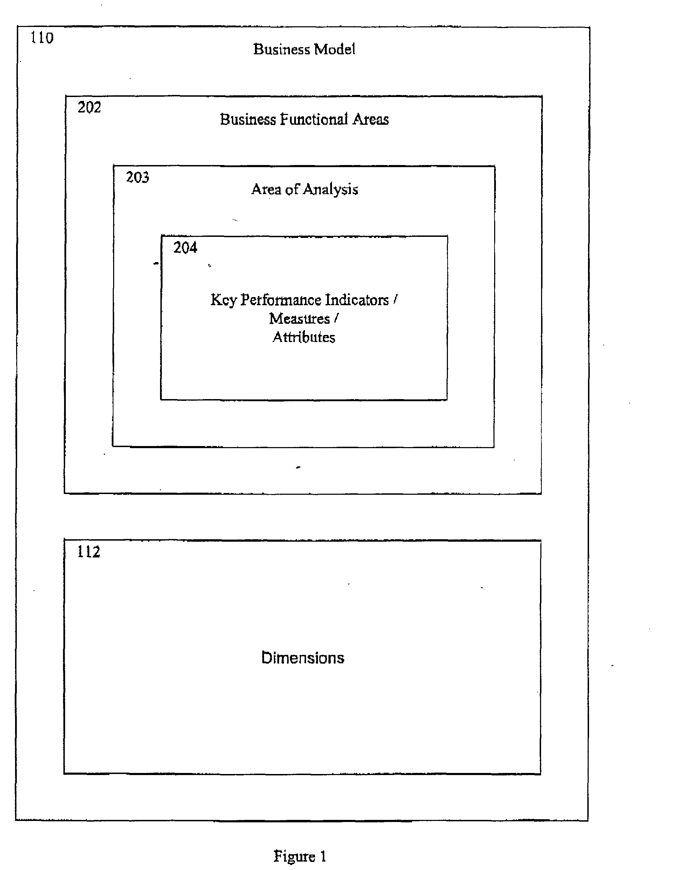

Referring to Figure 1, a business model 110 will be described. The business model 110 is based on comprehensive information about the business questions that users in functional areas of an organization face, including hundreds of function-specific questions common to business people in many industries. In other words, someone who manages a sales force for a pharmaceutical company will face many of the same business challenges as someone who manages a sales force at a textile company or a semiconductor company. These questions can also be the basis of business measures, dimensions, and attributes. Business rules that govern how to derive measures such as "net profit margin" or "inventory balances", i.e., measures that do not appear in ERP systems and should be created, are also established in the business model 110.

Based on how companies manage their workflows within each functional area, the business questions can be categorized as strategic, tactical, or operational. Information needs associated with each category are reflected in the business model 110. For example: What level of data granularity do users require? How much history do they need? Five years? Three years? How often do they need to refresh data? Do they have to know what happened yesterday to answer a given business question or can they wait until the end of the week?

The structure of the business model 110 is presented in Figure 1. The business model 110 is made up of multiple business functional areas 202 (e.g., sales, accounts receivable (AR), general ledger (GL), accounts payable (AP), procurement, inventory, e-commerce, etc.) and a set of dimensions 112 reflecting the business model 110 manifestation of a dimensional framework. As has been stated above, the data warehouse system 100 may assist in the management of the performance of many types of organizations, including, but not limited to, not-for-profit organizations, for-profit businesses, charities, governmental organizations, etc. Thus, the business functional areas 202 include functional areas of organizations that are not necessarily commercial enterprises.

For the purpose of data warehouse analysis, each business functional area (or functional area) 202 is divided into areas of analysis 203. In an embodiment of the invention, there are over 30 areas of analysis. The content 204 of an area of analysis 203 includes the KPIs, measures and attributes that are used to support the business analysis that can be performed. The functional areas 202, the areas of analysis 203 and the KPIs, measures, dimensions and attributes 204 may be arranged as shown in Figure 1.

Analytical functions may be added to the set of dimensions 112 to provide the business performance management offered in a data warehouse system.

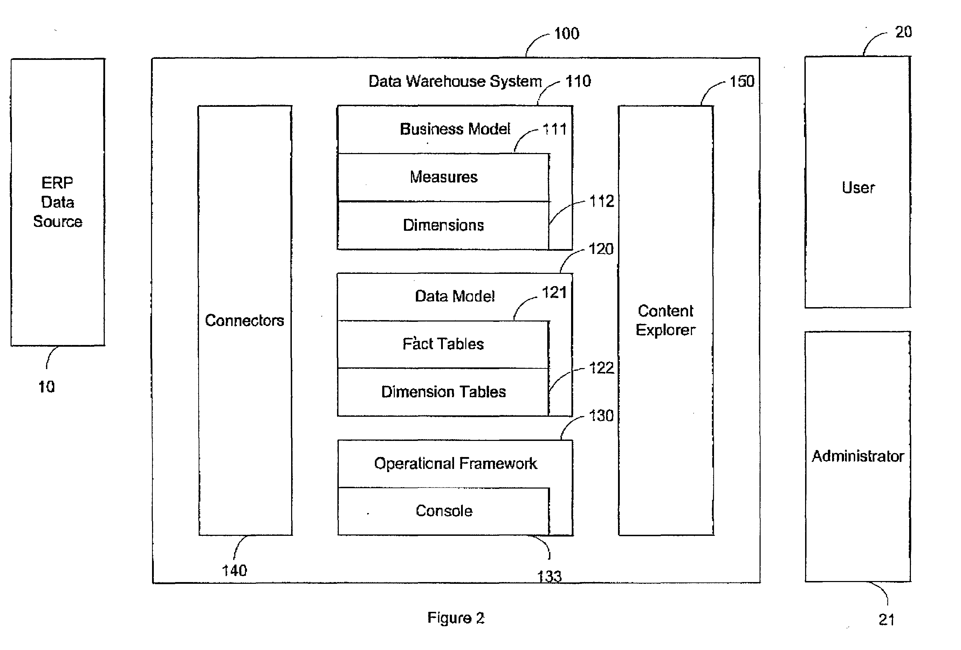

Referring to Figure 2, a configurable data warehouse is described. Figure 2 shows a data warehouse environment including an enterprise resource planner (ERP) data source 10, a user 20, an administrator 21, and a configurable data warehouse system 100. The user 20 refers to the role of accessing the data warehouse system. The administrator 21 refers to the role of administering the data warehouse system. These roles may be performed by the same person.

The configurable data warehouse system 100 includes a business model 110, a data model 120, an operational framework 130, connectors 140 and a content explorer 150. The business model 110 includes measures 111 and dimensions 112. The data model 120 includes fact tables 121 and dimension tables 122. The operational framework 130 includes a console 133.

The configurable data warehouse system 100 is a system for measuring the performance of an organization. The data warehouse system 100 may be applicable to various organizations and is not limited to only one organization. The data warehouse system 100 is configurable to a specific organization. Preferably, the configuration occurs after the installation of the system software and before the operation of the system software. Re-configuration may occur at any time thereafter.

The business model 110 includes the set of analytics and paths used to measure the performance of an organization. The business model 110 contains measures 111 which map the business questions to which users 20 of a data warehouse may want answers. The measures 111 represent measurements of business activity aspects of an organization. For example, a business activity may be a sales order. A measure 111 for a sales order may be sales order volume. Another example of a measure 111 is inventory amounts. In this example, inventory is the business activity measured.

Numerous business questions for numerous businesses are categorized into different areas of analysis. The set of measures 111 in the business model 110 represents a union of measures used to perform analysis for different organizations. Preferably, this union of measures comprises the minimum set of measures 111 needed to perform the desired analysis for all of the different organizations to which the business model 110 applies. I.e., although not all organizations may requires each measure 111 available in the business model 110, the measures 111 they do require will be available. The business model 110 also includes a set of dimensions 112 which represent the structure of an organization from an informational or dimensional viewpoint. I.e., the dimensions represent the business reference aspects of an organization. An example of a dimension is the class of customers of an organization. Further examples of dimensions and measures are provided below.

By using the data warehouse system 100 according to the embodiment of the present invention, users may answer in-depth questions such as: "Which customers in the western sales region have increased their purchases by more than 30 percent in the past three years?" or "How much revenue did we generate from international sales of Product X last November?" These types of complex queries, involving time, geography, product lines, revenues, and other business variables, require that multiple dimensions and levels of detail be examined. The data warehouse system 100 allows users to make connections between these cross-functional variables, connections that will provide insight into what is driving the business.

The business model 110 is based on comprehensive information about the business questions that users 20 in functional areas face, including hundreds of function-specific questions common to business people in many industries. In other words, someone who manages a sales force for a pharmaceutical company will face many of the same business challenges as someone who manages a sales force at a textile company or a semiconductor company. These questions can also be the basis of the business measures, dimensions, and attributes. Business rules that govern how to derive measures such as "net profit margin" or "inventory balances", i.e., measures that do not appear in ERP systems 10 and should be created, are also established in the business model 110.

Based on how companies manage their workflows within each functional area, the business questions can be categorized as strategic, tactical, or operational. Information needs associated with each category are reflected in the business model 110. For example: What level of data granularity do users require? How much history do they need? Five years? Three years? How often do they need to refresh data? Do they have to know what happened yesterday to answer a given business question or can they wait until the end of the week?

The business model 110 is implemented in the data model 120. The data model 120 is organized to facilitate the analysis performed at the business model 110 level. The data model 120 contains fact tables which contain the measures used to measure the performance of an organization. The data model 120 also includes a set of dimension tables 122 which represents the structure of an organization from a dimensional viewpoint. Another example of a dimension is the class of employees of an organization.

Raw data information is collected from the organization ERP 10 and passed into the data model 120 through the connectors 140. One way to build the connectors 140 is through an extraction, transformation and loading (ETL) tool. The data warehouse system 100 is operated by an administrator 21 through the console 133 of the operational framework 130. The operational framework 130 is also used to configure the data warehouse system 100. Finally, the content explorer 150 contains a set of reports used by the user 20 to review the analysis performed by the data warehouse system 100.

As has been stated above, the data warehouse system 100 is designed to work for many different types of organizations and is configurable to a specific organization. Preferably, the configuration of the data warehouse system 100 occurs after the installation of the system software and before the operation of the system software. Configurability of the data warehouse system 100 is achieved by providing placeholders or parameters in various components of the system such that these placeholders or parameters are set during the configuration of the system software.

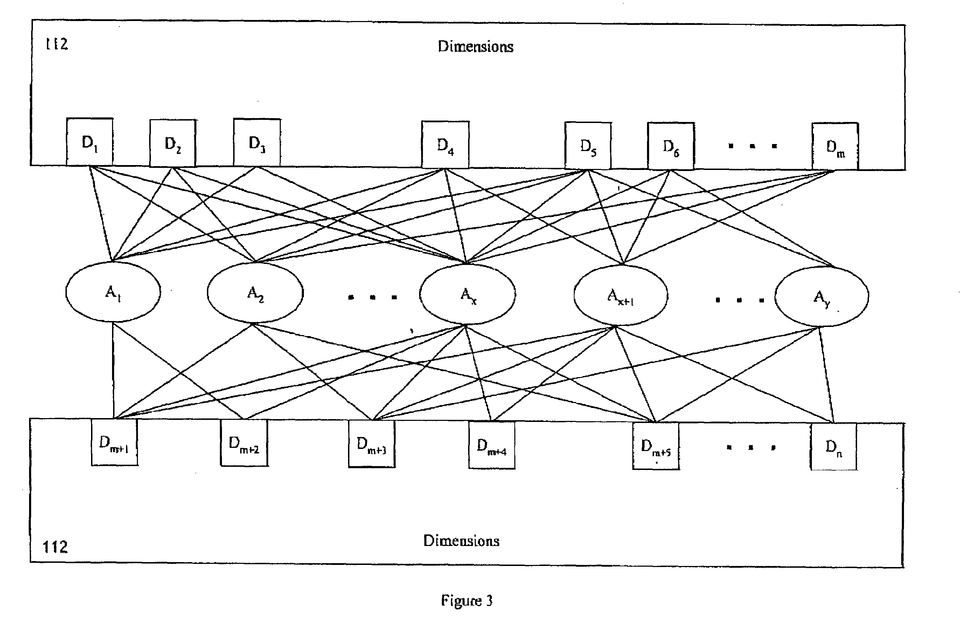

Referring to Figure 3, a business model 110 rich and complete enough to be applicable to many organizations is described. The business model 110 comprises a set of functional areas 202, a set of dimensions 112, and relation indicators 390 showing a relationship between the dimensions and the functional areas of analysis. A functional area 202 contains measure 111 and may use many dimensions 112. The individual dimensions are labeled $D_1$ to $D_n$. The notations m and n refer to integers where m is greater than 0, and n is greater than m. Thus, in this abstract representation of a business model 100 rich and complete enough to be used by many organizations, there are n dimensions. Similarly, the functional areas 202 are labeled $A_1$ to Ay. The notations x and y refer to integers where x is greater than 0, and y is greater than x. Thus, in this business model 100, there are y functional areas 202.

Not all dimensions 112 or areas of analysis 203 will necessarily be used by all organizations to which this model applies. However, all dimensions and areas of analysis are available for the organizations. Most organizations will use most of the dimensions 112. As has been stated above, the dimensions 112 are used by the measures 111 and areas of analysis 203. The differences between organizations may be reflected in the areas of analysis 203 selected by the organizations. These areas of analysis 203 may then use the appropriate dimensions 112 to answer business questions of the organization. An organization may use all of the dimensions 112 and/or all of the measures 111.

The abstract business model 110 in Figure 3 shows how it is possible for one model to encompass all the dimensions 112 and functional areas 202 necessary for a group of organizations. The more dimensions 112 and the more functional areas 202 added to the model, richer and more complete the model will be, so as to allow for other organizations to use it. Having one business model 110 which is rich and complete enough to be used by multiple organizations is advantageous because the business model 110 only need to be built once and then configured to a particular organization.

Methodology for creating the Data Warehouse System

Creating and implementing a successful traditional integrated data warehouse involves a lengthy series of complex steps and activities, and requires expertise in numerous highly specialized areas. Despite the substantial hurdles, some information technology (IT) departments elect to build data warehouses themselves. It is not unusual for these projects to end up over budget, miss major milestones, or even fail due to the unanticipated complexity of extracting, transforming, and loading the right data.

The data warehouse system 100 offers an integrated analytic solution, rich and complete enough for multiple organizations to use it, that allows IT departments to provide users with high quality cross-functional business performance management in a short time, freeing up specialized IT resources for immediate impact. The data warehouse system 100 puts robust decision-making solutions in the hands of users quickly and cost-effectively.

A data warehouse system 100 rich and complete enough to be used by multiple organizations may save users a complete business cycle in deploying and extending their integrated data warehouse solution. A complete business cycle can be spent on establishing end-user needs, data mart design, source system analysis, data mart creation, target system and configuration environment, data mart operation, and business analysis and report. The data warehouse system 100 (including the initial load, user acceptance, and implementation) requires considerably less time to install than conventional solutions creating an integrated data warehouse from scratch.

The development of an effective data warehouse system 100 includes several key components, such as:

- Business decision maker requirements (both functional and cross-functional) defining the type of analysis required based on best practices
- A technical design which ensures consolidated data from across the organization (i.e., ERPs and other data sources), delivering consistent and reliable results
- A strategic architecture which allows for incremental implementation business performance management by functional area
- Enterprise Business Intelligence (EBI) designed to deliver rich analysis and reporting, with the functionality to share information across the organization, as well as across corporate intranets and extranets with key business partners

The data warehouse system 100 may be viewed as a series of business analytical solutions designed to deliver key information to an organization's core business functions, including sales, accounts receivable (AR), general ledger (GL), accounts payable (AP), inventory management and procurement. While each application includes rich functional analysis, applications can be used together to join other operational data from across the demand and supply sides of the organization for a coordinated enterprise view of performance.

Each data warehouse system 100 business analytical solution may be built on three pillars:

- Rich business content with predefined BI reports based on best practices as defined through research with industry experts
- Robust technical architecture, ERP source analysis, installation wizards, and production system management
- Conforming design allowing for the combination of multiple applications based on common dimensions (e.g., customers, products, vendors)

The data warehouse system 100 brings together the components used to deliver the important business analysis required for effective decision making. This includes source ERP system analysis, data extraction and transformation, best practices, data architecture and EBI.

Before attempting to build an integrated data warehouse, IT departments should fully assess the obstacles and risks involved. An integrated data warehouse project uses a diverse array of skills and experience. The following six skill-sets are important to a successful implementation.

1. Business Requirements Analyst:

Acts as liaison between the data warehouse project team and the warehouse's end users. This person identifies and documents the needs of the business and produces a plan for addressing these needs using the data warehouse. The Business Requirements Analyst should have excellent communications skills and an ability to assess business information needs.

2. Subject Matter Experts:

Typically end users who are familiar with the information and business needs of the internal groups or areas that they represent and who have significant knowledge of the data. These people help standardize on different aspects related to the data and work to resolve issues across business areas.

3. Source Systems Experts:

Identifies source fields based on the requirements specified for the warehouse. Also identifies the source hurdles that will need to be overcome in order to implement.

4. Data Architect:

The Data Architect develops and maintains the logical and physical data models of the warehouse, and is able to identify the most valuable data, integrate it, and develop the correlating data model. Also responsible for recommending the optimal system of record, the Data Architect should ensure the company's business needs are incorporated into a technical solution.

5. Data Acquisition Developer and Architect:

Responsible for extracting data from a source system, performing associated transformations, and making the data available for loading into the data warehouse. The Data Acquisition Developer and Architect should understand extraction and transformation, identify transformations, and define source-to-target mappings.

6. Business Intelligence (BI) Developer:

Develops solutions that allow end users to easily and consistently access the data warehouse. The BI Developer should understand the business needs, be able to incorporate these into technical solutions, and be skilled in end-user access, reporting, and analysis tools.

Assembling the necessary skills and expertise is the first step of many involved in the process of successfully developing an integrated data warehouse. Building an integrated data warehouse includes the following process.

1. Establishing End-User Needs

- Business requirements analysis

2. Data Mart Design

- Logical data model
- Physical data model

3. Source System Analysis

- Source system analysis and mappings

4. Data Mart Creation

- Data acquisition process design
- Data acquisition construction

5. Target System and Configuration Environment

- Technical architecture design

6. Data Mart Operation

- Maintenance and administration

7. Business Performance Management (which includes Business Analysis and Reporting) (Business Intelligence) and other features described herein

- Data access design
- Data access construction

Establishing end user needs through assessing business requirements may take up to 50% of the entire effort of building a warehouse.

An IT department should know its users' business requirements. How will people use information? What questions do they need answered? Do they want high-level views or transaction details? Will they use this information in their offices or on the road? By exploring users' business requirements, and fully understanding how the departments of the enterprise interact, a user will be ready to create the appropriate metrics and business rules an effective analysis and reporting solution requires. Including the content in the warehouse that effectively supports business goals is a key to achieving maximum return on investment.

Designing data marts involves turning the business needs that have been identified into useful data. The process involves designing the data mart logical data model and the subsequent physical data model. Many questions should be answered at this stage: Which end users should be involved during the design sessions? Do data sources exist for some or all of the intended data? Have they chosen an ETL tool? Will the initial design include metadata? If so, will it comprise technical metadata, business metadata, or both?

Once these questions are addressed, to optimize the solution for business performance management, a high-speed star schema data marts that logically arrange data and allows for cross-functional views of business operations should be designed. Simply put, the star schema data marts, based on relational data, use shared, conformed dimensions to achieve a unified view of traditional processes. In effect, a sales data mart would define "Product X" the same way that the inventory data mart does. These marts should also be scalable and contain embedded knowledge of the business performance management applications they will serve.

The next step, source system analysis, should be undertaken by someone who is familiar with the user's ERP, e-commerce, and other source systems as well as any modifications that they have made to them. This expertise is used to identify which data to extract and how to extract it.

The source system expert should understand the unique parameters, fields, hierarchies, and technical approaches that characterize each ERP solution. Many organizations outsource the initial design of their ERP and e-commerce systems to consultants who take their source expertise with them once the contract is completed. This, coupled with the high rate of movement of in-house IT resources leaves companies with a knowledge gap regarding these complex source systems. The solution is typically to retain consulting expertise, which can become prohibitively costly and, depending on a consultant's availability, even delay the solution delivery date.

Once one knows where to look for data in the source systems, their next step is to develop source to target mappings and ensure that they extract, transform, and load ERP and other data into their data marts. Poor source data quality, missing source data, and redundant source data, among other challenges, can complicate this process.

Ultimately, the ETL system should flag errors during the ETL process, minimize computing resources, maximize automation, and incorporate best warehousing practices such as slowly changing dimensions, history preservation, and changed-data capture. Delivering these capabilities will ensure that the process runs as smoothly as possible and that the data generated is accurate.

One should also know how to incrementally add data marts. For instance, if a user adds an inventory mart to their existing sales and finance marts, the user should be careful to avoid creating data definition conflicts between the marts. Synchronization and coordination are key because problems at this stage can sabotage data integrity.

The target system and configuration environment need to be checked. For example, is one using an NT application server to run an ETL code and populating an Oracle database on a Unix platform? Or are they running their ETL code on Unix and populating a Microsoft SQL server on NT? Depending on the platform and database, one will have to vary the way that they install and configure their solution.

Tasks associated with operating, managing, and maintaining the integrated data warehouse include loading data marts from operational systems, troubleshooting the system, restarting failed jobs, and scheduling jobs so that they minimize impact on source systems. Building an integrated data warehouse from scratch requires substantial IT expertise, not to mention substantial time and money.

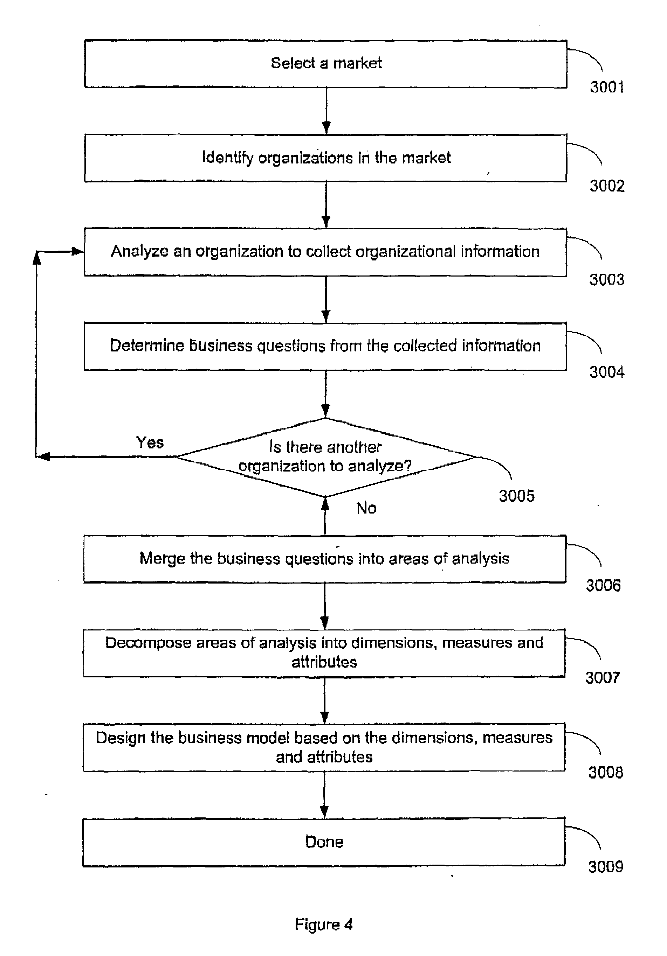

A preferred methodology 3000 for creating a business model 110 in accordance with the present invention is described referring to Figure 4. The first step involves selecting a market (3001). In this market, organizations to which the business model 110 will apply are identified (3002). An identified organization in the market is analyzed to collect organizational information (3003). Then business questions are determined based on the collected organizational information (3004). This collection of organizational information and determination of business questions is performed for each identified organization in the selected market (3005). The business questions of the organizations in the selected market are then merged into areas of analysis (3006). The areas of analysis are then decomposed into dimensions, measures and attributes to help answer the business questions (3007). The business model may now be designed based on the dimensions, measures and attributes (3008).

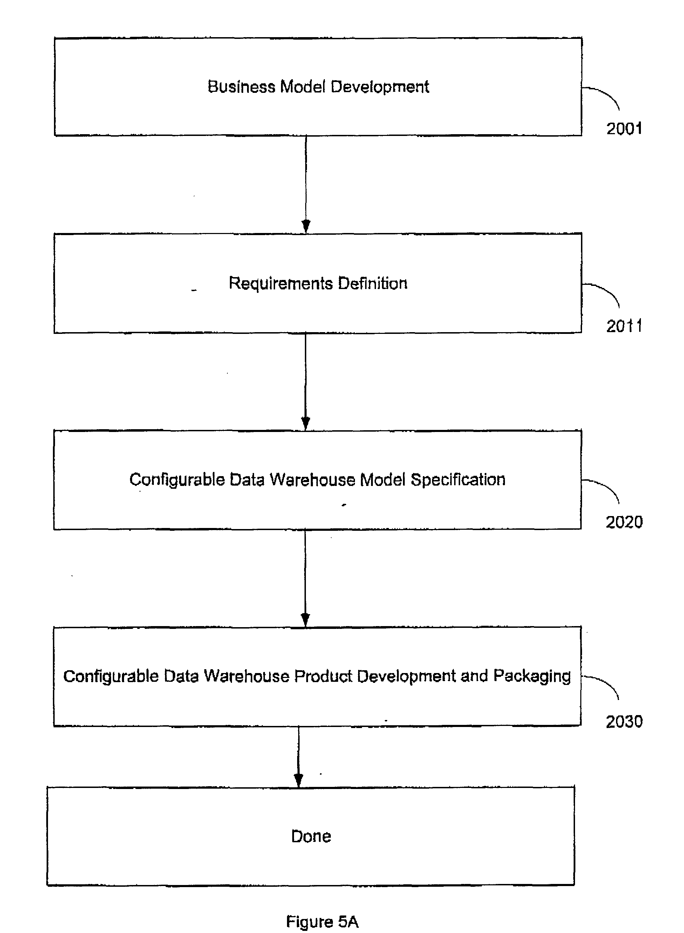

A preferred methodology 2000 for creating a data warehouse system 100 in accordance with the present invention is described referring to Figures 5a to 5e. There are four main steps in this methodology: business model development (2001), requirements definition (2011), configurable data warehouse model specification (2020), and configurable data warehouse product development and packaging (2030).

The first two main steps (2001) and (2011) create the business model 110. The first main step is to develop an organizational model (2001). The second main step is to define requirements of an organization (2011). In the development of an organizational model (2001), many organizations in a selected market are analysed to determine their requirement in a business model 110. In the requirements definition (2011), the requirements determined in the first main step (2001) are defined into components of a business model 110, i.e., dimensions 112 and areas of analysis 111.

The first main step establishes the correct framework for analyzing, grouping and managing business performance measurements. This framework is responsive to a "horizontal" view of the industries of interest. The first step in developing an organizational model is to select a market (2002). The selected market will help to define the set of characteristics that will determine the types of organizations to which the business model 110 will apply, i.e., define the target sectors and industries. The next step is to identify development partners who are representative of aspects of the selected market (2003). Development partners include end user companies, industry experts, and related professional associations and/or organizations.

The next step is to investigate the key business drivers of the selected market (2004). This step may be broken down into investigating the corporate imperatives and investigating best business practices of organizations in the selected market. Identifying the key business drivers and best business practices defines the highest level of the "metric" framework. This process provides focus and scope to the set of measures that are necessary to the successful data warehouse system solution.

The next step is to identify the "big" questions (i.e., business questions) that should be answered to manage the business performance of organizations in the selected market (2007). This establishes the high level "areas of analysis" within the business model 110. An area of analysis 203 can represent the set of metrics required to answer one or more business questions.

The next step is to define an organizational model that represents the typical business functions of the organizations in the selected market (2008). This step may involve defining the main functions as well as the main business functions of the organizations. This step combines all the findings of the previous steps into a business model 110 that represents the core functional areas 202 typical to a company within the target market industries and sectors.

As has been stated above, once the requirements of the organizations in the selected market have been determined (2001), the requirements may be defined into components of a business model 110. Each functional area of the organizations, determined in the organizational model development (2001) should be developed into a data warehouse system 100 application. The first step in the requirements definition is to select a functional area to develop into a data warehouse system 100 application (2012). The business process of the selected area may be divided into activities and tasks (2013). The decomposition of the functional area 202 is used to understand the workflow, business process and roles that are to be measured and managed in a data warehouse system 100. Then key roles involved in the data warehouse system 100 application should be identified (2014). Next, a list of business questions to be answered during business performance management may be developed (2015). Steps (2012) to (2015) are repeated for each functional area determined in the first main step (2001). The set of business questions represents the questions that should be answered to determine if the objectives and goals of performance (typically established in the corporate imperatives) are being met. Each question should be stated according to a standard specification. A question should contain one and only one metric, and may contain one or more dimensions, and attributes.

The business questions determined in step (2015) may now be grouped into areas of analysis 111 (2016). The business questions (often hundreds) are grouped into their related area of analysis 203. The areas of analysis 203 were defined during the creation of the business model 110. Grouping business questions this way can be used to verify the business model 110 and establish the corresponding data model 120 parameters. The business questions may also be decomposed into measures, dimensions and attributes (2017) and documented as business requirements (2018). Finally, functional requirements which define how the questions are to be answered may be documented (2019). Documenting the functional requirements includes the identification of configuration options necessary to support multiple organizations.

Referring back to Figure 3, the functional areas determined in step (2001) are denoted as $A_1$ to $A_y$. The dimensions determined in step (2017) are denoted as $D_1$ to Dn. Multiple areas of analysis determined in step (2016) are included in the functional areas $A_1$ to $A_y$. Multiple measures and attributes determined in step (2017) are also included in the functional areas $A_1$ to $A_y$. The connecting lines 390 show which dimensions 112 are used with each functional area 111 to answer the business questions determined in step (2015). Finally, the boxes outlining the different organizations show which dimensions are functional areas are needed by a particular organization.

The creation of the business model 110 was the first two steps in the methodology of the development of the data warehouse system 100. Once the business model 110 has been created, a data model 120 may be created to implement the business model 110. Moreover, the data model 120 may be configurable and joined to a data warehouse system 100.

The third main step in the development of a data warehouse system 100 is to create a configurable data warehouse model specification (2020). In this main step, a data warehouse model specification is designed (2021) to answer the business questions determined in step (2015). A high level functional specification may also be designed to show how these business questions are to be answered (2022). The next step is to analyze selected source systems 10 to determine how and what to extract to meet the defined requirements (2023) for: business concepts, business processes, data entities, and data life cycle information. The source system analysis step is used to identify the configuration options used to support the possible implementation specific variations of multiple organizations. Then source system 10 specific variations should be identified for each source system 10 (2028). Finally, implementation specific various should be identified within each source system 10 (2029).

The last main step in the development of a data warehouse system 100 takes all the information and analysis performed thus far and develops a product. This last main step involves the configurable data warehouse product development and packaging (2030). This first step in this last main step is to design the configurable version of the data model 120 and connectors 140 (i.e., ETL code) (2031). This involves designing the configurable target elements (i.e., the fact tables 121 and dimension tables 122) and designing the configurable extraction code used by the ETL. Next, the configurable aspects of the solution are implemented in the configuration unit 135 (2034). Finally, the complete solution may be packaged as a product (2035). This last step results in the specification for the configuration unit 135 which enables the selection of the various configure options in the data model 120 and the connectors 140.

Example of a Business Model 110

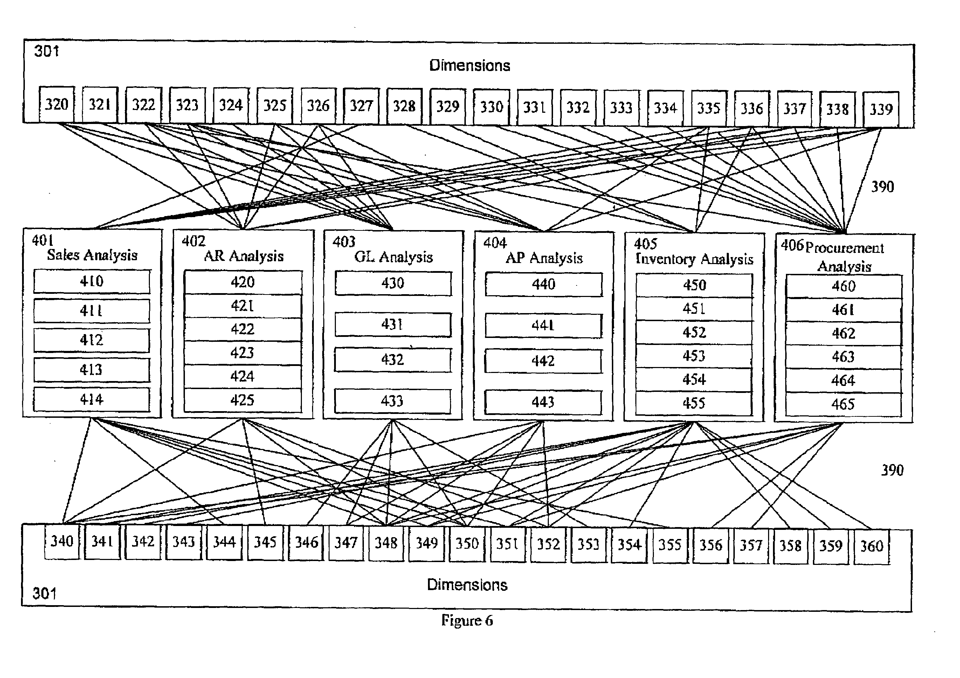

Figure 6 shows an example of a business model 110. This business model 110 includes a set of dimensions 112 and six functional areas 202 including sales analysis 401, AR analysis 402, GL analysis 403, AP analysis 404, inventory analysis 405 and procurement analysis 406. The functional areas 202 are comprised of areas of analysis 203. The areas of analysis 203 are comprised of measures.

In one example of an embodiment of the present invention, the set of dimensions 112 includes 39 dimensions, as shown in Figure 6: company consolidation 320, profit center 321, cost center 322, business area 323, GL budget version 324, chart of accounts 325, accounting document class 326, sales document class 327, movement document 328, material movement class 329, quotation activity document 331, purchase order activity document 332, requisition activity document 333, contract activity document 334, procurement document class 335, vendor 336, material 337, customer 338, employee 339, organization 340, plant 341, material storage 342, storage bin 343, shipping point 344, AR activity document 345, GL activity document 346, AP activity document 347, all time (time, fiscal) 348, unit of measure 349, financial currency conversion 350, unit of measure conversion 351, user category 352, flexi-dimension 353, forecast version 354, sales status 355, procurement status 356, release strategy 357, valuation 358, batch 359, and stock class 360. Dimensions may be added or removed from this set of dimensions.

Sales Analysis

The area of analysis 203 of the sales analysis 401 functional area helps analyze raw sales data. Companies may select from a host of key performance metrics and decision-ready reports that enable them to analyze forecast accuracy and pipeline volume, profile leads, calculate average deal size, and examine revenues and profitability. With the sales analysis 401 functional area, companies may:

- Evaluate discount practices, target customers who generate the highest margins, and spot clients who cost the most;
- Know about prospects, customers, and product performance; and
- Identify opportunities, increase revenues, minimize costs, and shorten the sales cycle.

The sales analysis 401 functional area provides information used for key analysis and decision making at various management levels within a company's sales and marketing organizations. A key objective of the sales and marketing functions is to plan, execute, manage, and monitor strategies and plans (ex. sales strategies, campaigns, and product strategies and management) that are in alignment with the corporate mission and will ultimately return the greatest value to its stakeholders. This involves an understanding of how effective an organization has been in generating revenue, as well as who and what have contributed to this performance.

This aspect of the sales analysis 401 functional area delivers analysis which provides insight including:

- Sales process analysis including sales order processing, distribution/order fulfillment, to customer billing contribution of the sales organization (regions, offices, sales force) to overall revenue and profit margin product line performance analysis and trends; and

  - Profiling of customer segments and individuals: assessing buying trends, customer satisfaction in product quality and reliability.

In their efforts to achieve these objectives, managers within the sales and marketing functions should have a keen understanding of "how things are going." This begins with an analysis of the information being captured in the sales process. Managers should have answers to questions on:

- How the organization and its parts are contributing to overall revenue and profit margin;
- How product lines are performing;
- Who are their most valuable customers, what are their buying trends, and how effective are they satisfying customer expectations for quality and reliability; and
- How efficient the sales process is in generating revenue.

The sales analysis 401 functional area delivers information used to answer these questions, with the depth and breadth to meet the needs of managers at various levels of the organization, including:

- High-level executive and senior managers who conduct strategic analysis on how marketing and sales strategies have impacted cross-organizational performance, monitors changes overtime and helps in identifying trends;
- Sales, product and marketing managers who require tactical reporting and analysis targeted at understanding the effectiveness of plans designed to meet corporate objectives; and
- Managers responsible for operational reporting (i.e., sales representative customer base buying profile) and process effectiveness.

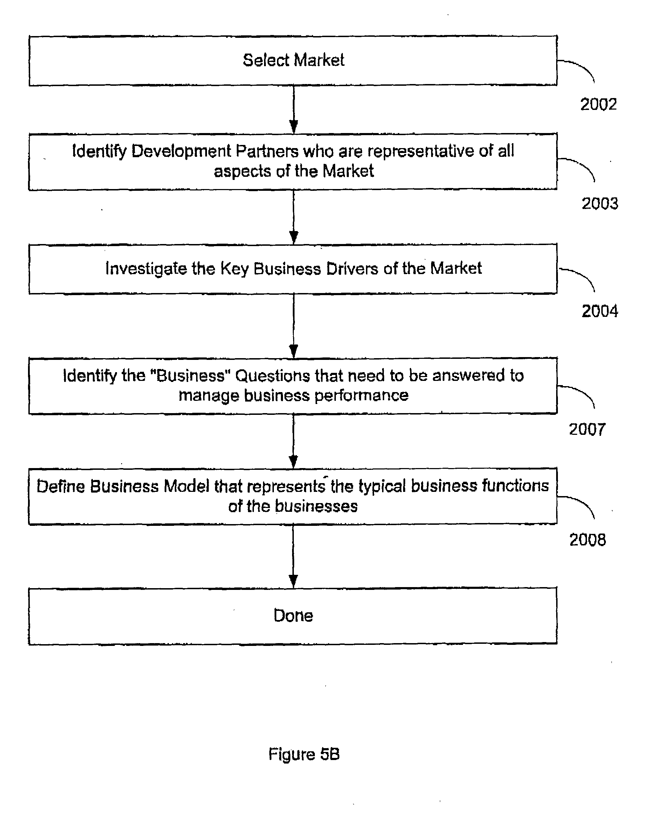

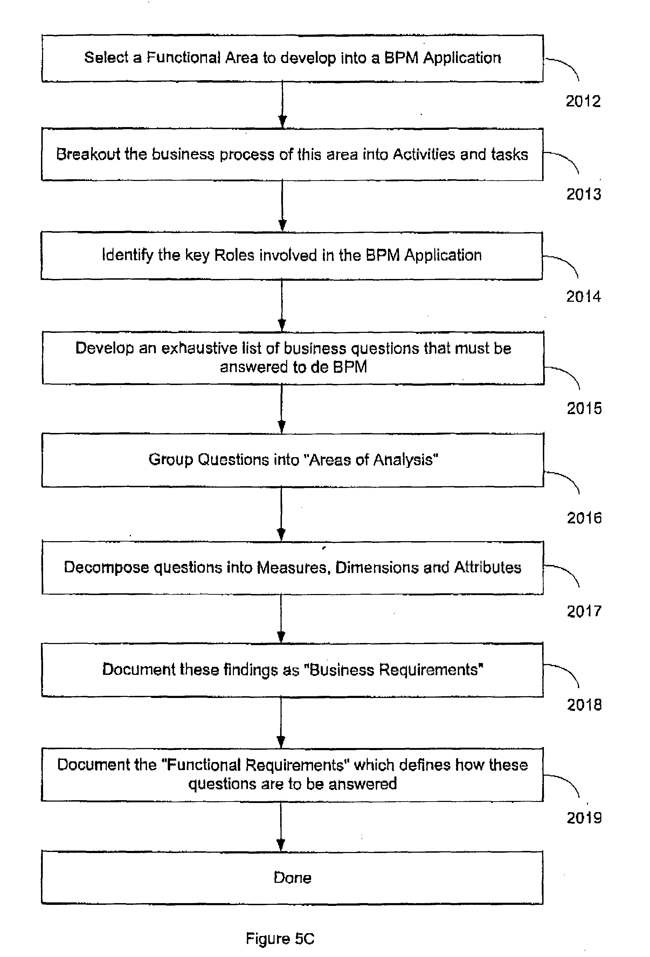

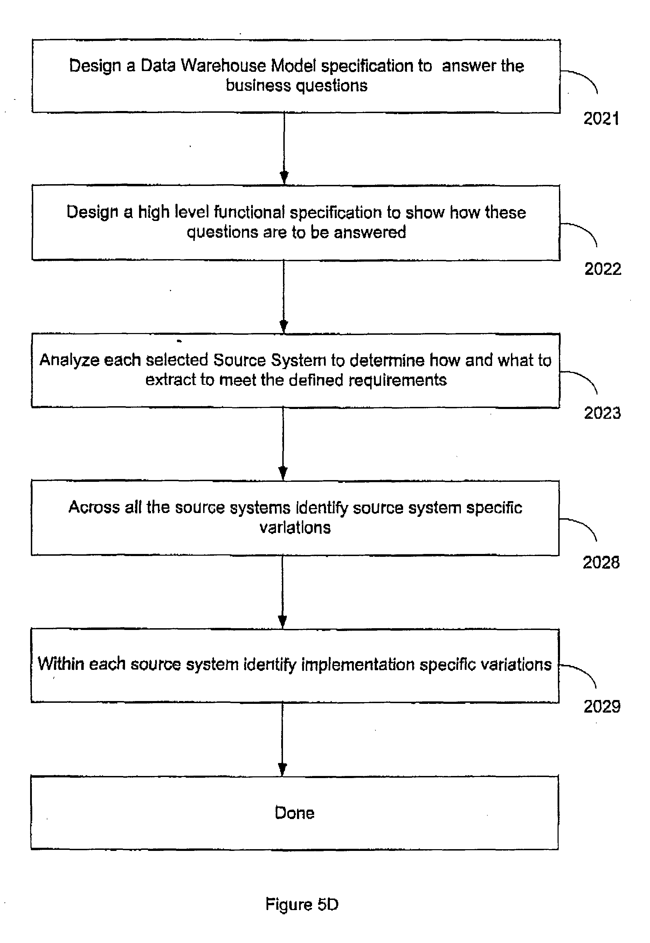

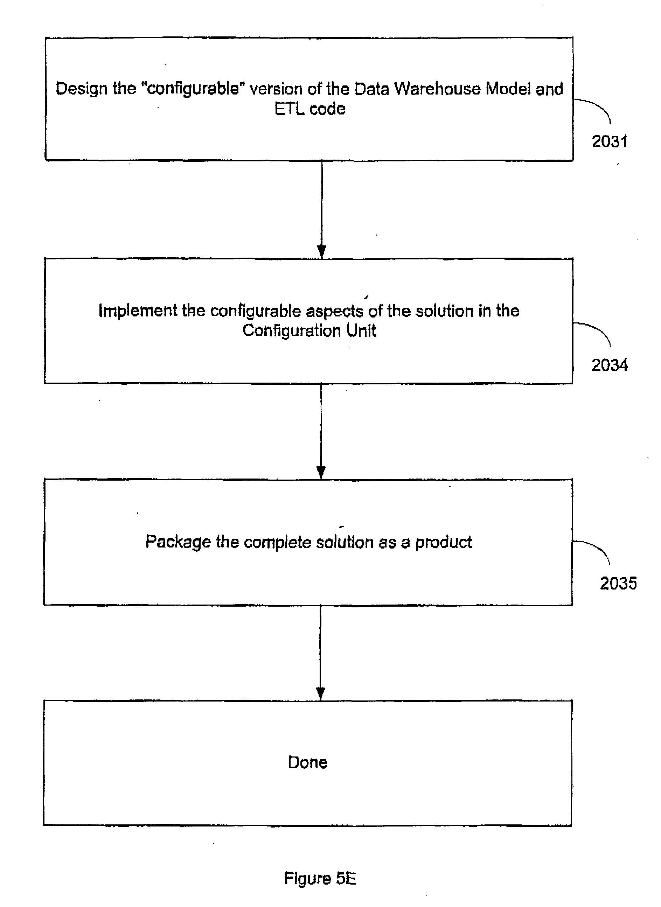

The sales analysis 401 functional area addresses areas of analysis within an organization's sales and marketing functions, aimed at assessing the effectiveness of the sales cycle from the sales order forward. Figure 5 shows an example of sales analysis 401 functional area details.

The sales analysis 401 functional area is linked with the dimensions 112 for the purpose of reporting and analysis. The sales analysis 401 uses the sales document class 327, material 337, customer 337, employee 338, organization 340, shipping point 344, all time (time, fiscal) 348, unit of measure 349, unit of measure conversion 351, and sales status 355 dimensions. The relationship between functional areas and dimensions are shown in Figure 6 by way of connecting lines 390.

The areas of analysis 203 of the sales analysis 401 functional area may include the following: sales functional performance analysis 410, customer sales analysis 411, product sales analysis 412, sales organizational effectiveness analysis 413, and shipping performance analysis 414. Other areas of analysis may be added, such as e-commerce analysis. In this example, this functional area relates to 100 business questions, 80 KPIs, 11 dimensions, and 43 reports.

A measure of corporate effectiveness in marketing its products and services is the question of "How much have we sold?" Managers across the organization should know how revenue, volume and margin expectations are being met. They should know what parts of the organization are delivering on expectations, and how various regions are performing. These requirements filter down to the sales office and sales representative needing to know how they are doing, and how their performance is meeting expectations today and over time.

The sales analysis 401 functional area delivers information for in-depth analysis of sales revenues (orders and invoiced), volumes and margin across the sales organization, addressing such questions as:

- How much has the company sold this period - revenue and volume? How does it compare to last period? What is the percent increase or decrease? What has been the trend over time?
- What regions have done well for us? Where are we losing ground? Are our high revenue regions delivering on margin? Are we seeing the percent growth necessary?
- How have the various sales organizations, channels or divisions contributed to our performance? Which are most effective? Who is meeting revenue and margin expectations, and who is not?
- How have corporate sales offices contributed this year? How do they rank?
- Who are the sales reps that are performing within their sales offices - and who is not? How do reps rank on revenue, volume, and margin? How has their contribution changed over time?

The sales functional performance analysis 410 assists with the following functions:

- Revenue, volume, and margin analysis and trending;
- Analysis of regional sales performance

  - contribution to overall performance by revenue and product line;

- Comparative evaluation and monitoring of revenues, volume, contribution to profit margin performance across sales organization, distribution channels, divisions; and
- Evaluate contribution and ranking across sales offices, sales representatives.

Sample sales functional performance analysis 410 KPIs include:

- Total units sold (% change);
- Total revenue of units sold (% change);
- Average order value; and
- Profit margin per order.

Organizations should have a clear understanding of who their customer base is, what they want, and how their needs are being met. The effectiveness of corporate sales and marketing strategies, coupled with quality of product and service, should translate into greater "share of customer"; which can be measured by changes in the breadth of product purchased, the volume of products purchase, and changes in contribution to revenue and margin over time.

The sales analysis 401 functional area allows for analysis of customer trends and contribution, changes in buying patterns, and corporate performance and key satisfaction measures. Examples of the types of questions that can be addressed include:

- How large is the customer base? How has this changed over time?
- What is the average revenue per customer? Which customer groups offer the highest total and average revenue contribution? Which groups are contributing most to volume? Most to margin? How do customer groups/segments rank in contribution to overall revenue?

- Have the average purchases per customer been increasing or decreasing over time? Have the number of products being purchased increased or decreased over time?
- Have revenues from a specific customer group been increasing over time - is this an indication of trend - an opportunity? Have the revenues for these groups decreased - and if so is it a product offering or satisfaction issue?
- As a sales office, what has been the contribution of the customer base to our objectives? Who are our high versus low margin customers? Has this been changing over time? What have they been buying, how much and how often?
- As a sales representative, how has my customer base's profile changed over time? What are they buying from me - how much and how often?

Customer satisfaction questions include:

- What has been the return pattern of our customer base? Are there return levels outside exception levels? Are these high returns specific to a customer group a specific customer? Are the returns specific to a region or sales office?
- Have we been shipping on time - as promised? How has this level of performance changed over time? Have late deliveries been to specific regions? What have our shipping patterns been within specific customer groups or customers?

The customer sales analysis 411 assists with the following functions:

- Customer segment and individual customer profiling: monitor trends in customer base size, revenue as percent of total, product mix, customer ranking;
- Comparative analysis of customer groups: buying trends, contribution to revenues, product line sales, profitability;
- Sales rep view of buying patterns: average order sizes, number of purchases in a Period; and
- Measure customer satisfaction: product return and credit memo, on-time delivery.

Sample customer sales analysis 411 KPIs include:

- Total units sold (% change): average units sold, by customer/group;
- Count of materials (list) by customer; and
- Customer contribution to profit $.

Knowing customers and what they want opens a window to view the effectiveness of the corporate product offering. A key component to developing market strategies and product planning is an understanding of the markets segments, how the current product offering addresses the customer requirements, and how this has evolved over time. Sales management and their teams should also have analysis that allows them to assess the effectiveness of their operations and how products are contributing to achieving their goals within their markets.

The sales analysis 401 functional area delivers product analysis to answer the questions of both the sales and marketing functions, which include:

- What product lines or specific products are we selling? How much revenue are they generating? How have these lines contributed to overall margin? How have these products performed to the previous period? and over time? What has been the rate of change? Which products are emerging as leaders? Which products are experiencing declining share?
- Where have the products been selling? Which regions? Which customer groups? Rank the leading customer segments for these products.
- Who has been selling these products? Which sales offices have performed in specific product lines? Which representatives have championed sales in their regions?
- What products has the sales office been selling? What level of revenues or contributions has the company generated from specific product lines or products? What volumes have the company moved this period? How does it compare to the previous period?
- As a sales representative, what have I been selling? How has my product mix impacted my potential contribution to revenues and margins? Am I meeting my volume targets? How has my performance change over time?

The product sales analysis 412 assists with the following functions:

- Comparative analysis across products and product lines: volume sales and contribution to revenue and margins, product ranking;

- Analyze and rank regions and customer segments contribution to product sales; and
- Monitor sales performance for product lines across the sales organization (down to sales representative): identify product sales mix, high performance as well as volume shortfall, impact of promotion and campaigns.

Sample product sales analysis 412 KPIs include:

- Total units sold (% change) by product / product line; and
- Contribution to profit by product / product line (% change over time).

The importance of a company's strong understanding of its customer base and the effectiveness of its product offering has been identified as key. However, if the organization is to deliver on its commitment to maximizing the value delivered to its shareholders, the sales function should extend its contribution to the goal by evaluating the effectiveness of the sales, shipping and invoicing process.

The sales analysis 401 functional area provides details on the process ranging from addressing questions on volumes of transactions being processed and various points in the demand chain to how resources are being allocated. Examples of the types of questions that can be addressed include:

- How many sales orders/shipments/invoices are being processed per year? How does this volume relate to revenue? Has this been improving over time?
- Which organizations are producing the highest volumes of transactions? How does their volume of transactions compare to the average revenue per transaction across the organization?
- Which shipping points are experiencing the highest volume 'of delivery processing? Has this been an ongoing trend? Does this relate to late deliveries? How does the number of late deliveries compare in the high volume shipping points compared to others?

The sales organizational effectiveness analysis 413 assists with the following functions:

- Evaluate the effectiveness of the sales, shipping and invoicing process;
- Evaluate sales representative performance;
- Analyze trends in transaction volumes and values being processed at various points in the demand chain (orders, returns, goods issued, invoices, credit and debit memo requests, etc.); and
- Monitor distribution of transaction activity across organizational units (sales organization, division, distribution channel, shipping points).

Sample sales organizational effectiveness analysis 413 KPIs include:

- Count of orders shipped on time (as % of total);
- Count of orders shipped across shipping points; and
- Sales revenue by sales representative (% change).

An e-commerce area of analysis may be added to assist with the following functions:

- Analyze the activity level with e-commerce channels; monitor sales volumes and units by product and customer;
- Comparative analysis of and customer buying trends between e-channels and traditional sales channels; analyze the level of cannibalization of traditional sales channels over time;
- Assess which customers and products are best suited for e-channel;
- Consolidate customer sales activity from across multiple channels

  - fuller customer profile (includes demographic detail); and

- Evaluate success of promoting e-commerce channel in increasing sales revenue and purchase volumes.

AR Analysis

The area of analysis 203 of the AR analysis 402 functional area helps analyze raw AR sub-ledger transaction level data to manage a corporate asset. The AR analysis 402 functional area helps restructure AR data into key measurable facts used for strategic planning, program management and execution, and AR performance monitoring and reporting. Companies may select from a host of key performance metrics and decision-ready reports that enable them to continuously analyze the effectiveness of their AR function, performance of existing resources, and fully understand the existing customer base.

The AR analysis 402 functional area provides information for analysis and decision making at various management levels within a company's AR function. The availability of customer account activity information and analysis equips the organization with the details necessary to shorten the sales cycle while minimizing delinquent accounts and bad debts - improving corporate cash flow.

A function of the AR organization is to ensure the full and timely collection of credit sales from the customer base. However, to successfully achieve this goal, AR should strive to:

- Ensure timely account payments and accelerate AR cash inflow;
- Effectively management credit and collections policies which promote sales and maintain reliable credit accounts;
- Contribute in reducing operating costs and overall cost to serve customers;
- Improve the AR process and management;
- Support related corporate functions - sales and marketing, finance and control, treasury; and
- Improving customer relations through the use of full information, comprehensive analysis and clear communication.

These efforts require that managers within the AR function have a keen understanding of "how we have done and where are we going?" This begins with an analysis of the information being captured in the AR process, using industry best practices. Managers should know:

- If the organization is meeting it's objectives for customer collections;
- Customer credit profiles - which customers are paying on time, and which are not;
- What is the expected cash inflow - how much cash do we expect in the future, and when;
- Where the greatest risks to cash inflow exist; and
- How effectively the organization is performing with the given resources.

The AR analysis 402 functional area delivers information to answer these core questions, with the depth of analysis built on known industry practices used by managers at various levels of the organization, including:

- High-level executive and senior managers who conduct strategic analysis on how the company is being paid, managing functional performance and determining cash inflow for planning; and
- AR analysts responsible for managing and monitoring customer accounts and payment trends, handling adjustments, and intercepting potential collection risks.

The AR analysis 402 functional area is focused on providing managers with information used to understand how well their organization is doing and why. The analyses that have been packaged are designed to provides managers with what they should assess:

- How effectively AR has been in meeting its functional objectives, and why these performance levels are being achieved;
- How effectively resources are being used to achieve these results; and
- How key information supports cross-functional analysis as it relates the customer and financial analysis.

Figure 6 shows an example of AR analysis 402 functional area details. The AR analysis 402 functional area is linked with the dimensions 112 for the purpose of reporting and analysis. The AR analysis 402 uses the company consolidation 320, cost center 322, business area 323, chart of accounts 325, accounting document class 326, customer 338, employee 339, organization 340, AR activity document 345, all time (time, fiscal) 348, financial currency conversion 350, and user category 352 dimensions. The relationship between functional areas and the dimensions are shown in Figure 6 by way of connecting lines 390.

The areas of analysis 203 of the AR analysis 402 functional area may include the following: AR functional performance analysis 420, customer credit analysis 421, AR corporate self-appraisal analysis 422, AR cash inflow analysis 423, and AR organizational effectiveness analysis 424. Other areas of analysis may be added, such as quality of AR analysis. In this example, this functional area relates to 77 business questions, 71 KPIs, 12 dimensions, and 28 reports.

A company looks to its AR team to ensure that the organization is being paid what is due, when it is due. Any deviations from this expectation must be assessed and addressed by analysts and managers as required. To measure how effectively the function is performing, key performance indicators are monitored over time, across organizations, and compared to industry standards.

The AR analysis 402 functional area delivers metrics and analysis to measure the functional performance of the AR function. The information provided will answer questions such as:

- How quickly is the organization collecting? What is the average collection period? How does this relate to particular analysts?
- What is the AR Turnover? Is it within target?
- What is the Days of Sales Outstanding (DSO)? How has this changed over time?
- What money is due this period? What percentage of dollars is past due?
- What percent of the money due is moving to high risk?
- What percentages of accounts are not meeting terms? What is the value of their overdue accounts?
- How has bad debt evolved over time?
- How has the AR function evolved over time in its ability to collect on time and minimize bad debt?

The AR performance analysis 420 assists with the following functions:

- Evaluate effectiveness of the AR function in collecting outstanding accounts within terms;
- Monitor organization aging schedule;
- Assess high risk receivables and bad debts accounts;
- Manage average collection period, and track how performance has changed over time; and
- Monitor the organizations Days of Sales Outstanding.

Sample AR performance analysis 420 KPIs include:

- Average Collection Period;
- Aging Schedule;
- Days of Sales Outstanding;
- Average Days Past Due;
- Collection Effectiveness Index; and
- Bad debt loss index.

Managers and analysts of the AR function should understand the current credit position of the customer base, as well as profiling customers and customer groups not only where they are today, but how this has changed over time.
The AR analysis 402 functional area provides information about a customer or a group of customers' payment history, as well as metrics to measure the effectiveness of the AR function. The organization should understand how customers have been paying, what is the cost to serve them, and which ones present risk of non-payment in any given period. This type of information not only gives additional insight to other functions within the organization, but it also serves as a basis for risk management, and credit analysis.
A customer credit analysis 421 allows managers and analysts to answer questions such as:

- What is the current status of a customer's account? What are the transactions that define the current status (including invoices, payments and adjustments)?
- What is the customer's aging schedule?
- What has the payment trend been for customers? What is the customer's average days to pay? Weighted average days to pay?
- Does the customer take advantage of discounts offered? What percent of discounts offered are taken? What is the value?
- What is the cost to serve customers?
- How has a customer's purchases, activity and credit evolved over time?
- Which customers are problematic and why?
- What is the profile of the customer base?
- What is the profitability of a customer to our organization?
- How does the customer's performance and credit rank against others?

The customer credit analysis 421 assists with the following functions:

- Monitor payments trends of individual customers and customer groups: percent of dollars and transaction past due;
- Analyze customer patterns in acceptance of terms;
- Assess customer transactions: number of cheques to invoices, adjustments;

- Evaluate customer profitability and cost to serve; and
- Monitor customer specific aging schedules by number of transactions, and total Dollars.

Sample customer credit analysis 421 KPIs include:

- Customer aging schedule;
- Customer average days to pay;
- Percentage and total of customer transactions and dollars past due;
- Cost to Serve customer; and
- Customer Profiles.

The AR analysis 402 functional area provides information on current account balances from an organizational viewpoint down to customer transaction detail. AR managers may have information to support financing proposals and the level of detail appropriate for the various requirements of the financing institutions. This may include customer information on bad debt, value of funds past due, and the average collection period.

The AR function detects problems in the supply chain and customer service as they manifest themselves in the form of delayed payments. As a company assesses the service it receives from its vendors, the company should also measure itself against the same standards.

Problems in collections may be due to a variety of issues - stemming from supply chain fulfillment to the billing process. AR, through the processing of reason codes and adjustment analysis can provide meaningful information to determine if the organization has been effective in satisfying the promises made to its customers. Have customers delayed or adjusted payments due to:

- Poor product quality;
- Late delivery;
- Inaccurate delivery quantities;
- Errors in pricing and billing;
- Delivery of the wrong product; and/or
- Unclear billing practices.

A proactive approach to assessing these factors and improving process to minimize discrepancies or delays in payment should enhance the customer experience and satisfaction, contribute to customer loyalty, and eliminate non-value adding costs due to inefficiencies.

The AR analysis 402 functional area provides detailed analysis of adjustments and their reasons. The analysis delivered provides managers with the information used to determine:

- What is the value of adjustments received?
- What are the reasons for adjustments? What are the related values and frequency? How are they evolving?
- Where are the adjustments emerging? Which customers? Which regions? Which analysts?
- Have adjustment levels improved in response to corporate action in the form of changes to process or policies within the supply chain, fulfillment process and billing?

The AR corporate self-appraisal analysis 422 assists with the following functions:

- Evaluate the adjustment activities and trends;
- Assess reasons for adjustments

    - the related values and frequency, and identify potential problem areas;

- Identify the sources and distribution of specific adjustments types: by customer, by region, by AR analyst; and
- Evaluate the impact of changes in corporate practices (ex. supply chain, fulfillment or billing) on adjustment and collections.

Sample AR corporate self-appraisal analysis 422 KPIs include:

- Adjustment counts by group and type;
- Total adjustment $ values by group and type; and
- Adjustment counts and $ value as a percent of total.

Cash management planning is an important function of the Treasury organization working to ensure that there is sufficient cash available in the future to cover AP for purchases, expenses, financing and operations. AR possesses key information that can provide forecasts of cash inflow based on existing credit items and their related terms of payment.

The AR analysis 402 functional area provides forecasts of cash inflows based on three scenarios:

- Expected cash inflow based on the assumption that no accounts take advantage of discount payment terms;
- Expected cash inflow based on the assumption that all accounts take advantage of discount payment terms; and
- Expected cash inflow based on the expected days to pay for each account based on an analysis of their payment patterns to date.

These cash inflow forecasts provide the Treasury function with the information used to estimate the cash inflow from the customer base, which, when compared with cash outflow analysis delivered in the AP analysis 404 functional area, provides valuable insight for cash flow planning.

The AR cash inflow forecast analysis 423 assists with the following functions:

- Project future AR cash inflow based on current open items and payments terms;
- Analyze expected incoming cash into the future by day, based on three scenarios:

  - amount due if no customers take terms
  - amount due if all customers take terms
  - amount due based on analysis of customer's average days to pay; and

- Combine with AP Cash Outflow analysis for AR-AP Cash flow Analysis.

Sample AR cash inflow forecast analysis 423 KPIs include:

- Receivables dollars and item counts due into the future by day; and
- Three scenario evaluation: no discounts, all discounts, and average days to pay.

As any departmental function within an organization, AR should manage its account base as efficiently as possible. This relates both to the best use of resources and budget.

Inefficiencies in the AR process could result in increased cost to service customers, errors due to poorly distributed workload, and customer dissatisfaction from transacting through poorly designed processes. An understanding of the AR function provides a view of where non-value-adding steps can be eliminated, and how the cash operating cycle time can be reduced.

The AR analysis 402 functional area delivers robust analysis of how AR resources are performing in working to achieve functional objectives. Managers will have the information to answer questions that include:

- How has account distribution across analysts changed as business has increased? How does this distribution compare based on total number of accounts, and total dollars managed?
- How do the average days to collect from accounts compare across analysts? Does an increase indicate overloaded resources?
- How have transaction volumes changed with an evolving customer base? How has the ratio of new to open transactions changed over time?
- How has the total number of transactions being processed by the AR department changed over time? Do increases in processed transaction per employee impact AR key performance indicators?

The AR organizational effectiveness analysis 424 assists with the following functions:

- Evaluate effectiveness of AR analysts and contribution to functional performance based on customer base and proportion of AR dollars under management;
- Monitor trends in new and open transaction volumes by type;
- Assess distribution of workload across existing resources (analysts and clerks) as it relates to support in achieving AR objectives; and
- Evaluate process effectiveness (time to clear open items).

Sample AR organizational effectiveness analysis 424 KPIs include:

- New to Open transaction counts, values and ratio; and
- By analyst analysis of customers under management (count), account balances (and % of total), DSO, average days to collect, bad debt.

As has been illustrated, AR analysis 402 functional area delivers information used by management to effectively analyze the performance of an organization's AR function. The AR process may also provide important information used in analysis by other functions which include:

- Sales and Billing: As the final phase of the sales process (sales to cash), AR provides valuable analysis alongside the details form the sales and billing processes. The analysis allows managers to better understand customer and customer group payments patterns and credit worthiness as it relates to sales history.
- GL: As a sub-ledger of the GL, AR provides details used to explain changes in GL AR line items.
- Treasury: The combination of AR cash inflow projections and AP cash outflow projections provide treasury with the information used to plan cash flow.

The use of conforming dimensions (ex., customer, chart of accounts, organization, etc.) ensure that while the reporting within each functional area as delivered by the business model 110 (including sales analysis 401, AR analysis 402, GL analysis 403, AP analysis 404) is robust, they also provide the ability to report across the business model 110. The design for integration across the business model 110 allows for a view of information across functions; hence ensuring that AR information is available to complete the analysis performed in other functions within the organization.
In maximizing cash flow, many organizations sell or borrow against their current AR balances. In using this vehicle, financial partners should have the organization present a profile of the quality of the AR against which financing is being requested. This includes the aging schedule of the accounts, as well as any other information used to display the low risk nature of the credit that is being considered for financing.
A quality of AR area of analysis may be added to assist with the following functions:

- Evaluate customer base and identify best candidates for financing or sale of AR;
- Identify accounts that require action to prevent potential negative impact on financing requests;
- Report on aging schedules, and credit history for selected customers; and
- Present detailed customer credit profiles demonstrating stability of accounts in support of financing institution requests for information.

Sample quality of AR analysis KPIs include:

- Customer base balance information;
- Customer base aging schedule;
- Customer profile detail data on average days to pay; and
- High risk, bad debt profiles.

General Ledger Analysis

GL, finance function, and financial accounting function are used interchangeably throughout this section.
The GL analysis 403 functional area helps turn raw GL transaction level data into a corporate asset. The GL analysis 403 functional area helps restructure GL data into the key measurable facts used for strategic planning, program management and execution, and financial performance monitoring and reporting. Companies may select from a host of key performance metrics and decision-ready reports that enable them to continuously analyze their company's financial health.
Thriving in any dynamic industry includes embracing e-business and using web enabled technology to create, manage, and deliver analytical information. Some of the business-critical activities that may be accomplish quickly with the GL analysis 403 functional area include:

- Reduce period-end close processes;
- Accelerate financial reporting and distribution cycles, freeing up time for financial analysis to improve business performance;
- Allow financial professionals to analyze business performance, not merely collect and report data;
- Give department managers access to their financial information so they can assess changes and impacts and align their activities with corporate objectives;
- Equip managers to produce up-to-date reports of key financial ratios;

- Trace and grasp shifts in expenses and revenues over time;
- Compare actual performance versus plan;
- Easily determine whether and how much organizations are contributing to profit or revenue;
- Evaluate the effect of currency rate fluctuations on financial performance; and
- Pinpoint the real issues or opportunities that drive profitability.

Finance Organizations have two main functions - Financial Accounting and Management Accounting and Control. Financial Accounting is performed for external consumption and is used in reporting financial results on a periodic basis to shareholders, creditors, and government entities. On the other hand, Management Accounting is intended for internal consumption and is used in planning and operating a company by managers and employees.

The source of data for the GL analysis 403 functional area may be the GL. Accounting principles form the basis of the standards, rules, and definitions of financial statements used for reporting and analyzing a corporation's financial performance. The GL analysis 403 functional area meets these standards while being flexible enough to adapt to global variations.

The GL analysis 403 functional area provides the information used for analysis and decision making at various management levels: from executives to financial management. One objective of the finance function is to plan, and monitor strategies for maximizing the return on investment for corporate stakeholders (i.e., shareholders). The financial plan and strategy should be in alignment with the corporate mission and should return the greatest value to its stakeholders. This involves an understanding of how effective an organization has been in generating revenue, utilizing its cash flow, and leveraging its assets while minimizing costs.

In their efforts to achieve these objectives, financial executives should have a keen understanding of "how things are going" which begins with an analysis of the information being captured in the GL. The finance department should have answers to questions on:

- How each part of the corporation is contributing to overall revenue and profit margin;
- How effectively the organization is leveraging its assets, liabilities, and cash flow; and
- How effective the corporation has been at returning value to its shareholders.

As the entity responsible for executing the corporation's business plan, Management should be able to monitor financial performance within its areas of responsibility. To do this effectively, management should have access to detailed information on revenue and expenses, assets and liabilities. Given access to the right information, Management may find answers to questions such as:

- How each cost/profit center is performing versus the actual budget/plan;
- What is driving profit;
- What is driving expense; and
- What are the key financial trends over time, are they positive or negative, and at what rate are they changing.

The GL analysis 403 functional area delivers information to answer these questions, with the depth and breadth necessary to meet the needs of managers at all levels of the organization, including:

- High-level executive and senior management who develop the corporate business plan, perform strategic analysis, examine how corporate strategies have impacted performance, and monitor the progress of the corporation toward meeting its financial performance objectives;
- Financial analysts who are concerned with short term and long term financial planning, reporting and analysis; and
- Executives and management who are responsible for executing the corporation's business plan

The GL analysis 403 functional area (or the Financial Accounting function) plays a role in the preparation and analysis of financial transactions which serve as barometer of their company's financial health. This information is used in strategic planning, program management and execution, and financial performance monitoring and reporting.

The GL analysis 403 functional area provides analysis used to:

- Reduce period-end close processes, accelerate financial reporting and distribution cycles;
- Allow financial professionals to analyze business performance, not merely collect and report data;
- Distribute financial information applicable to department managers for analysis and planning;
- Trace and grasp shifts in expenses and revenues over time;
- Compare performance: actual versus plan;
- Easily determine whether and how much organizations are contributing to profit or revenue; and

- Pinpoint and real issues or opportunities that drive profitability.

Companies may be different in how they structure the chart of accounts 325 in their GL system. The GL analysis 403 functional area addresses this fact by providing automated configuration utilities to capture the complete structure of the GL, thus, minimizing the management effort. Much of this information is determined automatically during installation but certain GL related data structures cannot be automatically deciphered. For instance, an "account name" may have three, four, or more components encoded in it such as Legal Entity, Management Entity, Account Group, Account Type, Account, and GL Transaction number. The GL analysis 403 functional area will capture this account hierarchy, allow you to specify the meaning of each part of the account key by account type (i.e., assets, liabilities or equity), and incorporate the specification into its data structure. This permits a user to "drill down" into the set of all GL transactions and perform analysis at each level, select GL transactions by type or owner, or aggregate and summarize GL transactions in any valid combination. Once installation is complete, no additional work is necessary to ensure the chart of accounts 325 data structure can be easily navigated for detailed analysis and reporting.

The GL analysis 403 functional area addresses key areas of financial analysis aimed at assessing the financial health of the company. Figure 6 shows the GL analysis 403 functional area. The GL analysis 403 functional area is linked with the dimensions 112 for the purpose of reporting and analysis. The GL analysis 403 functional area uses the company consolidation 320, profit center 321, cost center 322, business area 323, GL budget version 324, chart of accounts 325, accounting document class 326, GL activity document 346, AP activity document 347, financial currency conversion 350, and flexi-dimension 353 dimensions.

The areas of analysis 203 of the GL analysis 403 functional area may include: financial performance reporting and analysis 430, budget analysis 431, key financial ratio reporting and analysis 432, and operational performance and analysis 433. Other areas may be added, such as sales functional performance. In this example, this functional area relates to 60 business questions, 50 KPIs, 11 dimensions and 24 reports.

Financial statements may provide valuable insight into the performance of the organization. This is especially true when the information is presented in a format that presents the changes in financial performance over time. With the GL analysis 403 functional area, complete detailed financial statements may be produced "on-demand" virtually automating a typically complex and time-consuming process.

This built-in flexibility is also extended to the analysis and reporting environment of the GL analysis 403 functional area. Information in the data warehouse system 100 is structured for ease of access and query performance. The pre-packaged financial reports and multidimensional cubes are easily modified to suit specific requirements. And the format and content of each report can be quickly changed to suit the needs of the user.

Income Statement Analysis

The income statement is a summary of revenue, expenses, and income for a given period of time. The GL analysis 403 functional area provides a set of pre-configured variations of the income statement including:

- 'Period over period' which provides a comparison of change over time. The time periods can be selected by the user (i.e., month, quarter, year, fiscal year, year-to-date). This permits the user to analyze changes in revenue and expenses based on a point in time, period, or seasonality.
- 'Trends over time' presents the Income Statement by month. This shows monthly activity from the beginning of the year to the current period.
- 'Percentage of total revenue' shows an income statement in which each row is calculated as a percentage of total revenue. The user may drill down on each group of accounts to view detailed percentages of total revenue.
- 'Detailed Income Statement' shows an income statement grouped and sorted to the lowest level of detail in the account hierarchy.
- 'Income Statement variance from Budget' (expense and revenue forecast) presents a high-level income statement that compares budget against actual results. Calculations show variance and percent variance of actual results to budget.

Balance Sheet Analysis

The balance sheet represents the accounting equation-Assets = Liabilities + Owners Equity-at a point in time. In a balance sheet an analyst is looking for relative changes which are useful in understanding how the business is performing. The GL analysis 403 functional area presents the balance sheet in several different formats:

- 'Balance Sheet Time Comparisons' shows a detailed time period comparison. It allows the comparison of the current month, quarter, and year-to-date with the same periods in the previous fiscal year.

- 'Balance Sheet Time Trends' shows a detailed time period comparison of the balance sheet by month. Columns show monthly balances from the beginning of the year to the current period.
- 'Percentage of Total' presents a balance sheet statement in which each row is calculated as a percentage of the total against the group totals (assets, liabilities). This view supports drill down on each group of accounts to view detailed percentages of the totals.
- 'Detailed Balance Sheet' shows a balance sheet with line items grouped and sorted to the lowest level of detail in the account hierarchy.
- 'Balance Sheet budget variances' compares budget against actual results at a high level. Calculations include variance amount and variance as a percentage of actual to budget. Further analysis can be performed over time, business area, company and GL accounts.

The financial performance reporting and analysis 430 assists with the following functions:

- Produce detailed financial statements "on-demand" with ability to drill down from account hierarchies to transaction level detail for each GL account;
- Multi-dimensional Income Statement and Balance Sheer Analysis: Period over period, multiple period views (month, quarter, year, fiscal year, year-to-date), trends over time, vertical analysis, Income Statement variance from budget;
- Trial balances; and
- Analyze across financial management entities: profit and cost centres, business areas

Sample financial performance reporting and analysis 430 KPIs include:

- Account balances; and
- % change of account balance summaries over time.

The corporate planning function produces a set of projected revenues and expenses within each management entity. These projections become the financial objectives or budget by which each manager can report against. Monitoring actual expenses versus budget or actual revenues versus budgeted revenues may therefore be a critical and continuous activity. The GL analysis 403 functional area presents the "budget" information alongside actuals in a variety of reports and multidimensional cubes so the manager can determine:

- 'What is Driving Income Statement Variances?' This report shows an income statement with a variance measure to reveal business segments that are having unexpected results.
- 'Variance Report - Income Statement' shows a view of the income statement expense categories. Calculations show variance and percent variance of actual results to budget, and variances are ranked to reveal over-budget and under-budget accounts.
- 'What is driving Balance Sheet Variances?' This report reveals business segments that are having unexpected results based on a variance measure.
- 'Variance Report - Balance Sheet' shows a detailed view of balance sheet expense categories. Calculations show variance and percent variance of actual results to budget, and variance are ranked to reveal over-budget and under-budget accounts.

The budget analysis 431 assists with the following functions:

- Multi-dimensional financial analysis of actuals against budget;
- Evaluate keys drivers in the Income Statement;
- P&L variance reporting - Income Statement expense categories, rank accounts with respect to successfully achieving plan; and
- Balance Sheet variance reporting.

Sample budget analysis 431 KPIs include:

- Account budget $; and
- Variance between account budget$and account balance actuals.

The financial manager's job may be broken down into a series of broadly defined topics, including capital budgeting, dividend policy, stock issue procedures, debt policy, and leasing. But in the end the financial manager should consider the combined effects of these decisions on the firm as a whole. The GL analysis 403 functional area allows the finance department to use financial data to analyze a firm's past performance and assess its current financial standing. For example, being able to quickly check whether the company's financial performance is in the ballpark of standard practice.

Understanding the past may be a prelude to contemplating the future. Financial Managers may use long-term financial plans to establish concrete goals and to anticipate surprises. Short-term planning, where the focus is on ensuring that the firm has enough cash to pay its bills and puts any spare cash to good use may also a critical practice. The GL analysis 403 functional area provides information for understanding the past to better plan for the future.

One common method of analyzing performance is financial ratio analysis. Financial ratios are a convenient way to summarize large quantities of financial data and to compare the firms' performance. These ratios fall into three groups: leverage ratios, liquidity ratios, and profitability or efficiency ratios. The GL analysis 403 functional area automatically calculates and presents the most common measures in each group.

- Leverage Ratios including Debt to Asset and Times Interest Earned;
- Liquidity Ratios including Current, Quick (or Acid Test), Fixed Asset Turnover, Total Asset Turnover; and
- Profitability or Efficiency Ratios including Profit Margin, Inventory Turnover, Return on Assets, Return on Equity.

'Ratios Analysis' displays a time period comparison of key indicators that gives an overview of business performance. The analysis compares a period of time with the same period in the previous fiscal year. As well, the analysis compares the ratios calculated from actual financial data versus budgeted or planned:

- Current Ratio / Current Ratio Budget;
- Quick Ratio / Quick Ratio Budget;
- Inventory Turnover / Inventory Turnover Budget;
- Fixed Asset Turnover / Fixed Asset Turnover Budget;
- Total Asset Turnover / Total Asset Turnover Budget;
- Debt to Asset / Debt Asset Budget;
- Time Interest Earned / Time Interest Earned Budget;
- Profit Margin / Profit Margin Budget;
- Basic Earning Ratio / Basic Earning Ratio Budget;
- Return on Assets / Return on Assets Budget; and
- Return on Equity / Return on Equity Budget.

The key financial ratios described above may be calculated as follows:

• <u>Coverage or Leverage Ratios</u>

Leverage Ratios summarize the firm's financial leverage.

- <u>Debt to Asset Ratio</u>: Financial leverage is usually measured by the ratio of long-term debt to total long-term capital:

$$\text{Debt ratio} = \frac{\text{long-term debt} + \text{value of leases}}{\text{Long-term debt} + \text{value of leases} + \text{shareholders' equity}}$$

- <u>Times Interest Earned</u>: Another measure of financial leverage is the extent to which interest is covered by earnings before interest and taxes (EBIT) plus depreciation.

$$\text{Times interest earned} = \frac{\text{EBIT} + \text{depreciation}}{\text{Interest}}$$

- <u>Liquidity Ratios</u>

Liquidity Ratios summarize the ability of a company. to repay debt.

- <u>Current Ratio:</u> (Also referred to as the Working Capital Ratio) Current assets are those assets that the company expects to turn into cash in the near future; current liabilities are liabilities that it expects to meet in the near future:

$$\text{Current ratio} = \frac{\text{current assets}}{\text{current liabilities}}$$

- Quick (or Acid-Test) Ratio: Some assets are closer to cash than others and it may make sense to not include inventories and prepaids (this is a stricter measure of Working Capital):

$$\text{Quick ratio} = \frac{\text{Cash, marketable securities and receivables}}{\text{current liabilities}}$$

- Asset Turnover: Instead of looking at a firm's liquid assets relative to its current Liabilities it is useful to measure net sales relative to the firm's average total assets.

$$\text{Asset Turnover} = \frac{\text{Net sales}}{\text{average total assets}}$$

- Total Asset Turnover: A variation of the Asset Turnover is to include Inventory:

$$\text{Total Asset Turnover} = \frac{\text{current assets}}{\text{average daily expenditures from operations}}$$

- Profitability and Activity Ratios

Financial analysts employ Profitability Ratios to judge how efficiently companies are using their assets.

- Profit Margin: To know what proportion of sales finds its way into profits, you look at the profit margin

$$\text{Profit Margin} = \frac{\text{Net Income}}{\text{Net sales}}$$

- Inventory Turnover: This is the rate at which companies turn over their inventories.

$$\text{Inventory Turnover} = \frac{\text{cost of goods sold}}{\text{average inventory}}$$

- Return on Assets: A common measure of performance is the ratio of income to total assets.

$$\text{Return on total assets} = \frac{\text{EBIT - taxes}}{\text{average total assets}}$$

- Return on Equity: Another measure focuses on the return on the firm's equity:

$$\text{Return on equity} = \frac{\text{Net income minus preferred dividends}}{\text{average common shareholders' equity}}$$

The key financial ratio reporting and analysis 432 assists with the following functions:

- Multi-dimensional key ratio analysis across legal and financial management entities: including leverage ratios, liquidity ratios, and profitability or efficiency ratios;
- Variance analysis of actual ratios to budget values; and
- Define exceptions in ratio calculation methods through use of data warehouse system 100 multipliers.

Sample key financial ratios include:

- Current Ratio;
- Quick Ratio;
- Inventory Turnover;
- Fixed Asset Turnover;
- Total Asset Turnover;

- Debt to Asset;
- Time Interest Earned;
- Profit Margin;
- Basic Earning Ratio;
- Return on Assets; and
- Return on Equity.

A corporation may consist of a number of companies or "legal entities" with each company having its own GL and chart of accounts. The GL analysis 403 functional area provides a convenient set of reports all filtered by legal entity. This provides management with a set of financial statements focused on a specific company thereby facilitating analysis:

- 'Income Statement Trends' shows a high-level income statement by company. Columns compare time periods, rows show values for each statement group.
- 'Balance Sheet Trends' shows a high level balance sheet grouped by company. Columns compare time periods. Rows show values for each statement group.
- 'Cash Flow Trends' presents a detailed cash flow statement grouped by company. Columns compare time periods. Rows show values for each statement group.
- 'Ratio Trends' displays a detailed analysis of key performance ratios grouped by company. Columns compare time periods. Rows show percentages or numeric values depending on the specific indicator.

A management entity may be made up of a set of GL accounts. GL transactions in an account may belong to different management entities. Executive management often needs to compare the performance between entities in order to establish strategies and priorities:

- 'Profit Center Comparisons' presents a high-level income statement and gives a separate set of percentages for each profit center group. Columns compare time periods and rows show percentages of totals for each profit center group.
- 'Profit Center Rankings' show all lowest level categories for the profit center hierarchy and ranks profit centers for all fiscal periods by profit amount.
- 'Cost Comparisons' gives a separate set of percentages for each cost center group presented in a high-level income statement. Columns compare time periods, and rows show percentages of totals for each cost center group.
- 'Cost Center Rankings' show all lowest level categories of the cost center hierarchy. Cost centers are ranked by expense totals for a selected time period.
- 'Company Comparisons' show a high level income statement where each company is a column in the report and rows represent account groups.
- 'Company Rankings' ranks all companies, at the lowest level of categories of the company hierarchy, by amount of profit for a selected time period.

A manager of a profit or cost center should be able to view only the GL transactions that are applicable to their management entity. The GL analysis 403 functional area provides a set of reports and analysis cubes filtered in that way:

- 'Cost Center Analysis' shows a detailed income statement that includes account groups, detailed accounts, debits, credits, final balance
- 'Account Analysis' displays a list of all transactions for the accounting period for a particular account. Columns include debit, credit, final balance

One of the most time consuming processes performed by the financial organization is that of the "period end close". The GL analysis 403 functional area may reduce this time by providing easy access to detailed transaction information in a trial balance format. The 'Trial Balance' shows a list of all accounts sorted by account number including starting balance, debits, credits, and final balance. This report may be generated quickly and provides full drill down to the transaction level detail.

'GL' displays a list of all detailed transactions for the accounting period for each account as selected in initial prompt filters such as document/transaction number. The GL report presents transaction description, credit, debit, and final balance information.

The operational performance and analysis 433 assists with the following functions:

- Apply financial data to analyze the organization's past performance and assess its current financial standing;
- Compare corporate financial performance to industry benchmarks; and
- Support development of short and long-term plans with the depth and flexibility of financial analysis information (detail and summary level).

Sample operational performance and analysis 433 KPIs include:

- Transaction counts; and
- GL account transaction level detail.

AP Analysis

The AP analysis 404 functional area helps turns raw AP sub-ledger transaction level data into a corporate asset. This application restructures AP data into the measurable facts used for strategic planning, program management and execution, and AP performance monitoring and reporting. Companies may select from a host of key performance metrics and decision-ready reports that enable them to continuously analyze the effectiveness of their AP function, performance of existing resources, and fully understand the existing vendor base.

Thriving in any dynamic industry includes embracing e-business and using web-enabled technology to create, manage, and deliver analytical information. Some of the business-critical activities that can be accomplished quickly with the AP analysis 404 functional area include:

- Effective management of the AP function through close monitoring for AP effectiveness;
- Tight cash outflow management and analysis to enable projections for use in cash flow planning;
- Present overview of AP accounts for the purpose of evaluating the relationship with vendors;
- Evaluate functional transaction volumes and the impact on AP performance;
- Assess analyst performance as it relates to accounts that he manages; and
- Vendor profile performance.

AP departments should have certain essential information to be able to perform sound analysis for key decision-making. The AP analysis 404 functional area offers AP departments a set of KPIs along with many vital reports that support various management levels within the company. The AP analysis 404 functional area enables the AP department to perform its functions and duties with tighter control over the cash outflow, better vendor relationship management, and more efficiently.

One goal or aim of the AP department may be to ensure all vendors are paid the full and the right amount in the "right" time taking into consider both the vendor and the company's perspectives. To achieve this goal AP departments should:

- Manage cash outflow tightly, while balancing between best interests of the company versus the relationship with the vendor;
- Improve the AP process and management;
- Improve the relationship with Vendors in general and from the AP through full information and comprehensive analysis;
- Support related corporate functions: Inventory, Procurement, Treasury and Controlling; and
- Effectively manage the payment process with the minimum rate of errors.

Managers within the AP function should have a detailed understanding of AP departmental performance. They should have access to information that provides answers to questions on throughput, accuracy, timeliness and efficiency. AP Managers should know:

- If the AP organization is meeting it's obligations toward its vendors by paying them the right amount;
- Vendor profiles - which vendor's invoices are problematic, and which are not;
- What is the expected cash outflow - how much cash do we expect to pay out in the future, and when do we have to pay it? and
- How effectively is the organization performing with the given resources? What is the correlation of these resources to error rate?

The AP analysis 404 functional area delivers information to answer these questions, with the depth of analysis built on industry best practices needed by managers at all levels of the organization, including:

27

- High-level executive and senior managers who conduct strategic analysis on how the company is paying vendors, managing functional performance and determining cash outflow for planning; and
- AP analysts responsible for managing and monitoring vendors accounts and payment trends, and handling adjustments and making sure to execute the payment policies determined by the company.

The AP analysis 404 functional area puts into its consideration the different types of reports and analyses that an AP manager would employ to evaluate:

- How effectively AP has been in meeting its functional objectives, and why these performance levels are being achieved;
- How effectively resources are being used to achieve these results; and
- How key information supports cross-functional analysis as it relates the vendor and financial analysis.

Figure 6 shows the AP analysis 404 functional area. The AP analysis 404 functional area may use the company consolidation 320, cost center 322, business area 323, chart of accounts 325, accounting document class 326, vendor 336, employee 339, organization 340, AP activity document 347, all time (time, fiscal) 348, financial currency conversion 350, and user category 352 dimensions. The relationship between functional areas and dimensions are shown in Figure 6 by way of connecting lines 390.

The areas of analysis 203 of the AP analysis 404 functional area may include the following: AP performance analysis 440, AP vendor account analysis 441, AP cash outflow forecast 442, and AP organizational effectiveness 443. Other areas of analysis may be added. In this example, this functional area relates to 80 business quiestions, 64 KPIs, 12 dimensions, and 38 reports.

The AP analysis 404 functional area delivers information for AP to:

- Ensure timely account payment and optimize AP cash outflow;
- Support strong vendor relations;
- Reduce operating costs;
- Improve the AP process and management; and
- Support related functions - procurement and inventory, finance (general ledger) and control.

The AP team may be the designated division of the company that undertake the responsibility of ensuring that the organization is paying what is due, when it is due to its vendors. Any deviations from this expectation should be assessed and addressed by analysts and managers as required. To measure how effectively the function is performing, KPIs are monitored over time, across organizations, and compared to industry standards.

The AP analysis 404 functional area delivers metrics and analysis measuring the functional performance of the AP function. The information provided helps answer questions such as:

- What money is owed this period? What percentage of dollars is past due?
- How quickly is the organization paying? How does this relate to particular analysts?
- What percentages of accounts are not meeting terms? What is the value of overdue accounts?
- How has the AP function evolved over time in its ability to pay on time and utilize discounts available?
- What is the average number of transactions that are processed by the AP department within a period? How has this changed overtime? How many adjustments took place?
- How has the AP function evolved over time in its ability to pay on time and maximize discounts?

The AP performance analysis 440 assists with the following functions:

- Evaluate effectiveness of the AP function in paying creditors for outstanding items within terms;
- Monitor organization aging schedule;
- Manage future outgoing payments based on size and number of payable; ensure sufficient funds available when needed;
- Analyze average payment period, and track how performance has changed overtime;
- Analyze AP effectiveness in capitalizing on discounts; and
- Assess AP accuracy in payments to vendors.

Sample AP performance analysis 440 KPIs include:

- Average days to pay;

- Aging Schedule;
- Average Days Past Due;
- Total dollars / % past due; and
- % payments on time vs. past due.

AP provides information about payment history for a vendor or a group of vendor; this fact was well incorporated in the design of the AP analysis 404 functional area. The organization should understand in general terms how vendors have been delivering and dealing with the organization. However AP, in specific, should understand the financial aspect of the relation ship with the vendor. For example, what is the cost is to pay a certain vendor versus the rest, what is the trend of the terms the vendor is offering based on the volume of purchases and previous history, and which vendor has the highest number of inaccurate invoices and hence consume more than the average time to be paid. This type of information not only gives additional insight to other functions within the organization, but it also serves as a basis for vendor evaluation, and cash outflow forecasting.

Managers and analysts of the AP function should understand the current vendor information, as well as profiling vendor and vendor groups - not only where they are today, but how this has changed over time. Information about vendors is not merely a product of AP, but procurement and inventory organizations complete the whole picture about vendors. The 3-way check and vendor scorecard are two areas of analysis that involve the vendor profiling from the AP perspectives.

Sharing with vendors their profiles could improve the mutual communication and hence the relationship with vendors. Certain reports in the AP analysis 404 functional area targets this issue of sharing knowledge between the corporate and the vendor aiming to more the vendor-customer relationship to partnerships.

A vendor profile will allow managers and analysts to answer questions such as:

- What is the current balance for a vendor account? What are the transactions that define the current balance (including invoices, payments and adjustments)?
- Does the vendor offer the company discounts? What percent of discounts offered are taken? What is the dollar value?
- What is the cost to pay Vendors? (including errors, method of payments, adjustments)
- Which vendors are problematic and why?
- What is the profile of the vendor base?
- How does the vendor rank against others? (trading volume, discounts offered, adjustments, prices and fluctuations associated, and cost to pay)

The AP vendor account analysis 431 assists with the following functions:

- Comparative analysis of payments patterns across vendors and vendor groups: rank base on percent of dollars and transactions (current, past due);
- Analyze payment performance history by vendor; prioritize outgoing payments;
- Identify optimal conditions for taking discounts offered;
- Assess vendor related transactions: number of cheques to invoices, adjustments; and
- Monitor vendor specific aging schedule and account balance details.

Sample AP vendor account analysis 431 KPIs include:

- Vendor aging schedule;
- Vendor average days to pay;
- Percentage and total of transactions and dollars past due; and
- Vendor AP Profiles.

AP and AR may have a role in providing the treasury department with information to manage the cash most effectively and carry the function of planning. AR ensures that there is sufficient cash available in the future to cover AP for purchases, expenses, financing and operations. Furthermore, AP may be responsible to provide the cash outflow forecast information to the treasury department. AP may provide key information that can provide forecasts of cash outflow based on existing invoices and their related terms of payment and the trends reflecting the discounts taken.

The AP analysis 404 functional area may provide powerful forecasts of cash outflows based on three scenarios:

- Expected cash outflow based on the assumption that no accounts take advantage of discount payment terms;

- Expected cash outflow based on the assumption that all accounts take advantage of discount payment terms; and
- Expected cash outflow based on the expected days to pay for each account based on an analysis of their utilized discount taking patterns to date.

These cash outflow forecasts may provide the Treasury function with the information they use to estimate the cash outflow required from the company, which, when compared with cash inflow analysis delivered in AR analysis 402 functional area, provides valuable insight for cash flow planning which can by used by the treasury department.

The AP cash outflow forecast analysis 442 assists with the following functions:

- Project future AP Cash Outflow based on current open items and payments terms;
- Analyze expected outgoing cash into the future by day, based on three scenarios:

  - amount due if no vendor terms are taken,
  - amount due if all available discounts are taken, and
  - amount due based on analysis of average days to pay vendors;

  and
- Combine with AR Cash Inflow analysis for AR-AP Cash flow Analysis.

Sample AP cash outflow analysis 442 KPIs include:

- Payables dollars and item counts due into the future by day; and
- Three scenario evaluation: no discounts, all discounts, and average days to pay.

The AP function may be tasked with paying outstanding debt to vendors, employees and other parties to which the company owes money. One AP role may be to ensure that the debts are paid on time (whether or not discounts are taken), but no sooner than necessary. The ultimate goal is to maximize cashflow while supporting positive relationships with vendors, and other creditors.

AP, like any other any department within an organization, should manage its account base as efficiently as possible - this relates both to the best use of resources and budget. Inefficiencies in the AP process could result in increased cost to pay vendors, errors due to poorly distributed workload, and vendor dissatisfaction from transacting through poorly designed processes. An understanding of the AP function can provide a view of where non-value-adding steps can be eliminated and how to best utilize the cash available to pay the important bills first.

The AP analysis 404 functional area delivers robust analysis of how AP resources are performing in working to achieve functional objectives. Managers will have the information to answer questions that include:

- How has account distribution across analysts changed as business has increased? How does this distribution compare based on total number of accounts, and total dollars managed?
- On average, how long does it take for a decision to be made on an invoice submitted for approval and payment?
- What was the total cost/savings for being in variance as related to payment terms?
- What is the average /Weighted average Days past due?
- What is the average AP payment period for a vendor? How does this compare across vendors? How has this changed over time?
- What proportion of $ value of open AP items in a period are attributed to the $ value of new transactions? How has this changed over time?
- How has the total number of transactions being processed by the AP department changed over time? Do increases in processed transaction per employee impact AP key performance indicators?

The AP organizational effectiveness analysis 443 assists with the following functions:

- Evaluate effectiveness of AP analysts/clerks and contribution to functional performance;
- Monitor trends in new and open transaction volumes by type;
- Assess distribution of workload across existing resources (analysts and clerks) as it relates to support in achieving AP objectives; and
- Evaluate process effectiveness (time to clear open items), error in payments.

Sample AP organizational effectiveness analysis 443 KPIs include:

- New to Open transaction counts, values and ratio;
- Average time to payopen items;
- Number and value of duplicate payments; and
- Number of transactions processed by employee.

As has been illustrated, the AP analysis 404 functional area delivers information used by management to effectively analyze the performance of an organization's AP function. However, the AP process also provides important information used in analysis by other functions that include:

- Procurement;
- GL: As a sub-ledger of the GL, AP provides the details necessary to explain changes in GL AP line items; and
- Treasury: The combination of AR cash inflow projections and AP cash outflow projections provide treasury with the information needed to plan cash flow.

The use of conforming dimensions (ex. vendors, chart of accounts, organization, etc.) ensure that while the reporting within each functional area as delivered by the data warehouse 100 system (including procurement 406, AP analysis 404, GL analysis 403, AR analysis 402, Inventory Analysis 405, Sales Analysis 401) is robust, they also provide the ability to report across applications. The design for integration across the data warehouse 100 system allows for a view of information across functions - hence ensuring that AP information is available to complete the analysis used in other functions within the organization.

Inventory Analysis

To remain competitive, organizations should be positioned to give their customers "what they want, how they want it and when they want it". This involves an understanding of how the supply chain is geared to meet demand - with inventory managers faced with delivering while maintaining the optimal balance between supply and demand. For inventory management to effectively address the issues of product availability and meeting internal and external demand, they should have facts. They should know what they have, where it is, how much is invested in stock, and how effective the company has been in meeting the demand.

The inventory analysis 405 functional area delivers value to managers by helping turn raw data into information used to take action. The inventory analysis 405 functional area provides a host of key performance metrics and decision-ready reports that enable companies to analyze forecast accuracy, stock levels and valuations, stock fluctuations (e. g., minimum and maximum stock levels, stock outs), and key inventory analytics (e.g., ABC analysis, inventory turns, and stock coverage). Some of the business-critical activities that may be accomplished quickly with the inventory analysis 405 functional area include:

- Increase customer satisfaction through meeting demand;
- Better understand the investment in inventory and identify opportunities to improve cashflow;
- Improve forecasts and budgets; and
- Analyze warehouse performance, material classes, movements, forecasts, physical inventory, etc.

To be competitive in today's marketplace, organizations are realizing that they not only should embrace the power of e-commerce, but they should look beyond to c-commerce (collaborative commerce). c-Commerce identifies the benefit to sharing information with key partners and suppliers. It identifies the benefit for organizations to leverage the experience and insight of their channels to better understand the supply chain - and gain and sustain competitive advantage.

Through the sharing of insightful information into the Inventory Management function - measures such as stock level fluctuation, consumption, and inventory movement (issues and receipts), can return valuable input towards better understanding of how effectively product is moving through the organization process chain from supplier to the customer, while adding value along the way. This understanding will empower the inventory managers to better plan and forecast stock requirements, while identifying opportunities to minimize excess stock levels and eliminating the related carrying costs that can reach upwards of 30%.

The inventory analysis 405 functional area enables the inventory function to meet both functional and organizational goals, by sharing key inventory information such as:

- Material consumption and inventory level trends across the organization for items related to a specific vendor;
- The distribution of specific materials or material groups across warehouses/ regions
- The number of returns to vendors of specific materials and how it relates to total inventory held on the item;

- Consignment stock of inventory on site from a vendor and information on how consignment levels correspond to consumption; and
- Other valuable information which will bring your company and your key partners and suppliers closer together and ultimately improve the supply chain.

The inventory analysis 405 functional area provides information for analysis and decision making at various management levels within a company's material management organization. Some objectives of the inventory management function are to ensure that there is sufficient stock to meet the demand of internal (MRO and manufacturing) and external customers, manage the cost of owning inventory, forecast and plan for stock levels, and to identify opportunities for improved cashflow.

To accomplish these objectives, managers need the information and analysis capable of providing an understanding of the investment made in inventory. This includes in-depth analysis of where money is being invested, how often it is being turned, who is driving the demand, and for what items. This should be tied to analysis on the effectiveness of this investment in meeting the demand, with a view from both a corporate level as well as from individual plants and warehouses. The inventory analysis 405 functional area delivers the key information used to analyze:

- Organizational investment in inventory;
- Functional effectiveness in managing and forecasting requirements;
- The movement of inventory through the organization;
- The allocation of resources; and
- How effective the organization has been in satisfying the demand of internal and external customers.

Managers should understand how the combination of all these variables impact their ability to meet the inventory policy and strategy - and ultimately how effective current plans and processes are in contributing to the corporate mission aimed at returning the greatest value to its stakeholders. The inventory analysis 405 functional area delivers robust in-depth reporting and analysis to answer the questions that deal with:

- Management of inventory;
- Inventory consumption and demand;
- Operational performance; and
- Inventory control and forecast accuracy.

The inventory analysis 405 functional area delivers information used to answer these questions, with the depth and breadth of content to meet the needs of managers at all levels of the organization, including:

- High-level executive and senior managers who conduct strategic analysis into the investment in inventory, as well as how inventory strategies and forecasts have impacted cross-organizational performance;
- Inventory managers who require tactical reporting and analysis targeted at understanding the effectiveness of plans, distribution of investment across material segments, plant and warehouse locations; and
- Operational managers who oversee reporting (i.e., warehouse manager evaluation of inventory levels, values, turns and coverage for her specific location) and process effectiveness.

The inventory analysis 405 functional area offers inventory managers a robust source of information necessary for the effective management of stock, process and enhanced planning and forecasting. The inventory analysis 405 functional area provides information used to understand:

- What is invested in stock;
- How effective the company is managing and forecasting requirements;
- How stock moves through the organization;
- How resources are being allocated; and
- Ultimately, how effective the company has been in satisfying the demand of both internal and external customers.

Figure 6 shows the inventory analysis 405 functional area. The inventory analysis 405 functional area is linked with the dimensions 112 for the purpose of reporting and analysis. The inventory analysis 405 functional area uses the business area 323, movement document 328, material movement class 329, vendor 336, material 337, plant 341, material storage 342, storage bin 343, all time (time, fiscal) 348, unit of measure 349, unit of measure conversion 351, user category 352, forecast version 354, valuation 358, batch 359, and stock class dimensions 360. The relationship between functional areas and dimensions are shown in Figure 6 by way of connecting lines 390.

The inventory analysis 405 functional area may include the following: stock overview and valuation analysis 450, material movement activity analysis 451, demand analysis 452, material reservations analysis 453, physical inventory analysis 454, and inventory forecast analysis 455. Other areas of analysis may be added. In this example, this functional area relates to 150 business questions, 100 KPIs, 15 dimensions, and 49 reports.

Questions that inventory managers may ask are, "What do we carry in inventory? What is worth? and Where is it?." To effectively answer these questions, managers should know how inventory is being managed by the organization and how the investment is spread across the company. They not only should know the inventory profile of specific warehouses, but also how these profiles compare across the organization.

Inventory managers also should know where the investment is. They should have the power to analyze investment from many directions at various levels of detail. Key analysis including ABC, inventory turnover, and inventory coverage are critical - and deliver the greatest value when viewed from these various levels of detail and viewpoints.

The inventory analysis 405 functional area helps deliver rich detail on the inventory investment. It provides the power of drilling from high-level to specific segments of materials, storage, stock types and status. The application addresses questions on stock overview and valuation analysis including:

- What has been our average corporate investment in stock this period? Where does the investment reside by warehouse? By stock location? How does this compare to the previous period? What has been the trend over time? How volatile is it over time?
- How much is invested in specific material groups? In raw materials? In finished goods? How has this changed over time?
- How do materials compare within an ABC analysis? Where are the "A" class materials being handled? How often are they turning?
- How many units of inventory are we holding for a specific material across the company? Across warehouses? By a specific plant? By storage location? How does this compare to the previous period? What has been the trend over time?
- What is the availability of the inventory? How much of the inventory is available for distribution? How much is in consignment? How much is restricted stock?
- What is the velocity of the inventory? Are certain materials fast moving or slow moving, or dead? How does this compare across warehouses? Within a specific warehouse?
- How often is the inventory turning by material groups? By material types? By specific materials? How does this compare to last period? Has it improved over time?
- What have the average inventory turns been for the company? What have the turns been by warehouse? Storage location? How does it compare to previous period? and what has been the trend over time?
- How many days of inventory do the company have by material? How does this look across the organization? What has been the trend over time? Has it been sufficient to meet demand or not enough?

The stock overview and valuation analysis 450 assists with the following functions:

- Comparative analysis of summary and detail information on current inventory investment and from high-level to specific segments of materials, storage, stock types and status;
- Analyze by materials hierarchies, ABC analysis, and by status (ex. restricted stock, in quality control, on consignment); and
- Comparative analysis across plants and warehouses of inventory velocity, ability to meet demand, average stock and min-max stock levels.

Sample stock overview and valuation analysis 450 metrics include:

- Average stock level and value;
- Minimum and maximum stock levels;
- Inventory turns;
- Stock level coverage;
- Inventory stockouts; and
- Zero-stock days.

Another key area of analysis used by inventory managers is an understanding of the movement of inventory in, out, and within the organization. Material movements are the underlying building block of information within the Inventory Management function. Understanding the nature and level of the activity of goods receipts, issues and transfers provides the additional detail on analysis around areas such as stock levels, shortages, resource allocation and the various process associated with the function.

The inventory analysis 405 functional area provides the summary level movement activity information used for effective analysis that includes drill down by type of movement, material segments, and warehouse. The inventory manager is also provided with transaction level detail used to analyze trends identified from other inventory analysis performed within the application. The types of questions that can be addressed through material movement activity analysis include:

- How many movements have been processed this period? How do the movements breakout into goods receipts and issues? How does this compare to previous periods?
- What is the profile of goods receipt of inventory into the organization? How many receipts have been processed for specific materials or material segments? How many receipts have been processed for material from a specific vendor? What is the value of the receipts processed?
- How many receipts have been processed for specific warehouses/plants? For specific divisions? For specific business areas?
- Of the inventory received, what proportion were receipts into unrestricted inventory? Into quality control? Into other restricted statuses?
- How many goods issues were processed this period and how does it compare to previous?
- What materials were issued? How many issues were related to that material? What quantities were issues? To the material segment? How does this compare to previous periods?
- What types of issues have been processed? What proportion of materials have been issues to fulfil orders? Or issues to scrap?
- Who has been processing the receipts? What volumes of receipts have been processed by employees this period? What has been the trend over time?
- What has been the number of goods issues/receipts over the period? What is the average quantity moved? How does this compare across the organization? Across warehouses? How does this compare to the previous period?
- Provide a detailed analysis of stock movement in and out of inventory. Issues to order fulfilment, consignment or scrap? Receipts to quality control or unrestricted stock?
- Who has processed the issues? What shipping points have goods been issued from? How much inventory has been shipped this period? How does activity compare across shipping points this period? Over time?

The material movement activity analysis 451 assists with the following functions:

- Analyze the nature and level of the activity of goods receipts, issues and transfers (down to individual movement types) - and how they relate to stock levels, shortages, resource allocation and the various process associated with the function;
- Evaluate movement frequency and quanitities by product type and/or organization;
- Analyze transaction volumes processed by inventory employees (ex. goods receipts); and
- Provide a detailed analysis of stock movement in and out of inventory.

Sample material movement activity analysis 451 KPIs include:

Movement quantities; and
Movement values.

An objective of Inventory Management may be to ensure that our customers get what has been promised. Understanding where the balance of inventory policy on supply (i.e., "what we have", "where it is" and "what it is worth") and the demand of internal and external customers ("did we deliver?") can maximize inventory performance. Moving closer to this balance will ensure that inventory management will continue to contribute to customer satisfaction while working towards improving corporate cashflow.

Management should know where the demand for inventory has come from, how inventory levels have changed, and whether the stock levels and fluctuations have allowed the organization to deliver. The inventory analysis 405 functional area delivers the depth of information used to assess inventory policy, and address questions that include:

- What types of goods issues have been processed this period? Have they been to fulfill sales orders? Were they issued to manufacturing? Were they issued for maintenance, repair or operations? How does this compare to the previous period? Has this changed over time?
- What materials have been issued? What specific material segments have been issued? How has this changed over time?

- What has been the stock levels for specific materials across the company this period? What have been the maximum levels of inventory reached? What has been the minimum stock level? Are these fluctuations within predefined limits? How does it compare across warehouses?
- Did any warehouses experience zero stock levels this period? How often did stock reach zero levels for a warehouse? For a material segment? For a specific material? How does this compare to previous periods? How does this compare to across materials and material segments?
- For materials that were at zero stock levels, how many days did they remain at zero stock?
- How many "stock outs" (defined as the inability to meet a request for inventory in a specific time frame) did the organization experience this period? Which warehouses had the most stock outs? Which storage locations? Do the stock outs relate to specific materials?
- For materials experiencing the most stock outs, what were the related zero stock counts and zero stock days?

The demand analysis 452 assists with the following functions:

- Evaluate reason for internal movements of inventory

  - whether goods issues for internal or external customers;

- Analyze the type, volume and frequency of demand for Inventory customers: by material type (raw material, MRO, fininshed goods) or specific material;
- Assess inventories effectiveness in meeting demand of the all customers, and how this has evolved over time; and
- Identify where demand has not been met and compare across materials and locations.

Sample demand analysis 452 KPIs include:

- Transaction counts by customer;
- Average transaction values by customer; and
- Number of units issued by customer.

Reservations serve to hold material within inventory for specific use either inside or outside the organization. The impact of the reservation is that while meeting a specific demand, they reduce the level of inventory available for use. Analysis of material reservation activity provides inventory managers with additional insight into the demands for stock to fulfill internal and external customer requirements, and the ability to meet quantities requested.

The inventory analysis 405 functional area delivers valuable insight into reservation activity, trends and the ability to effectively meet requirements by answering questions, such as:

- How effectively have requirements for a specific material been met through confirmed stock this period? How does this pattern compare to specific material segments? How has this varied over time?
- What warehouses have been most successful in meeting requests for inventory in full? How do they rank? How has this changed over time? Has performance been within acceptable limits?
- How has confirmed reserved stock actually compared to actual stock withdrawn from inventory? Are there specific materials that often have less taken from inventory than was actually reserved? Has this resulted in unnecessary excess stock? How does this impact the inventory policy?
- Are excess inventory reservations prevalent in specific warehouses? Or material segments?
- How much lead-time is there between the request for stock and the required date for the stock? How does this vary across the organization? How has this changed over time?

The material reservation analysis 453 assists with the following functions:

- Analyze material reservation activity for insight into the demands for stock to fulfill internal and external customer requirements;
- Evaluate the effectiveness of warehouses in meeting requests for inventory in full and how it compares to excess stock levels for specific materials or material segments;
- Compare the activity across materials of confirmed reserved to actual stock withdrawn from inventory; and
- Analyze lead-times and variations in request for stock to required date.

Sample material reservation analysis 453 KPIs include:

- Reserved quantities;
- Withdrawn quantities; and
- Confirmed quantities.

A key to effectively managing inventory is having a keen view on whether "what we have" actually compares to "what we should have". Physical stock counts, regardless of method used, gives the manager an indication of how effectively or ineffectively stock levels are being managed. Inventory management should have the ability to identify exceptions in the gap between the physical and book values of inventory - and to analyze trends of where accuracy outside exception limits are occurring across the organization as a whole, across warehouses, by specific materials and material segments.

The inventory analysis 405 functional area delivers valuable analysis on physical inventory, by providing information used to understand this key point of control, including understanding questions such as:

- How accurate have the physical counts been across the organization this period? How accurate is the company in units? What is the percent accuracy? How does this compare to previous periods? Is it improving?
- How large have the shortages or overages been on average? Where have they occurred?
- How does physical count accuracy compare across warehouses? Across storage locations? Are there any locations that are performing outside corporate standards?
- Are shortages occurring within specific materials groups or materials? Have the shortages been consistent over-time, or is this a new trend?
- Are shortages specific to certain warehouses or storage locations?

The physical inventory analysis 454 assists with the following functions:

- Conduct comparative analysis of physical inventory accuracy across storage locations, and identify any trends as they relate to specific materials;
- Evaluate physical inventory analysis within given storage areas (plant, warehouse to storage location) and identify sources of shortages or overages, and the related; quantities and dollar value; and
- Analyze the areas where discrepancies occur most often; by material or material type, or location.

Sample physical inventory analysis 454 KPIs include:

- Book stock level count;
- Book stock group currency value; and
- versus Actual stock level and group currency value.

One of the challenges facing inventory managers is how to forecast inventory requirements - particularly as the further we look into the future, the less we can point with confidence to forecasts as part of the planning process. The more information that is available about the inventory function, the more effective and valuable forecasts become in working towards minimizing inventory while meeting demand. Part of this requires a view of how accurate inventory forecasts have been.

The inventory analysis 405 functional area addresses the requirements for insight into forecast accuracy, answering questions that include:

- What were the inventory forecasts for the organization this period? How does it compare to actual results? What is the variation? How does this compare to previous years?
- How accurate have forecasts been for a specific warehouse? For specific materials? For specific material segments? How accurate have forecasts been for "A" class materials?
- How have forecasts for specific items changed over time? How does it compare to the demand for those materials?

The inventory forecasts analysis 455 assists with the following functions:

- Analyze trends in forecasted levels across commodities over time;
- Compare forecasted requirements to actuals inventory requirements across materials and locations; and
- Analyze forecast accuracy across organizations, storage areas and material; evaluate how accuracy has evolved over time.

Sample inventory forecast analysis 455 KPIs include:

- Forecast period value;
- Corrected forecast values; and
- Seasonal forecast index values.

Procurement Analysis

The procurement function has evolved from transactional processing to the current day use for strategic purchasing as a core component of the corporate supply chain and competitive advantage. When a company's procurement function has moved beyond "price-driven purchasing" towards maximizing the corporate buying power through well developed relationships with strategic supply partners, they can experience improvements in product quality, dependable supply, competitive pricing, and process efficiencies.

For the purchasing function to effectively deliver on its objectives, it should understand where the money is being spent - and who it has been spent with. It should know where the opportunities exist for leveraging current buying power across the organization as well as how current suppliers have met expectations for quality and reliability. Purchasing management also should understand how effective the process has been in working towards achieving the functional performance objectives.

The procurement analysis 406 functional area delivers value to managers by turning raw data into the information used to take action. The procurement analysis 406 functional area provides a host of key performance metrics and decision-ready reports that enable users to analyze purchasing volumes and patterns across commodities, analyze performance of the buying organization, deliver vendor scorecarding, review comparative vendor performance, and assess operational effectiveness. Some of the business-critical activities that users will be able to accomplish quickly with the procurement analysis 406 functional area include:

- Maximizing buying effectiveness through realization of full leverage potential across commodities;
- Identify opportunities for development of strategic buying relationships;
- Increase customer satisfaction through meeting demand and delivery of quality product;
- Assess buying effectiveness of the purchasing organization down to the commodity and individual buyer;
- Recognize areas for improvement in the procurement cycle - from requirement identification through purchase order to receipt of inventory and invoice payment - ensuring timely availability of commodities when needed; and
- Analyze expenditures, commodities purchased, vendor performance, process effectiveness, buyer performance, and more.

To be competitive in today's marketplace, organizations are realizing that they not only should embrace the power of e-Commerce, but they should look beyond to c-Commerce (collaborative commerce). C-Commerce identifies the benefit to sharing information with your key partners and suppliers. It identifies the benefit for organizations to leverage the experience and insight of their channels to better understand the supply chain - and gain and sustain competitive advantage.

A user's strategic suppliers have a unique view of the world - not only should they understand a user's business, but they also have a wider perspective of the user's enterprise in relation to competitors. They know what has been working, what is changing within the industry and how new processes are replacing the standard. Through the sharing of insightful information into the procurement analysis 406 functional area, a user's suppliers will be in a position to provide recommendations on purchasing policies, commodity substitutions, and process enhancements - all aimed at improving the efficiency of the supply chain, the effectiveness of buying practices and their role as a strategic partner. They will also benefit from an understanding of how their performance as the user's supplier is meeting expectations, and where they can focus on ensuring they maintain preferred supplier status.

Ultimately this empowers the Purchasing manager to better plan and forecast demand requirements, while identifying opportunities to benefit most from the organization's buying power, and eliminating inefficiencies in the process of acquiring the commodities needed to make the business run. This enables the Procurement organization to buy what is needed at the best price, while ensuring a stable supply, all done as efficiently as possible.

The procurement analysis 406 functional area (or EBI solution) enables purchasing to optimize and enhance the supplier relationship chain by allowing users to share key buying information such as:

- Corporate buying patterns and annual purchasing volumes by commodity;
- Commodity price analysis;
- Distribution of expenditures across the supplier base;
- Supplier performance including on-time delivery, product quality, full order fulfilment and price variation; and
- As well as other valuable information which will bring a user's company and a user's key partners and suppliers closer together and ultimately improve the supply chain.

The procurement analysis 406 functional area provides information for analysis and decision making at various management levels within a company's material management organization.

One objective of the procurement function may be to secure a reliable supply of quality product to meet the material requirements of both internal and external customers - all at the lowest total cost of ownership. Effective purchasing organizations focus on sourcing from a consolidated buyer list to maximize corporate leverage, and adopting policies that automate repetitive processes. Ultimately, the realization of procurement's impact on supply chain management has placed focus on purchasing to understand the effects of the buying decision across all organizational processes - from inventory to manufacturing through sales and service.

To accomplish their objectives, purchasing managers should have information. They should know what is being bought, from where, for whom, for how much and how effectively. To ensure that the source of supply is secure - they also should know how reliable the supplier base is and who the strategic vendors are. Finally, these managers should ensure that the processes and policies that have been adopted are efficient in delivering the required supply, and this also requires the availability of key process information.

Managers should understand how the combination of all these variables impact their ability to meet the purchasing policy and strategy - and ultimately how effective current plans and processes are in contributing to the corporate mission aimed at returning the greatest value to its stakeholders.

The procurement analysis 406 functional area provides the comprehensive analysis used for:

- Ensuring timely availability of commodities when needed;
- Maximizing buying effectiveness through realization of full leverage potential across commodities;
- Identify opportunities for development of strategic buying relationships;
- Increase customer satisfaction through meeting demand and delivery of quality product;
- Assess buying effectiveness of the purchasing organization down to the commodity and individual buyer;
- Recognize areas for improvement in the procurement cycle; and
- Analyze expenditures, commodities purchased, vendor performance, buyer performance.

The procurement analysis 406 functional area delivers the robust in depth reporting and analysis used to answer the questions that deal with:

- The identification of commodity buying volumes and trends;
- Source list analysis;
- Pricing analysis;
- Vendor performance scorecarding and comparison; and
- Procurement cycle analysis.

The procurement analysis 406 functional area delivers information to answer these questions and with the depth and breadth of content to meet the needs of managers at all levels of the organization, which includes:

- High-level executive and senior management strategic analysis examining the performance of the corporate procurement function and effectiveness of the process in achieving functional objectives against baseline, current period and monitor changes over time;
- Purchasing managers require both strategic and tactical analysis targeted at understanding the effectiveness of plans, distribution of purchasing budget across commodities and vendors, and efficiency of the purchasing process and resources; and
- Buyer level commodity specific reporting for analysis of vendor and material purchasing volumes, vendor performance, and price analysis.

The procurement analysis 406 functional area offers purchasing managers a robust source of information for the effective management of the procurement process as it relates to commodities being sourced, supplier relationships, understanding internal demand, monitoring the efficiency of the process, and enhancing planning and forecasting.

Figure 6 shows the procurement analysis 406 functional area. The procurement analysis 406 functional area is linked with the dimensions 112 for the purpose of reporting and analysis. The procurement analysis 406 functional area may use the cost center 322, quotation activity document 331, purchase order activity document 332, requisition activity document 333, contract activity document 334, procurement document class 335, vendor 336, material 337, customer 338, employee 339, organization 340, plant 341, all time (time, fiscal) 348, unit of measure 349, unit of measure conversion 351, procurement status 356, release strategy 357 dimensions. The relationship between dimensions and fucntioanl areas are shown in Figure 6 by way of connecting lines 390.

The procurement analysis 406 functional area may include the following: material expenditure analysis 460, material demand analysis 461, procurement vendor analysis 462, procurement process effectiveness analysis 463, and procurement organizational effectiveness analysis 464. Other areas of analysis may be added, such as bill of material analysis, and e-procurement analysis. In this example, this functional area relates to 180 business questions, 139 KPIs, 15 dimensions, and 35 reports.

A responsibility of the purchasing department may be to buy product in sufficient supply to meet demand. However, it is no longer sufficient to simply fulfil orders as requested. To ensure that it continues to deliver maximum value to the organization, the procurement function should have a deeper understanding of "what is being bought". They should know what materials make up their material list and how they contribute to respective bill of materials, how each compares in volume and value, and where there are opportunities for consolidation or substitution.

This deeper level of understanding can take purchasing from a transaction processing function to one that works to improve the supply chain - and is considered a contributor to corporate competitive advantage. Once armed with the information which comes from multidimensional analysis, purchasing managers and buyers alike are in a position to identify opportunities for efficiencies in buying, and ultimately maximizing their organization's commodity specific buying power.

To effectively manage commodity related purchasing profiles, managers should have information that delivers a view of purchasing patterns by material from various viewpoints. The procurement analysis 406 functional area delivers this information, answering questions that include:

- What materials has the procurement organization purchased this period? In what volumes? What is the total value? What is the total landed cost of materials purchased? How does this compare to the previous period? How has this changed over time?
- How is the total landed cost of a commodity distributed across cost of the unit, transportation, tariffs and other carry costs? How has this changed over time?
- How has the procurement budget distributed across materials purchased in a period? How is it distributed across material groups or material types? How are materials distributed in an ABC analysis - which materials consume the largest proportion of our budget? Which materials consume the smallest portion of the budget? How does this compare over time?
- How many items are carried on the material list? Has this increased or increased over time? Are there opportunities for consolidation or substitution to maximize buying power?
- How have volumes ordered and prices changed over time for a given commodity? How has it changed across a material group? How has this changed over time?
- How are purchases of materials distributed across buyers? What percent of materials contribute to the volume being processed by a buyer? How do the volumes of materials purchased compare across buyers? Are there opportunities for consolidating the purchasing of materials across buyers?
- How have materials performed in the process? Which have been the most reliable? Which have been least reliable? How does quality compare across product? Across product groups? How has this evolved over time?

The material expenditure analysis 460 assists with the following functions:

- Analyze total purchases and distribution of expenditures and volume;
- Comparative evaluation of material related expenditure over time, rank on annual dollars spent and units purchased; assess distribution of single commodity purchases across vendors;
- Profile material list; division of spend, source list, ABC analysis; monitor changes in price, total landed costs, fluctuations in number of items carried; and
- Assess transaction history (summary and detail) by materials and material types.

Sample material expenditure analysis 460 KPIs include:

- Number and value of units purchased; and
- % of total material purchases.

Before anything is bought, the purchasing department should understand what is required, when it is needed, and what the options are for meeting future demand of the internal customer. An understanding of whether requisitions are related to MRO (maintenance, repair and operations) functions, manufacturing jobs, or other types of order fulfilment, can impact the buyers strategy for sourcing the right product at the best price. It is also useful for the purchasing professional to understand the demand patterns for specific commodities and the frequency and size of requests being submitted from internal customers.

Commodity demand analysis may provide the information used for effective planning of a purchasing strategy, managing current commodity requirements and optimizing the "buy" phase of the process. The procurement analysis 406 functional area addresses questions regarding demand analysis which include:

- What commodities have been requested by internal customers this period? How do these purchases translate into particular commodity groups? How does this compare to the previous period? How has it changed over time?
- What types of request have been processed by our purchasing organization (ex. MRO, manufacturing job orders, MRP)? What is the volume of commodities or commodity groups processed by period for each type of request? Are there patterns that identify opportunities for efficiencies? How has this changed over time?
- What percent of the buying budget is spent on each respective demand channel to meet their material requirements? How does this compare to the previous period?
- How is each buyer's activity distributed across respective demand channels? Are there opportunities for redistribution of responsibility?
- Are there patterns of different demand channels ordering similar commodities? Does this present an opportunity to synchronize requirements across channels for consolidated buying? Are there opportunities for substituting materials internally to increase buying leverage?

The material demand analysis 461 assists with the following functions:

- Analyze commodities trends by internal customers, request types (MRO, job orders, MRP); evaluate material list-dollars spent and volumes purchases;
- Evaluate the proportion of buying budget spent on each respective demand channel, and monitor changes over time; and
- Assess buying patterns attributed to customers and identify opportunities for efficiencies in process; consolidate like demands to fewer vendors for increased buying leverage.

Sample material demand analysis 461 KPIs include:

- Dollars spent and units purchased (as % of total) by cost centre; and
- Transaction type counts and average value by cost centre.

As mentioned, for the purchasing function to deliver maximum value there should be an understanding of what has been bought (i.e., the commodity related purchasing profile). Similarly, another key area of analysis that is required by procurement professionals is that of answering the question "Who are we buying from?"

A characteristic of industry leaders with superior supply chains is the consolidation of source lists to single or sole source scenarios for particular key commodities - this ensures that organizations are maximizing their buying power for specific or groups of materials with the supplier base. Related is the fact that these key vendors are more than simple suppliers of materials - they are considered strategic partners of the organization. Strategic suppliers are those who have proven the ability to supply the products used within specifications at a competitive price, and are also in a position to deliver insight into the supply chain.

Ultimately, the purchasing function's understanding of "who" the budget is being spent with provides insight into:

- Who the company is doing business with;
- Where are there opportunities for source consolidation;
- Potential points for leveraging an organization's full buying power; and
- Subsequent efficiencies in the buying and release processes.

Vendor related expenditure profile information plays an important role within the purchasing function, and procurement analysis 406 functional area delivers analysis to answer questions that include:

- Which vendors has the procurement organization purchased from this year? How many vendors does this include? How does it compare to last period? How has it changed over time?
- What commodities are purchased from a vendor? For a group of vendors? How many materials are purchased from a vendor? On average how much is spent per vendor in a specific period? What is the average volume purchased from a vendor?
- Which vendors does the company purchase the most from? How do vendors rank by volume and revenue spent? How does this compare to last period? How has this changed over time?

- How many vendors does the company have for a specific commodity or groups of commodities? What percentage of the volume for the commodity is sourced from multiple suppliers? How has this changed over time?
- How do prices compare across vendors for a specific commodity? How has this varied within the period? Across periods?
- What contracts are outstanding? What is total value of contracts with vendors in a year? Across vendors? What percentage of purchasing agreements are fulfilled within a period? How has this changed over time?
- What terms are offered by suppliers (ex. payment terms, deliver)? How do purchasing terms compare across vendors? How much has been spent with a particular vendor for additional charges to receive the good ordered (ex. Inco terms, FOB terms, transportation charges)?

The procurement vendor analysis 462 assists with the following functions:

- Comparative evaluation of vendor related expenditure over time, ranked on annual dollars spent and units purchased (commodity);
- Profile vendors by specific material list, and by internal/external customers drivers;
- Track price per unit changes;
- Identify opportunities to consolidate vendor list to sole or single source; assess potential for redistribution of spend based on performance; and
- Assess transaction history (summary and detail) by vendor and across vendors.

Sample procurement vendor analysis 462 KPIs include:

- Dollars spent with vendor, % of total dollars spent;
- Units purchased, % change over time; and
- Count of materials purchased from vendor.

The efficiency of the procurement function can be a component of corporate effectiveness. Essentially, procurement is expected to source the goods used for the least investment in overhead. Hence, it is understood that to deliver maximum return through the purchasing cycle involves the elimination of non-value adding steps - which can range from streamlining the activities required to release a purchase order to the pattern observed in buying from particular vendors.

Procurement managers should have information that examines the steps in the purchasing process, the time required to move through the cycle and the efficiency within each phase of the cycle. Information that presents understanding of the process and opportunities for improvements translates into a decrease in the cost of acquiring the necessary materials, which in turn translates into increased profits.

The data warehouse 100 system provides procurement managers with a cross-functional view of the process, used to identify opportunities for efficiencies, addressing questions that include (Note: Part of the measurement of process effectiveness analyses the time between activities and between organizational functions. Some of the questions listed below are cross-functional in nature, and are addressed in the data warehouse system with inventory analysis, procurement analysis and AP analysis):

- How many transactions are performed in a period for various stages in the procurement cycle? How do these volumes compare to the total level of purchases within a period? How many requisitions, contracts, purchase orders are processed across the organization? How do these relate to specific purchasing groups or buyers? How does this relate to specific commodities? What is the average value of each transaction? How does this compare to the previous period? How has this changed over time?
- How long does it take to move from one stage to the next in the procurement cycle? How long does it take to go from requisition to a purchase order? How does a release procedure impact the time to request a product? How do processing times relate to specific materials? To specific vendors? To specific buying groups? Where are the opportunities for reducing ordering lead time across commodities?
- What percentage of requisitions submitted are declined? What are the reasons for rejection? How does this compare across buyers? How does this compare across commodities? How does it compare across demand channels?

The procurement process effectiveness analysis 463 assists with the following functions:

- Evaluate various stages of the procurement process; requisitions, vendor selection, purchase orders and contracts (average dollars and units, transactions);
- Identify opportunities to streamline purchasing process

- eliminating non-value adding steps;

- Evaluate the efficiency of corporate release procedures in ensuring timely orders; and
- Analyze time and efficiency in passing through purchasing cycle phases, and how it has changed over time

Sample procurement process effectiveness analysis 463 KPIs include:

- Average PO and contract values;
- % of POs/Contracts used;
- Days from Requisition to PO; average days by release procedure type; and
- Ratio of Requisition to POs.

Once an organization has determined what the material requirements are and which vendors will provide the supply, purchasing should ensure that the vendors who have been identified as strategic are performing within the acceptable standards. Reliable suppliers contribute to the overall performance of the supply chain, ensuring that an organization is able to meet the demand of its customers. Conversely, suppliers who are not delivering on their promises can cause inefficiencies due to poor product quality, delays in production, and/or price fluctuations.

To effectively evaluate vendor performance, purchasing management should monitor its strategic suppliers' ability to meet expectations in the areas of:

- Quality of product delivered;
- On-time delivery;
- Full deliveries of quantity ordered; and
- Price competitiveness, accuracy and fluctuations of commodities purchased.

These measures as part of a vendor scorecard provide procurement professionals with the measuring stick used to ensure that the current source list is meeting their obligations. Suppliers who are successful in meeting these expectations are those who can be counted on to enhance the supply chain through their reliability, and their ultimate impact in lowering the total cost of ownership. Conversely, suppliers who are not performing would benefit from having access to performance information to allow for improvement. Alternatively, the organization can use the scorecard to identify where changes in the source list are required.

The data warehouse 100 system delivers vendor performance scorecard analysis that can be used to evaluate specific suppliers or compare vendors across the organization, answering questions which include (Note: Vendor evaluation as it applies to the procurement process requires input from across functional areas, which include purchasing, inventory management and AP. Most of the questions addressed below are cross-functional in nature, and are addressed in the data warehouse system in inventory analysis, procurement analysis and AP analysis):

- Has a vendor been successful in delivering orders on time? If not, what percentage of orders are typically late? On average how late are the orders? Are late orders commodity specific? How does this performance compare across vendors? Were late deliveries within expectations? What has the trend been over time?
- Of the deliveries received from a vendor, how many were delivered with inaccurate quantities? On average what was the discrepancy in quantities received from a vendor? How does this compare across commodities sourced from the vendor? How do vendors compare in their ability to deliver accurate quantities?
- What percentages of materials received from a vendor have met quality standards? How many units were returned at receipt? How many were rejected on the production line? How do returns compare as a percent of units received? How does this compare across vendors for a specific commodities? How does it compare for a vendor across all commodities sourced? How has this changed over time?
- How do prices compare for a commodity across vendors who supply the product? How have the prices changed over time? What was the percentage change of prices for the commodity over time?
- How effective have vendors been in invoicing materials at prices agreed upon on the purchase order? What percentages of invoices received contain inaccurate pricing or add-on charges and require correction? How does this compare across commodities provided by a vendor? How does this compare across vendors?

The procurement organizational effectiveness analysis 464 assists with the following functions:

- Evaluate buying organization effectiveness; rank buyers by dollars, volume, percent of budget controlled, stability of price and source, and quality of vendor relationships managed;
- Identify opportunities to consolidate buying from across buyers based on commodity or vendor-centricity; and

- Analyze buyer performance and assess whether there is a requirement for redistribution of activities.

Sample procurement organizational effectiveness analysis 464 KPIs include:

- Total dollars per buyer control (as percent of total);
- Count of materials per buyer (as % of total);
- Total number of vendors per buyer; and
- Transaction processed counts by employee (trend).

An e-procurement analysis may assist with the following functions:

- Analyze the activity level with e-procurement channels; monitor materials and material group purchases (units, $ volumes);
- Comparative analysis of and purchasing trends between e-channels and traditional channels; analyze the proportion of purchases between channels and "channel convergence" over time;
- Analyze process efficiency in e-channel and compare to traditional channel;
- Assess which commodities are best suited for e-procurement channel;
- Consolidate vendor purchase activity from across multiple channels; and
- Evaluate success of migrating purchases from traditional to e-channel.

As has been illustrated, the procurement analysis 406 functional area delivers key information used by management to effectively analyze the performance of an organization's procurement function. However, the procurement cycle is cross-functional in nature. The procurement process ranges from the receipt of material requirements to the issuance of requests for proposals and purchase orders, through to the receipt of goods and confirmation and payment of invoices. To truly understand the impact that procurement has on the organization's competitive advantage, this cross-functional view is used, which includes information from:

- Purchasing: The purchasing function provides the information used to analyze activities related with receipt of requirements (requisitions), maintaining a source list, managing contracts and issuing purchase orders. The purchasing function provides key information on the activity of vendors and commodities as they relate to the organization.
- Inventory Management: Inventory management works hand-inglove with the purchasing function; both are tasked with ensuring there is sufficient supply of materials when they are needed. In particular, Inventory management provides the information used to evaluate vendor performance on measures relating to goods receipt - "How effective have the suppliers been in delivering what we asked for, of an acceptable level of quality, on time?"
- AP: AP provides information on the final stages of the procurement cycle, answering the question of what has the company been invoiced, and what has the company paid for materials purchased within the period. Like inventory management, AP provides key measures in assessing vendor performance. As part of the "three way verification" process (i.e., the check of prices and quantities across purchase orders, goods receipts and invoices), AP ensures that we are invoiced for what was received at the prices negotiated. The effectiveness of the vendor meeting these requirements establishes the cost of doing business with a supplier in the purchasing cycle.
- Human Resources and Finance: As a measure of efficiency, Human Resources (HR) and Finance identify the resources used to perform the purchasing function. HR provides information on the "head count" used to perform the purchasing function for specified levels of buying activity. Ideally, the same head count should be able to process larger volumes of activity due to efficiencies and automation of the process. In a similar sense, Finance identifies the procurement related overhead costs that are incurred in meeting the demand for materials - the less the better. Overhead and head count measures are used for gauging the effectiveness of the purchasing function and its processes.

The data warehouse 100 system through the use of confirming common dimensions (ex. vendor, materials, etc.) ensures that the reporting within each functional area as delivered by inventory analysis 405, procurement analysis 406 and financial (general ledger) analysis 403, are robust, while provide the ability to report across applications. The design for integration across the data warehouse system allows for a view of information across functions - hence ensuring that procurement professionals truly see the impact across the process.

e-Commerce Analysis

The Internet has given customers a new level of power and has blurred the differences between companies vying for their business. In the e-business world, a key to closing more deals, closing bigger deals, and closing them faster is to build strong customer relationships. To do that, companies should have the right information, facts, and insight. They should spot top prospects and move quickly with solutions that hit the mark. They should have the power to analyze trends, avert bottlenecks, and put resources where they are required most.

An e-commerce analysis functional area may help turns raw data into increased sales. Companies can select from a host of key performance metrics and decision-ready reports that enable them to analyze the who, what, when, where, why's of their e-commerce activity, and examine revenues and profitability. They will be able to evaluate the effect of buying incentives such as discounting to increase volumes, or induce cross-sell or up-sell behavior. They will be able to identify or target new or repeat customers to identify trends and capitalize on opportunities, to increase revenues, minimize costs, and strengthen the e-commerce channel.

Thriving in an electronic marketplace involves embracing e-business and using technology to create, manage, and deliver analytical information. Here are some of the activities that users may be able to accomplish quickly with an e-Commerce analysis functional area:

- Increase customer satisfaction and boost win rates;
- Better understand the buying habits of your customers;
- Refine the way that your company interacts with customers;
- Improve forecasts and budgets; and
- Analyze customers, order types, product groups, etc.

With the increasingly competitive corporate marketplace being further magnified by the Internet, the need to understand, satisfy, retain and grow our customers is greater than ever. This explains the emergence over the past several years of the customer relationship management (CRM) process across industries. The e-commerce order process is a key component of the CRM process, with all on-line touch point activities culminating in the sale of products or services. An e-Commerce analysis functional area may addresses key questions for better understanding the customer behavior - including indicators of customer buying trends, measures of activity and customer profiling.

Companies may use an e-Commerce analysis functional area to:

- provide the information used to make decisions that will keep customers, and generate more revenue;
- Adopt a profit-centric e-commerce model that aligns e-commerce goals with corporate goals;
- Develop more effective planning and forecasting with a big-picture view of the e-commerce function; and
- Analyse e-commerce performance from unlimited perspectives including customer demographics, shopping basket, product group, etc.

An e-Commerce analysis functional area may provides information for analysis and decision making at various management levels within a company's e-commerce and marketing organizations. One objective of the e-commerce and marketing functions may be to plan, execute, manage and monitor strategies and plans (ex. e-commerce strategies, campaigns, and product strategies and management), that are in alignment with the corporate mission and will ultimately return the greatest value to its stakeholders. This involves an understanding of how effective the e-commerce system has been in generating revenue, as well what has contributed to this performance. In their efforts to achieve these objectives, managers within the e-commerce and marketing functions should have a keen understanding of "how things are going" which begins with an analysis of the information being captured in the e-commerce process. An e-Commerce analysis functional area may deliver the information used to answer these questions, with the depth and breadth to meet the needs of managers at all levels of the organization:

- How the e-commerce system is contributing to revenues and profit margins;
- How product lines are performing;
- Who are their most valuable customers, what are their buying trends;
- How efficient the e-commerce process is in generating revenue;
- Strategic analysis examining how marketing and e-commerce strategies have impacted cross-organizational performance, monitor changes overtime to identify trends;
- e-Commerce product and marketing management tactical reporting and analysis targeted at understanding the effectiveness of plans designed to meet corporate objectives; and
- Operational reporting (ex. e-commerce customer buying profile) and process effectiveness.

An e-Commerce analysis functional area may addresses four main areas of analysis within an organization's e-commerce and marketing functions, aimed at assessing the effectiveness of the e-commerce cycle from the e-commerce order forward. These areas of analysis include: e-Commerce performance, customer profiling and buying trends;

buying trends; and product performance.

A measure of corporate effectiveness in marketing its products and services is the question of "How much have we sold?" Managers across the organization should know how revenue, volume and margin expectations are being met. They should know what parts of the organization are delivering on expectations, and how various geographies are performing. These requirements filter down to the e-commerce managers needing to know how they are doing? How their performance is meeting expectations today and over time.

An e-Commerce analysis functional area may deliver information for in depth analysis of e-commerce revenues, volumes and margin across the e-commerce product offering, addressing questions such as:

- How much has the company sold through the e-commerce site this period - revenue and volume? How does it compare to last period? What is the percent increase or decrease? What has been the trend over time?
- What geographies / markets have done well for the company? Where is the company loosing ground? Are the company's high revenue geographies / markets delivering on margin? Is the company seeing the percent growth necessary?
- What day of the week and time of day do the greatest / least number of sales occur?

Organizations should have a clear understanding of who their customer base is, what they want, and how their needs are being met. The emergence of the CRM process across organizations further supports the importance of comprehensive customer analysis. Ultimately the effectiveness of corporate e-commerce and marketing strategies, coupled with quality of product and service should translate into greater "share of customer"- which can be measured by changes in the breadth of product purchased, the volume of products purchase, and changes in contribution to revenue and margin over time.

An e-Commerce analysis functional area may allow for analysis of customer trends and contribution, and changes in buying patterns by demographic or segment. e-Commerce systems capture a rich set of customer demographics such as age, gender, marital status, income, household size and number of children. These demographics provide the opportunity to develop an in-depth understanding of the customer base and the ability to closely examine who is buying what, when and how much. Examples of the types of questions that can be addressed include:

- How many customers are buying through e-commerce? How has this changed over time?
- What is the average revenue per customer? Which customer groups offer the highest total and average revenue contribution? Which groups are contributing most to volume? Most to margin? Have our average purchases per customer been increasing or decreasing over time? Have the number of products being purchased increased or decreased over time?
- Have revenues from a specific customer group been increasing over time - is this an indication of trend - an opportunity? Have the revenues for these groups decreased - and if so is it a product related, or pricing issue?
- Which customer demographic is driving sales? Is there a definite pattern? Is there an opportunity to target a specific customer profile?
- Who are the must active customers? Is there a link between a specific customer profile and those customers that are regular, repeat buyers? Is there a specific customer profile of those that the company is losing after the first purchase?
- Which customer demographic is driving specific product sales? What is the most popular product attribute by demographic? Is there an opportunity to cross-sell or up-sell customer s of a particular demographic?

Knowing the customers and what they want can open a window to view the effectiveness of the corporate product offering. A key component to developing market strategies and product planning is an understanding of the market segments, how the current product offering addresses the customer requirements, and how this has evolved over time. e-Commerce management and their teams also should have analysis that allows them to assess the effectiveness of their operations and how products are contributing to achieving their goals within their markets.

An e-Commerce analysis functional area may deliver product analysis to answer the questions of both the e-commerce and marketing functions, which include:

- What product lines or specific products are we selling? How much revenue are they generating? How have these lines contributed to overall margin? How have these products performed to the previous period? and over time? What has been the rate of change? Which products are emerging as leaders? Which products are experiencing declining share?
- Where have the products been selling? Which geographies? Which customer groups? Rank to show the leading products.

The importance of a company's strong understanding of its customer base and the effectiveness of its product offering has been identified as key. However, if the organization is to deliver on its commitment to maximizing the value delivered to its shareholders, the e-commerce function should extend its contribution to the goal by evaluating the effectiveness of the e-commerce order taking process.

An e-Commerce analysis functional area may provide details on the process ranging from addressing questions on volumes of transactions being processed and various points in the chain to how are resources being allocated. Examples of the types of questions that can be addressed include:

- How many e-commerce orders are being processed per year?
- How does this volume relate to revenue?
- Has this been improving over time?
- What is the cost per sales order transaction of the e-commerce system and how does the cost per e-commerce transaction compare to traditional sales order transaction costs?

Further Information Regarding an Example of a Business Model 110

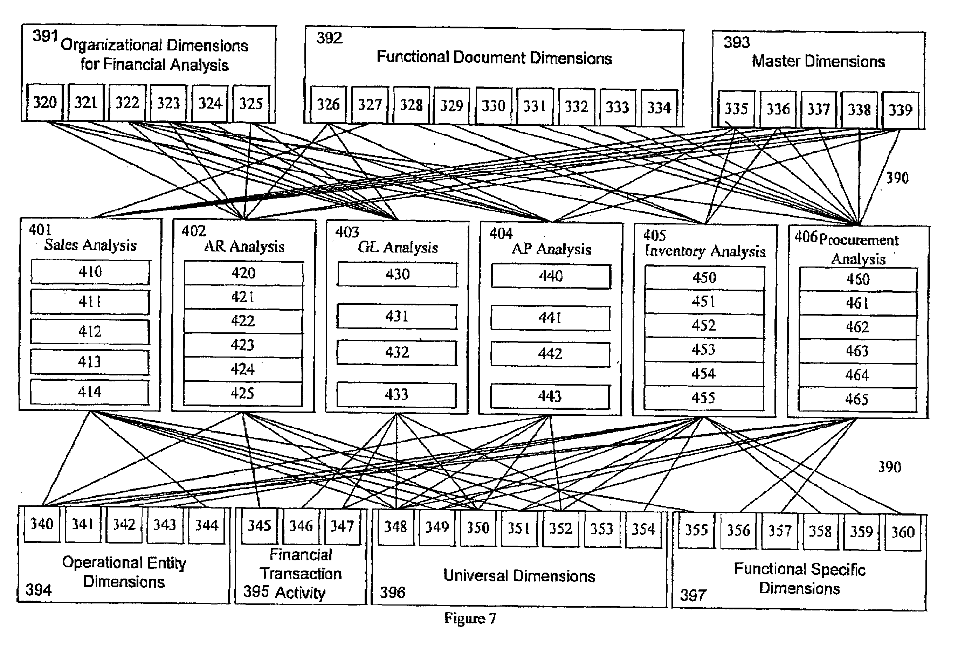

Figure 7 shows a business model 110 where the dimensions are grouped according to the following groupings of dimensions 112: organizational dimensions for financial analysis 391, functional document dimensions 392, master dimensions 393, operational entity dimensions 394, financial transaction activity 395, universal dimensions 396, and functional specific dimensions 397.

The dimensions 112 are linked with the functional areas and areas of analysis for the purpose of reporting and analysis. For example, Figures 6 and 7 show that the sales analysis 401 uses the sales document class 327, material 336, customer 337, employee 338, organization 339, shipping point 342, all time (time, fiscal) 347, unit of measure 348, unit of measure conversion 350, and sales status 354 dimensions. Other functional areas of analysis may use different dimensions. The relationship between functional areas and dimensions are shown in Figures 6 and 7 by way of connecting lines 390.

The business model 110 is extensible and scalable: it may be expanded to include more functional areas, more areas of analysis and more KPIs, measures, dimensions and attributes. Other examples of business model functional areas 202 and their respective areas of analysis 203 include:

Human Resource Analysis

- Payroll Analysis
- Professional Development Analysis
- Recruiting Effectiveness Analysis

Financial Controlling Analysis

- Cost Analysis
- Profitability Analysis

Customer Relationship Intelligence

- Customer Profiling
- Customer Base Demographics
- Marketing Analysis
- Process Effectiveness Analysis
- Customer Satisfaction

Supply Chain Intelligence

- Vendor Scorecarding
- Demand Forecasting Analysis
- Process Effectiveness
- Inventory Status Analysis
- Procurement Activity Profiling

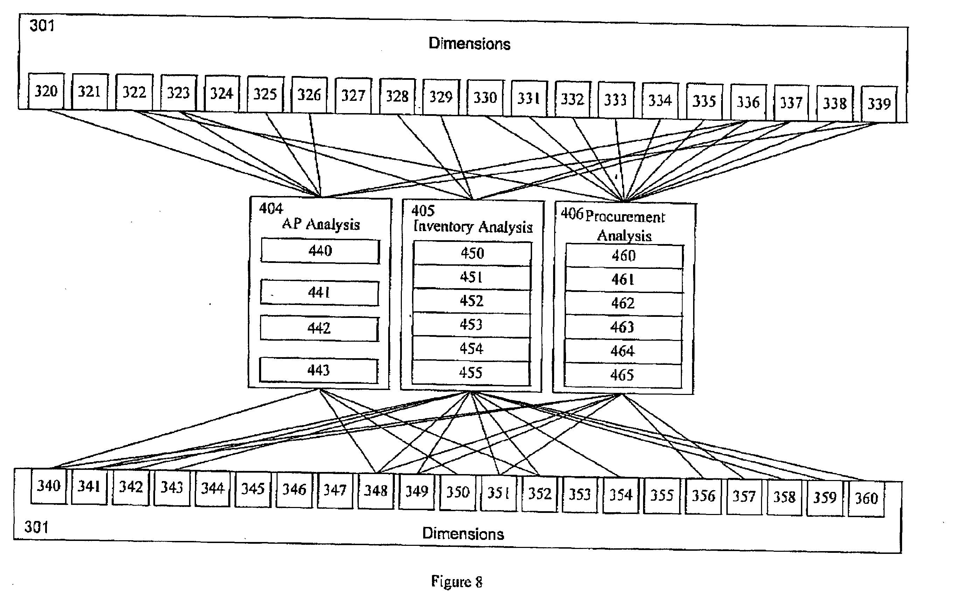

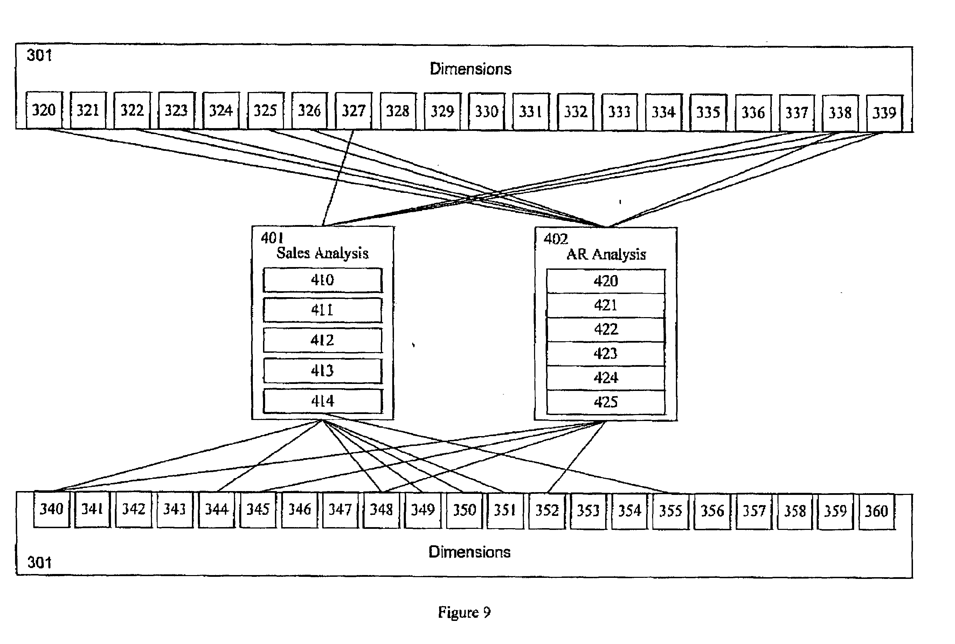

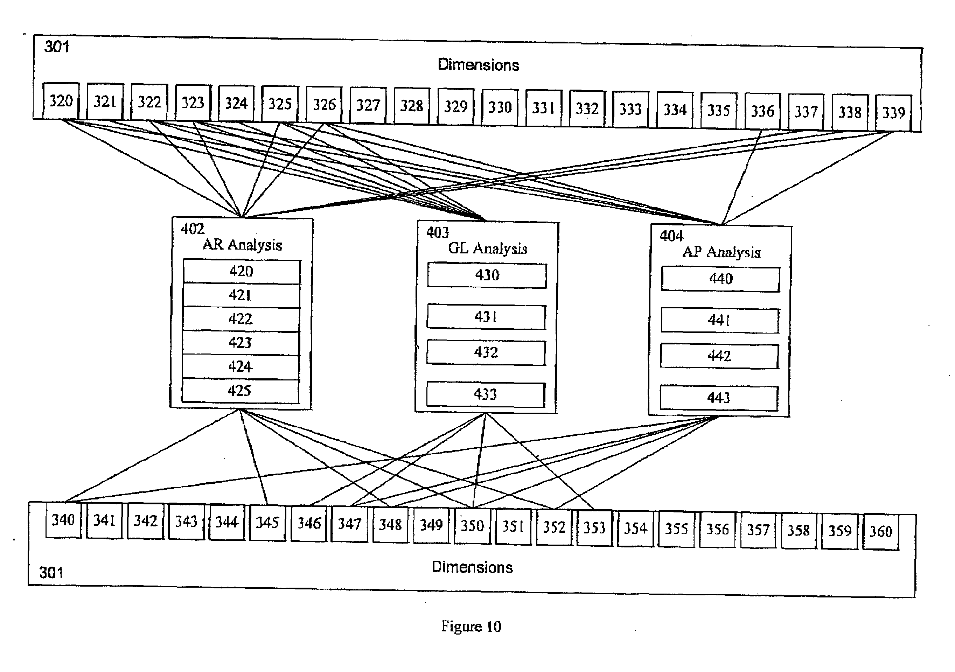

The set of dimensions 112 may also be used with a subset of functional areas 202 or areas of analysis 203 or with other functional areas of analysis. Such examples include cross-functional performance management, among others: supply-side performance management (see Figure 8), demand-side performance management (see Figure 9), and financial performance (or GL) management (see Figure 10). The business model 110 would itself also supports the above areas of cross-functional performance management, among others, including individual functional areas akin to a data mart.

Figure 8 shows an embodiment of supply-side performance management as containing the following functional areas 202: AP analysis 404, inventory analysis 405, and procurement analysis 406. The relevant areas of analysis 203 and dimensions 300 are also displayed in the format of the business model 110 as shown in Figure 6. Figure 9 shows an embodiment of demand-side performance management as containing the following functional areas 202: sales analysis 401, and AR analysis 402. The relevant areas of analysis 203 and dimensions 300 are also displayed in the format of the business model 110 as shown in Figure 6. Figure 10 shows an embodiment of financial performance management as containing: AR analysis 402, GL analysis 403, and AP analysis 404. The relevant areas of analysis 203 and dimensions 300 are also displayed in the format of the business model 110 as shown in Figure 6.

The business model 110 is extensible. As has been described, administrators 21 may add new functional area data marts to further enhance their enterprise analysis and reporting. Administrators 21 may broaden the source data collection points beyond the ERP 10 system to gain a more complete view of the enterprise and customer relationships. Components of the data warehouse system 100 are also designed for high scalability. Organizations may also increase the number of users that the system supports, accommodating corporate expansion without the growing pains.

The areas of analysis in the business model 110 exemplified above may each be one of a series of prepackaged data marts aimed at meeting the market demand for cross-functional business intelligence (BI) against data held within corporate ERP 10 systems and other sources of data within the enterprise. Each component contributes to the core functional information requirements of an enterprise, taking its place within the data warehouse system 100 "backbone" which is comprised of data marts targeting other core data including sales, distribution, billing, inventory, financial and cost accounting, and human resource management.

The sales analysis functional area 401, AR analysis functional area 402, GL analysis functional area 403, AP analysis functional area 404, inventory analysis functional area 405, procurement analysis functional area 406, and e-commerce analysis functional area questions listed above represent a sampling of the type of valuable information available in the respective analysis of the data warehouse system 100, information that business professionals desire to effectively manage their roles and responsibilities. The questions address the desire for information regarding the following:

- sales, shipping and billing portion of the sales cycle;
- demand for information regarding the organization's ability to meet collection expectations, customer profiling, and analyst performance;
- demand for information regarding the GL;
- demand for information regarding the organization's ability to meet payment expectations, vendor profiling, and analyst performance;
- demand for information regarding the investment in stock, process effectiveness, use of resources, and the effectiveness to meet the demand of internal and external customers;
- demand for information regarding the commodities purchased, vendor activity and performance, analysis of internal demand; and
- the demand for information regarding the e-commerce order taking process of the e-commerce cycle.

It should be noted that more analysis is possible. The multi-dimensional nature of the sales, AR, GL, AP, inventory, procurement and e-commerce analyses components, along with the power of business intelligence tools, offers robust analysis around any single question, further expanding the knowledge gained from the data extracted from the source ERP 10 system.

The Data Model 120

The following will describe an embodiment of this invention using a star schema. It should be noted that this invention is not limited to a star schema data model. The invention may be applied to other types of data models.

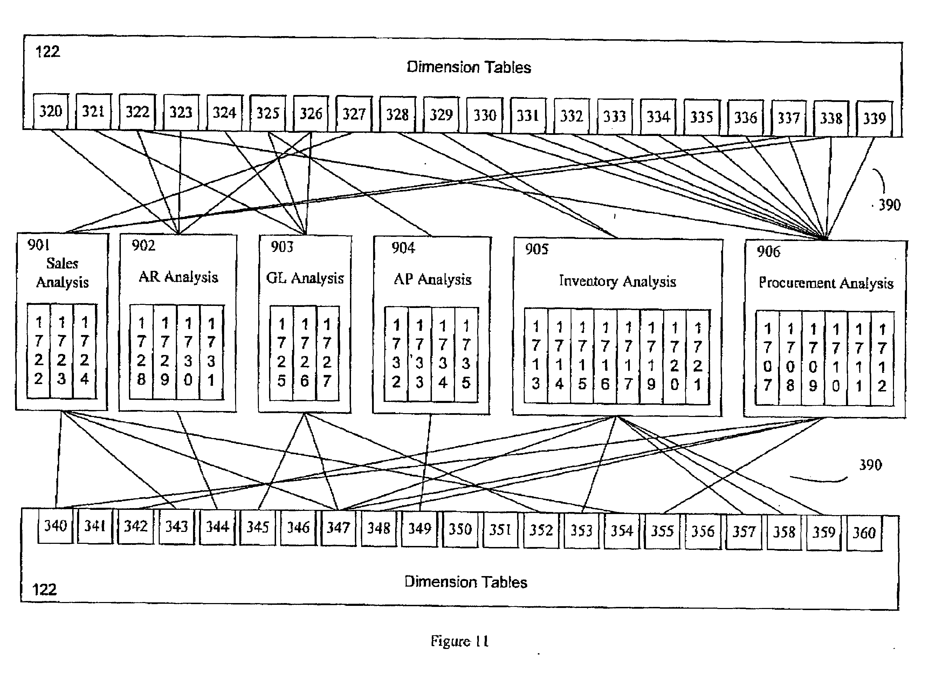

Figure 11 shows an embodiment of a data model 120. In this embodiment, the data model 120 implements the business model 110. The data model 120 includes a set of dimension tables 122 corresponding to the dimensions 112 of the business model, and fact tables 121 which are analogous to the functional areas 202 of the business model 110. The fact tables 121 may relate to a data mart, multiple data marts, or an integrated data warehouse. Furthermore, the configurable dimensional framework allows for more fact tables 121 to be added to the data model 120.

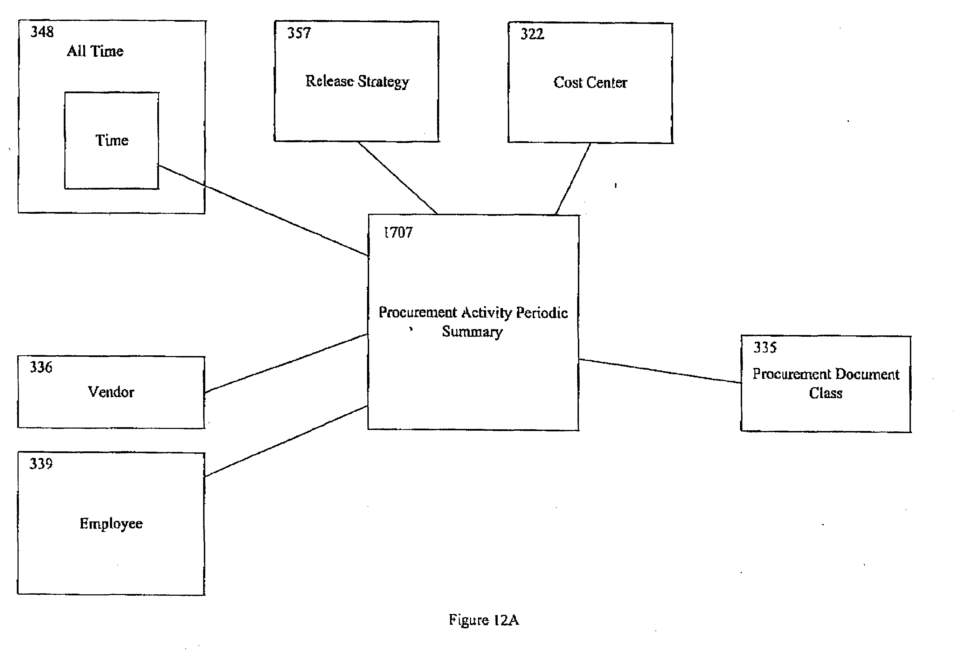

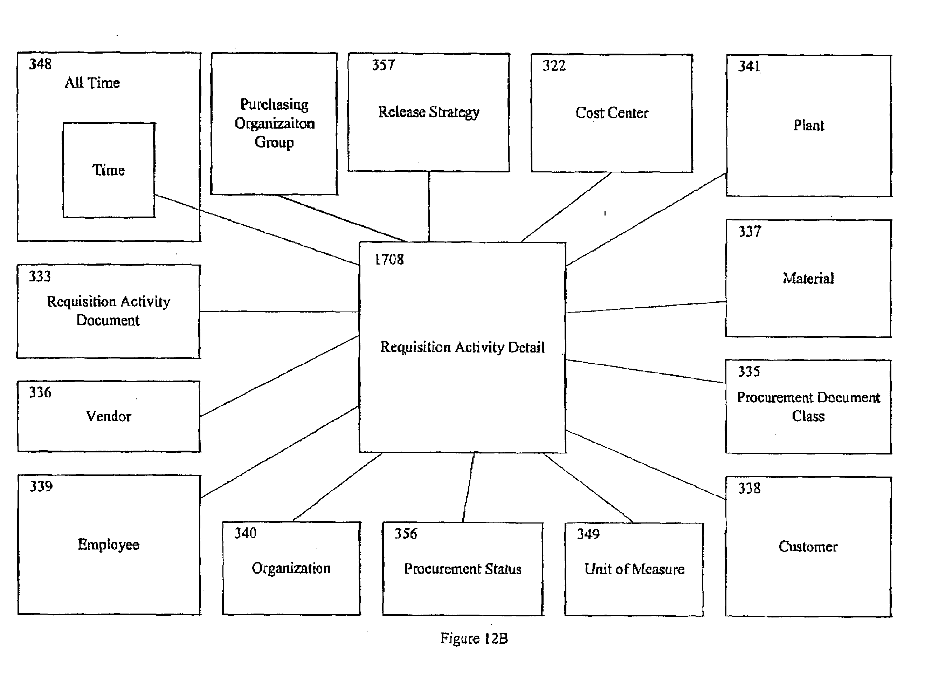

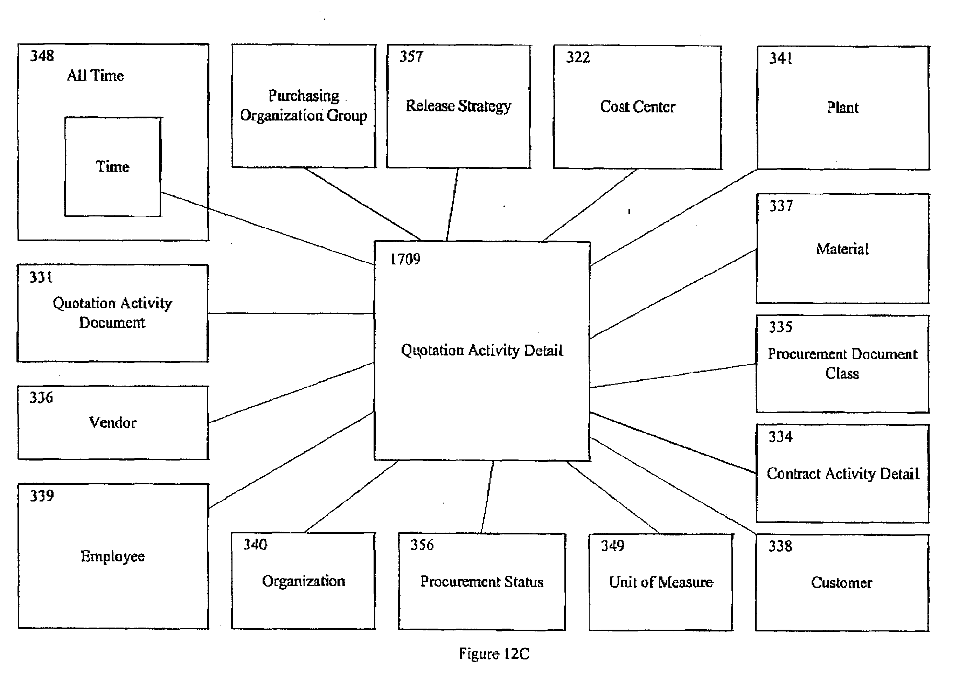

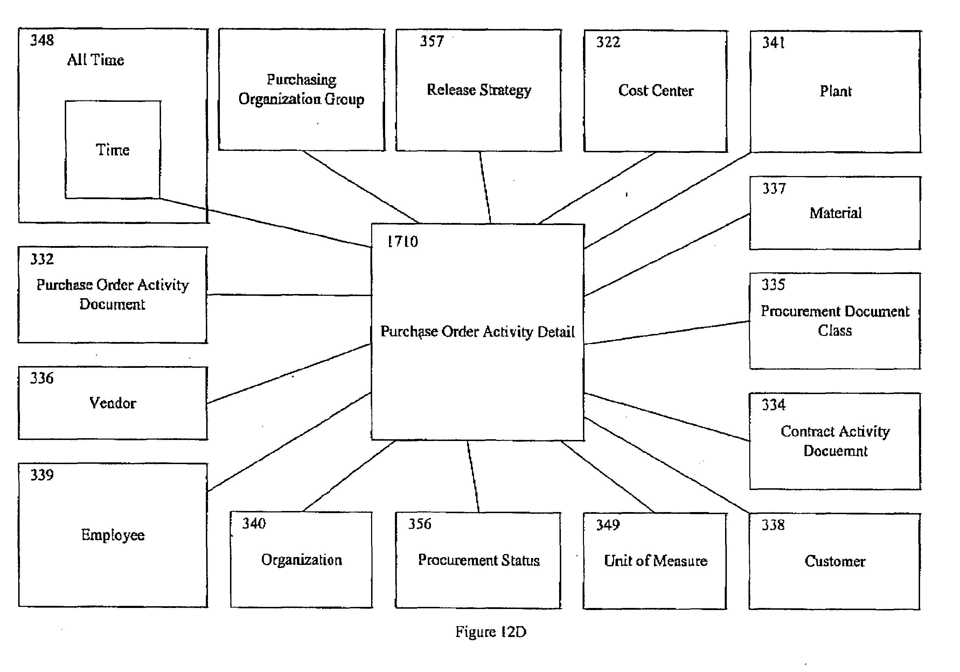

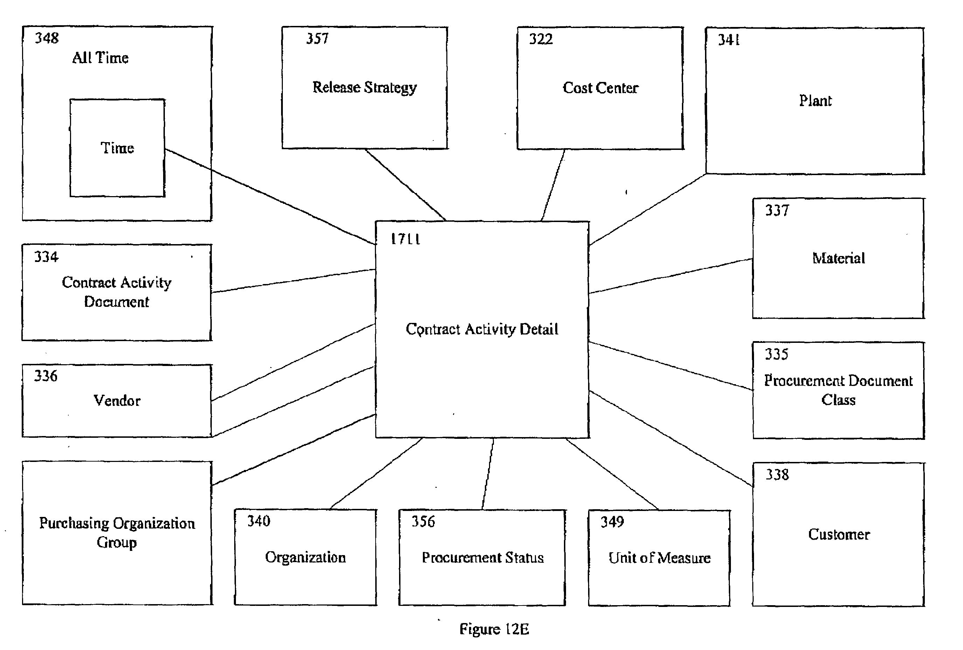

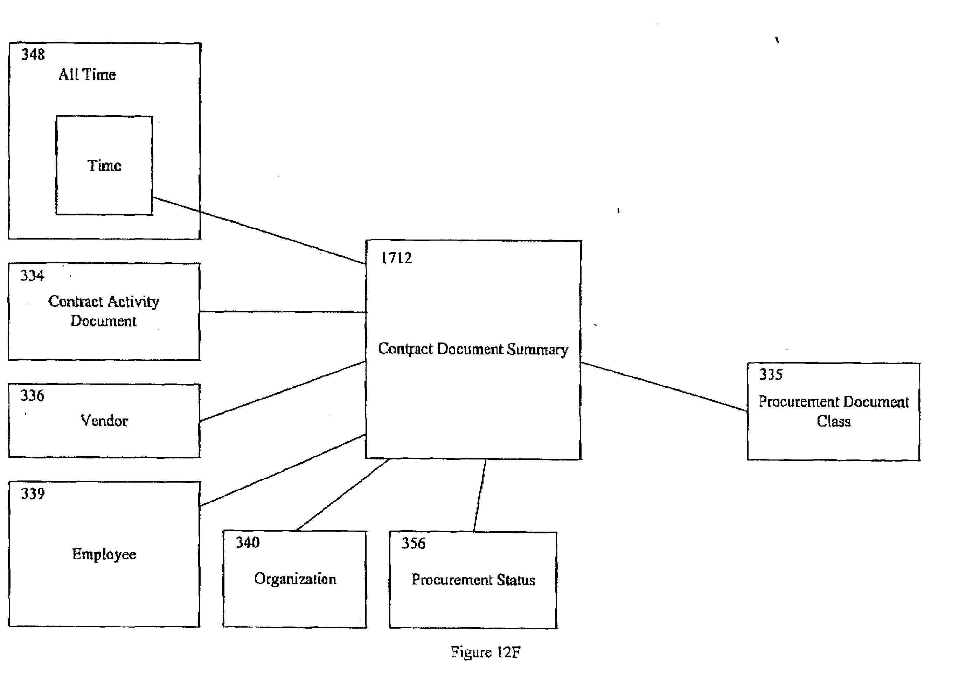

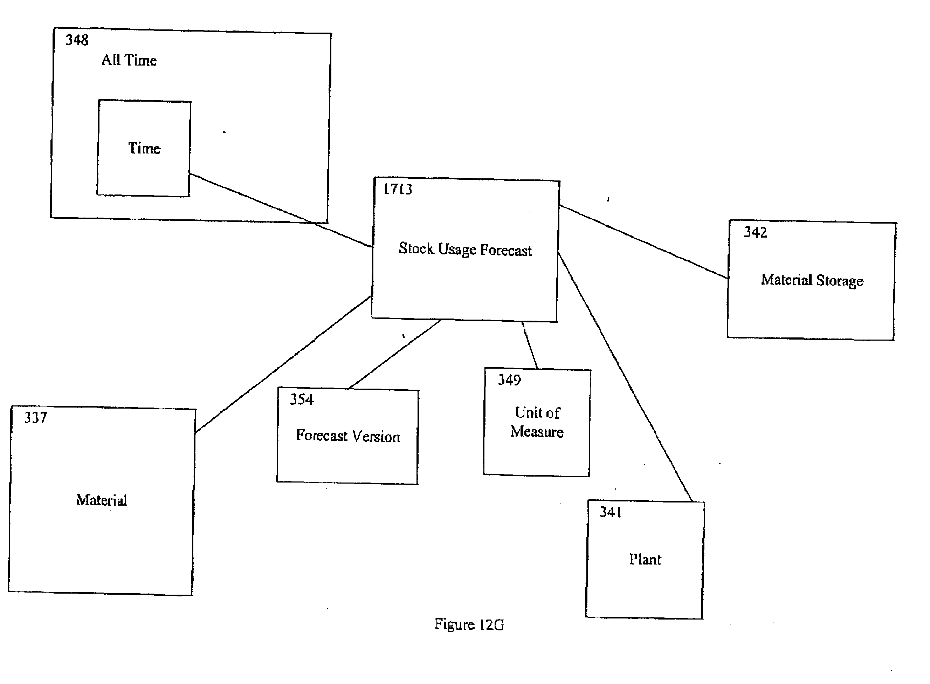

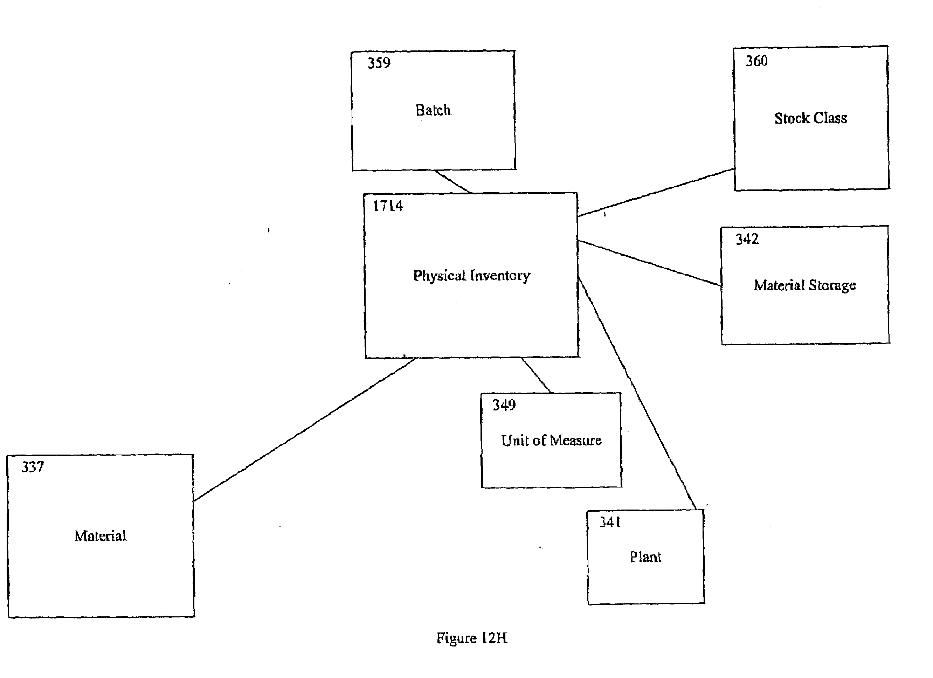

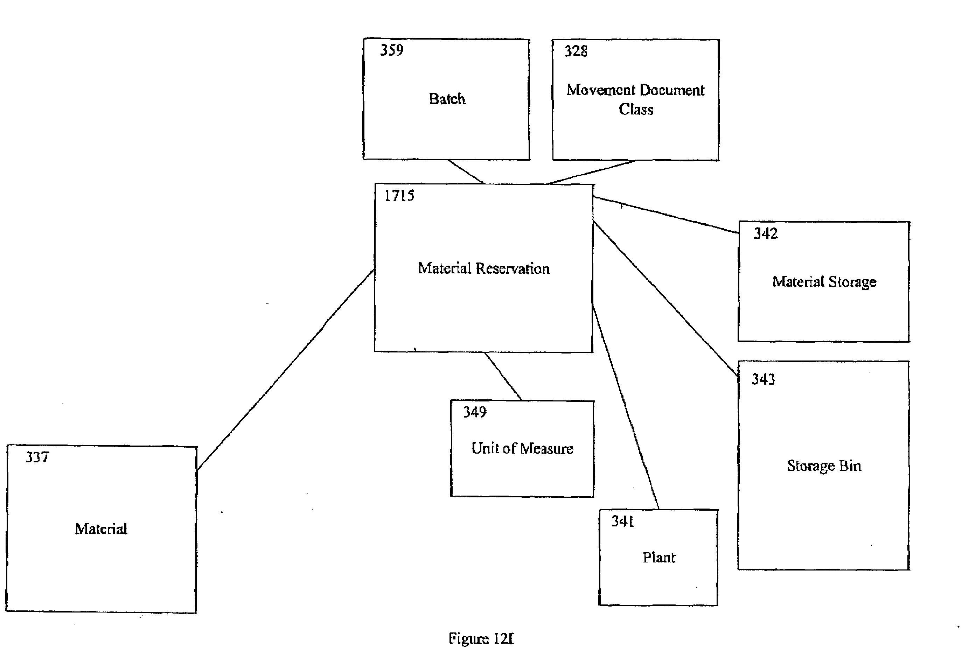

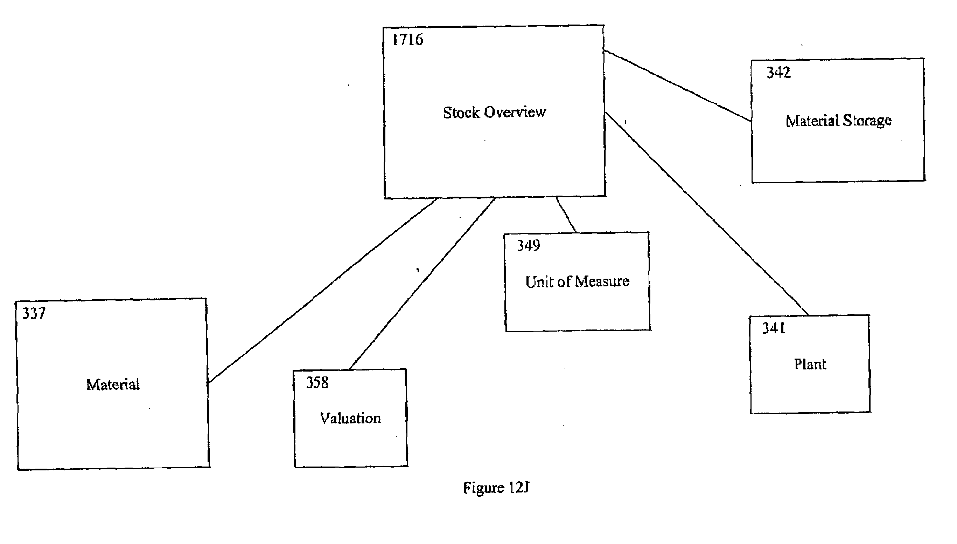

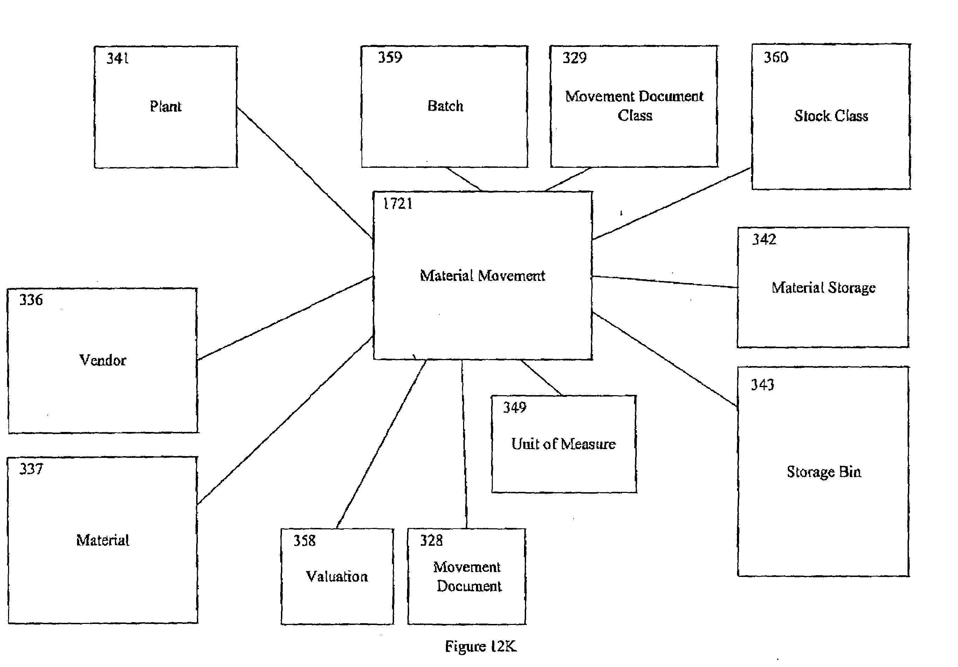

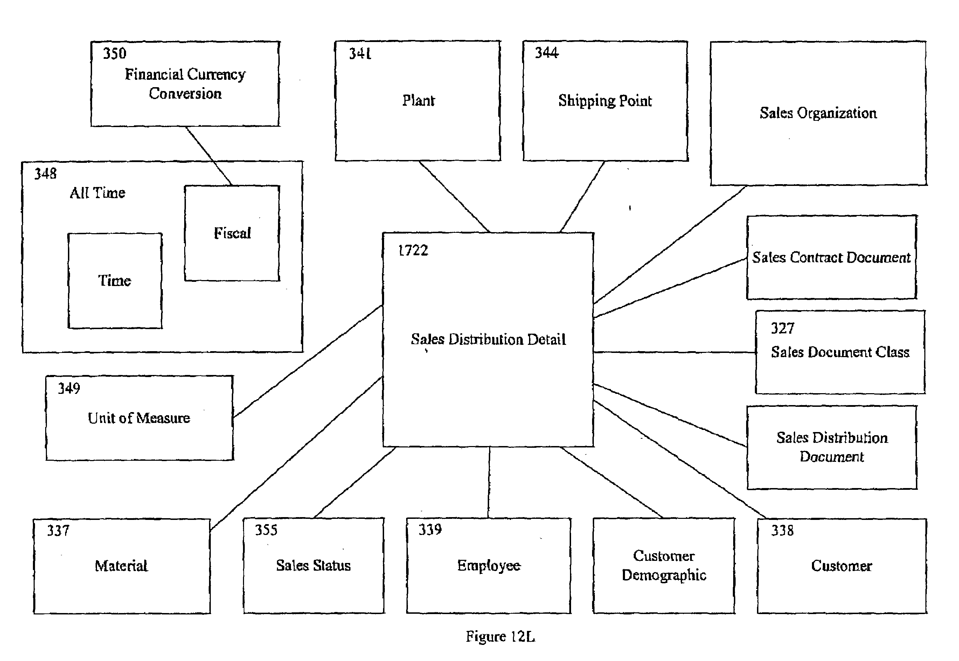

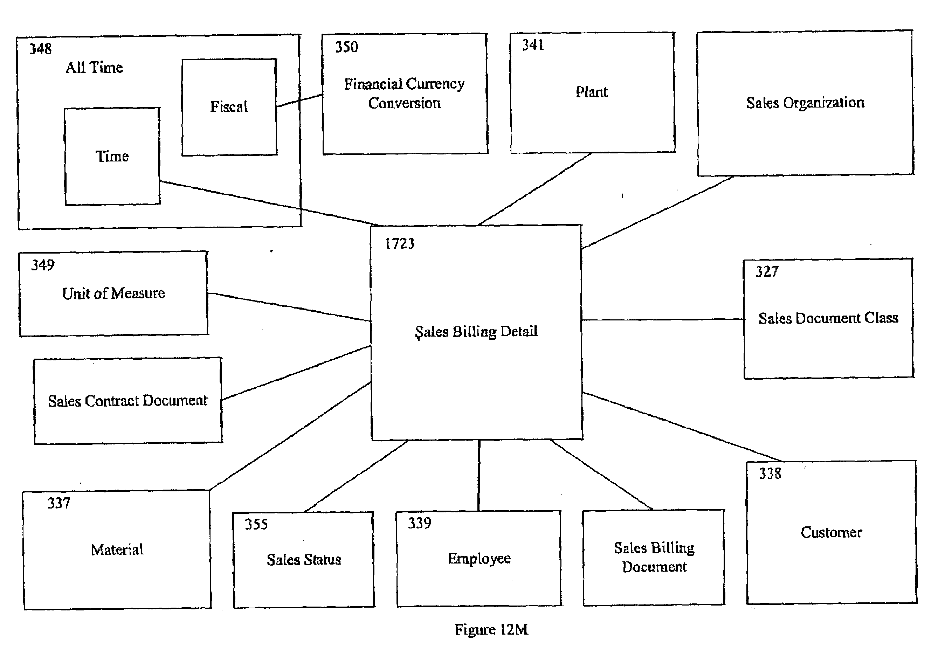

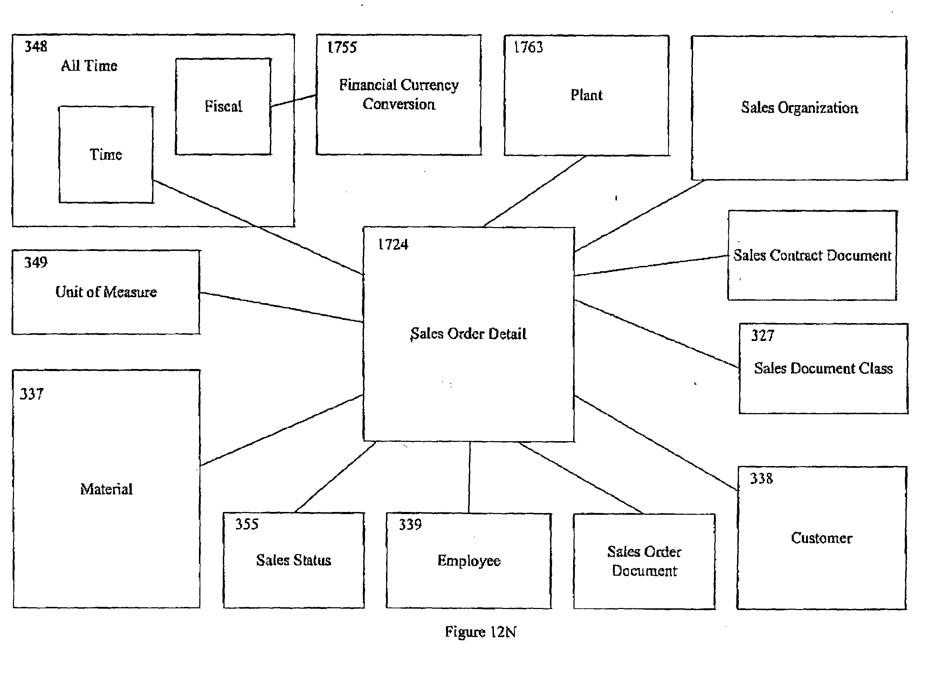

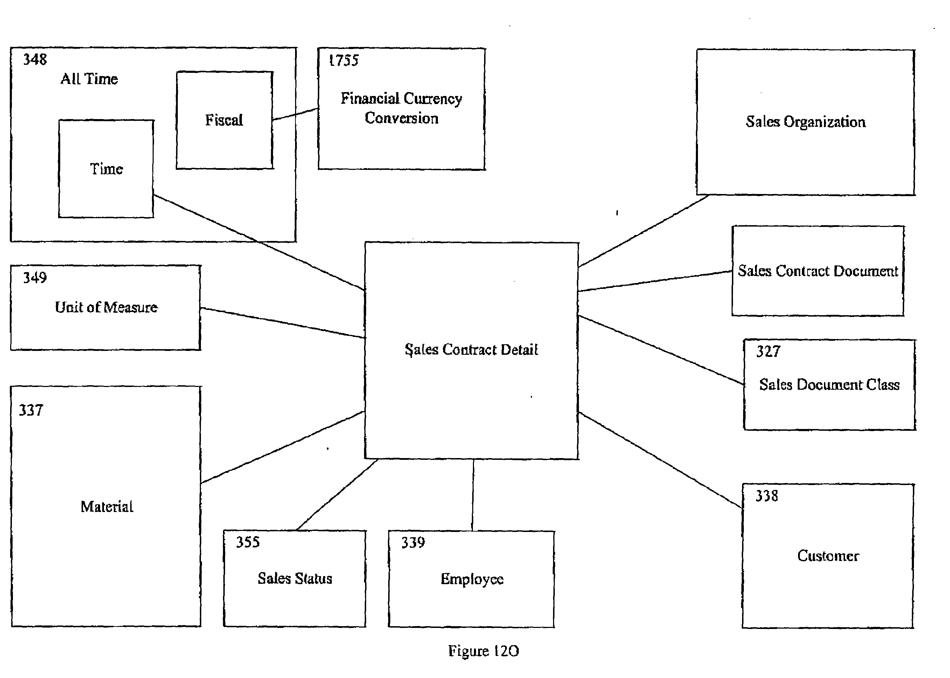

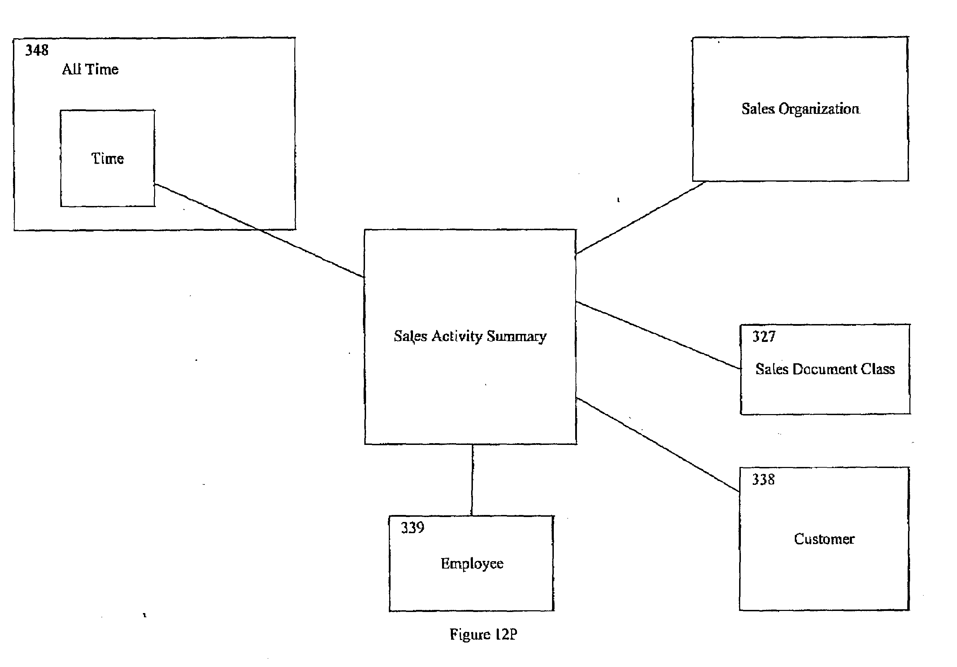

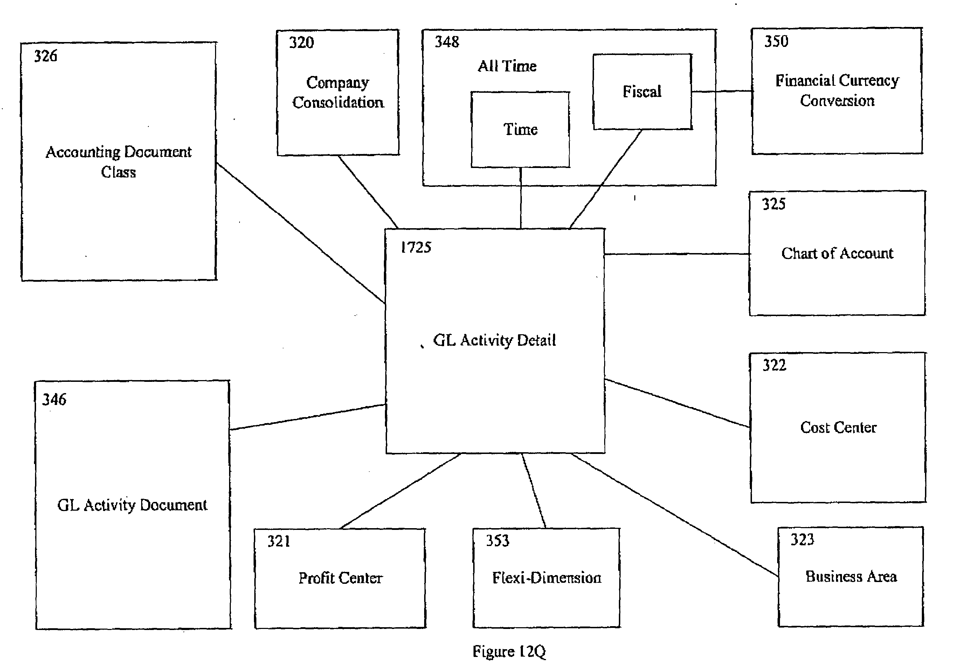

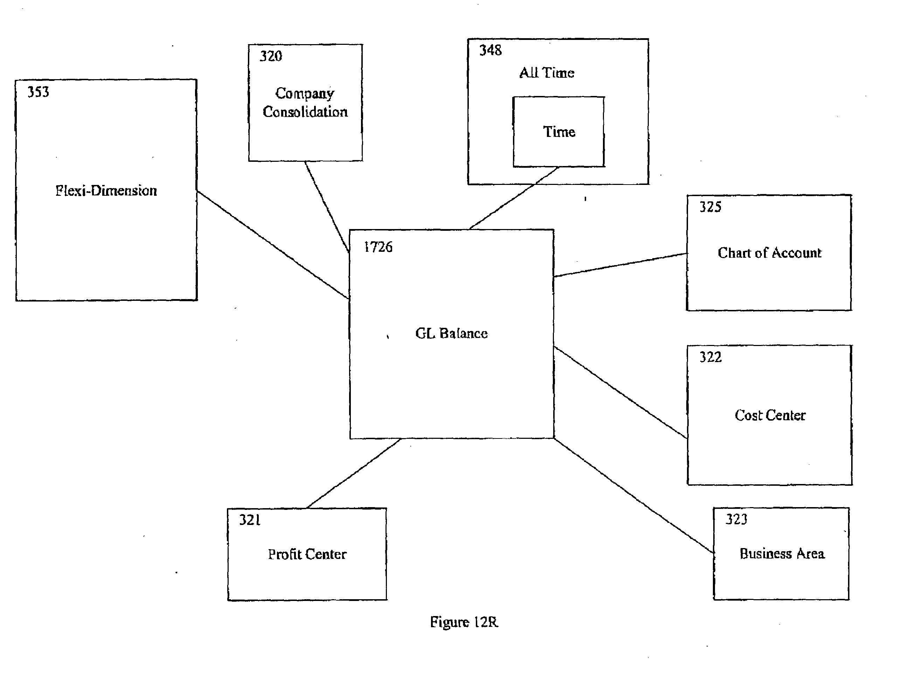

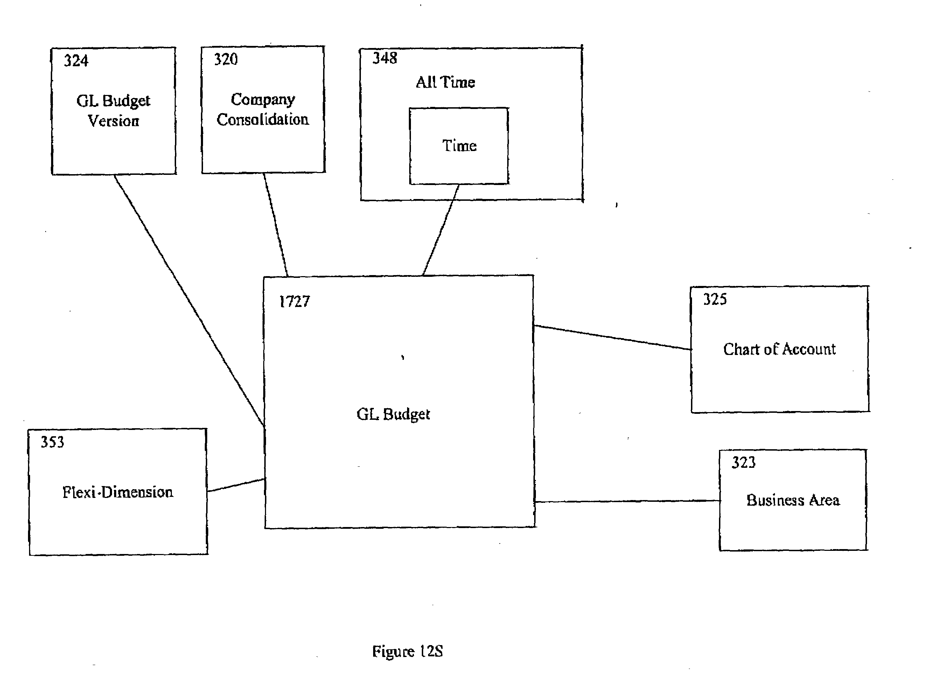

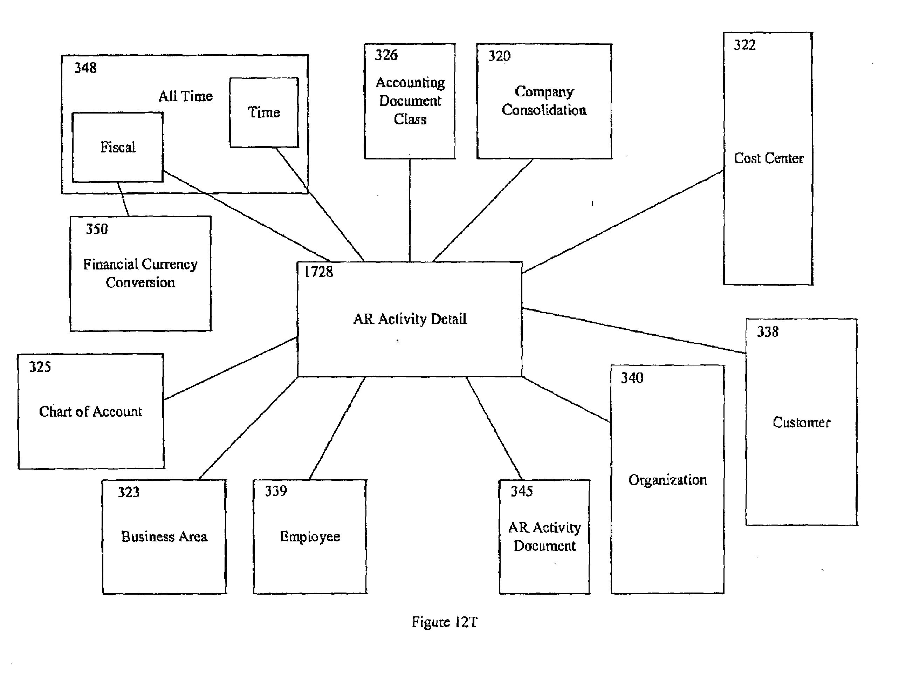

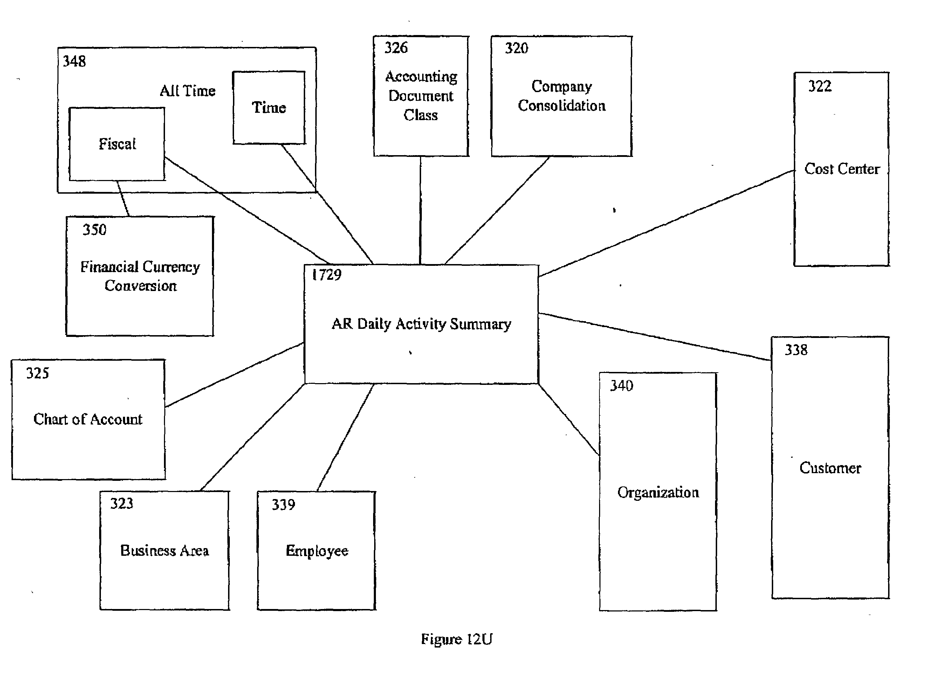

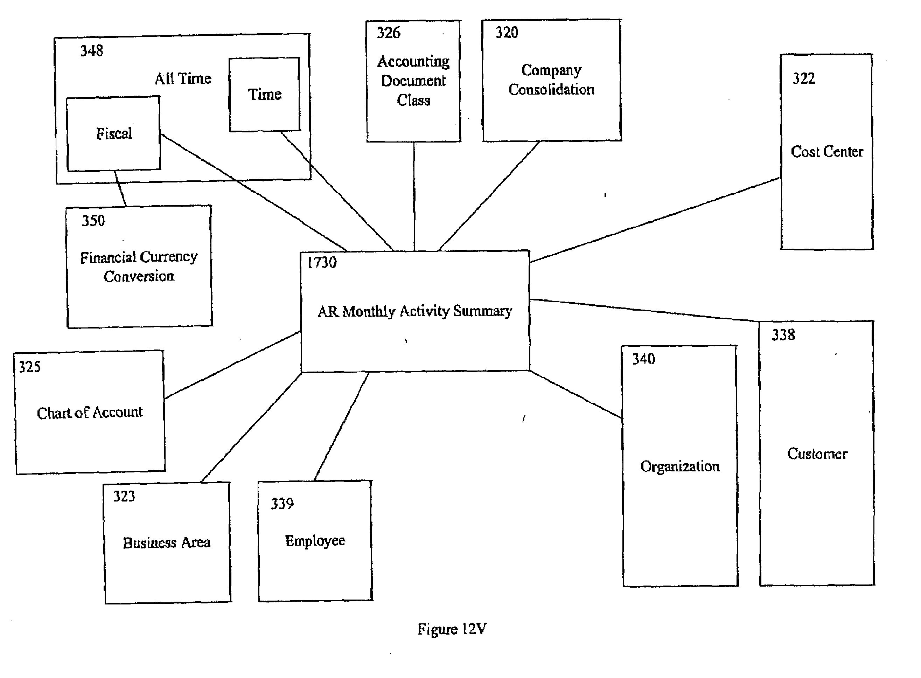

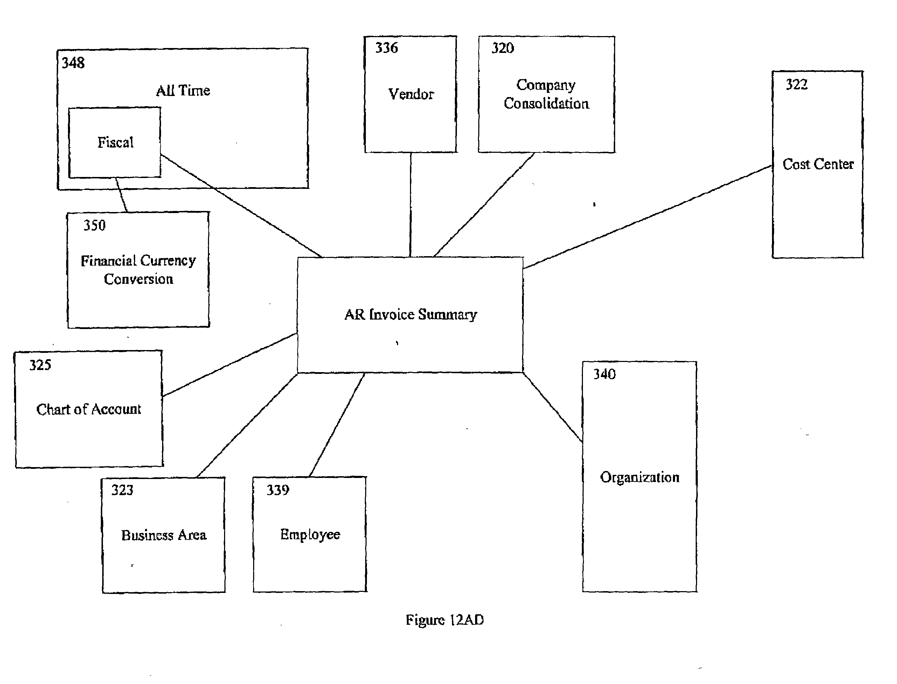

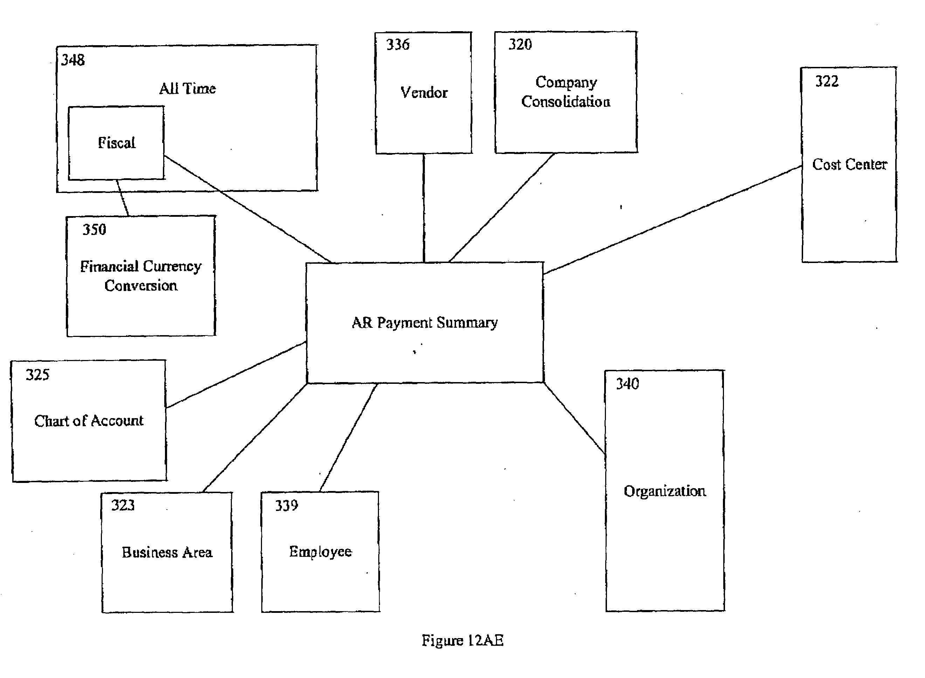

In this example, the fact tables are divided into six functional areas 202: sales analysis 901, AR analysis 902, GL analysis 903, AP analysis 904, inventory analysis 905 and procurement analysis 906. Figures 12A to 12Y show the individual star schemas for each individual areas of analysis 203 as reflected in the data model 120. The areas of analysis 203 of the functional areas 202 and their measures 111 are listed below.

The components of the data model 120 may be provided as part of a pre-packaged solution. Some components may be provided separately and integrated with other components of a data model 120. Each component of the data model 120 is designed from careful consideration of the dimensions 112 or measures 111 that are common to each functional area 202 of the business or organization. Based on common terms and common information, these dimensions 112 ensure that users in relevant departments approach business issues using the same references.

For example, the dimension "customer" 337 means precisely the same thing to a sales manager as it does to an inventory warehouse manager or a finance vice president. Without conforming dimensions, each department would likely develop different definitions, hierarchies, terms, and dimensions for many of the same business measures, an inefficiency that can sidetrack productivity and hamper decision-making.

Incorporating common dimensions 112 means that IT builds the tables (121 and 122) only once, less redundancy because data is stored once, and shorter time to update because updated data is loaded once. Moreover, multiple star schemas can leverage the shared dimensions 112 to reduce update time and resources. For example, updates occur once for a change to a dimension table 112 that is shared by five fact tables 121, not five times, which speeds the update process. In addition, common dimensions save disk space, reduce redundancy, and ensure that data is consistent from one data mart, or functional area of analysis 203, to the next.

The data marts, or functional areas of analysis 203, perform business performance management faster than traditional ERP 10 systems which distribute data fields among thousands of tables. Finding the fields that describe a given query in an ERP 10 system often requires joining copious tables, a time-consuming step that slows analysis and drains database processing power. The data warehouse system 100 incorporates a star schema architecture that accelerates query performance and produces fast business insight for high-speed analysis and reporting.

Star schema architectures contain two types of tables: fact tables 121 and dimension tables 122. A fact table 121 comprises the transaction history associated with each activity being modeled. These fact tables 121 store the numerical measurements of the business and include an ID field for each dimension that they represent. For instance, a sales fact table 121 might include fields for Customer ID, Sales-person ID, Product ID, Quantity Sold, Discount, and Total Amount, etc. The fact tables 121 are linked to several dimension tables 122 that qualitatively describe the fact table 121 fields in more detail. For instance, the Salesperson ID dimension table might include Salesperson ID, Salesperson Name, Phone Number, Sales Office, and Employee Number, etc.

This star structure, with the fact tables 121 surrounded by satellite dimension tables 122, allows users to drill down quickly into the data to uncover correlations between dimensions 112 and elements in the fact table 121. Forming queries involves a set of simple one-way joins, from the fact table 121 to each dimension 112, rather than complex multi-step joins through multiple levels of tables. Users 20 get the information they need quickly, allowing them to solve business problems, spot trends, or act on opportunities.

Traditional stovepipe data warehouse applications, such as traditional data marts, may serve certain departmental decision-making needs, but they fail to offer a variety of important enterprise-wide views. By incorporating common dimensions, the data model 120 allows knowledge workers to share information across departments and gain important decision-making synergies. Based on common terms and common information, common dimensions ensure that users in relevant departments or functional areas approach business issues using the same references.

To solve a business problem, sometimes decision-makers want to see transaction details, not just higher level summaries. For this reason, the components of the data warehouse system 100, which contain both relational and OLAP data, extract the most granular data from the source ERP 10 systems and use it to populate the data marts. Decision-makers may therefore access transaction-level detail and gain a micro view of the business issues at hand.

Offering detailed granularity takes pressure off the source ERP system 10 as well. Rather than query the production system every time they need to perform detailed analysis, decision makers may simply query the components of the data warehouse system 100 and glean the insight they desire.

One embodiment of the present invention provides a configurable dimensional framework to be used as a base for a data mart, multiple data marts, or an integrated data warehouse application 100, which offers the benefits of both data warehouses and data marts, i.e., the breadth of an enterprise-wide data warehouse and the luxury of incremental data mart implementation. This structure enables an organization to maximize the return on its ERP 10, e-commerce, and other source data system investments. Released from the analysis and reporting confines of ERP 10 systems, users 20 can now creatively explore business problems and make equally creative and effective business decisions.

Moreover, users may incrementally add data marts over time, expanding the integrated data warehouse system 100 at their own pace. Each new data mart fits seamlessly with its predecessors, extending the scope of the data warehouse system 100 to produce effective cross-functional business content, e.g., the fundamental information users need to understand their business drivers.

For example, if the inventory turnover rate suddenly dropped, users would want to know why. With an integrated data warehouse system 100 comprised of several subject-specific data marts, users could explore whether the root of the problem lies in sales or in inventory, perhaps the result of a change in the company sales compensation plan or a tightening of credit policy. By sharing the same conforming dimensions 112 (for instance, "product") in both the sales and inventory marts, users could generate these types of revealing cross-functional views. The result: enterprise-wide decision-making is improved.

Configurability

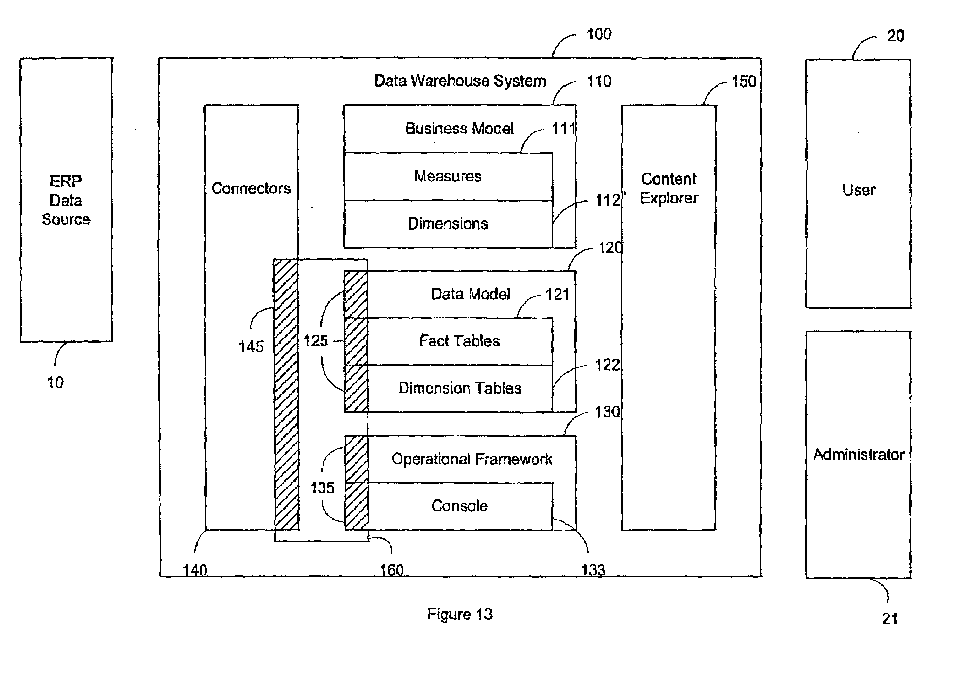

Referring to Figure 13, the configuration 160 of the data warehouse system 100 is described. There are configurable aspects to the data model 120, the operational framework 130, and the connectors 140. These configurable aspects are labeled on Figure 13 as 125, 135 and 145, respectively.

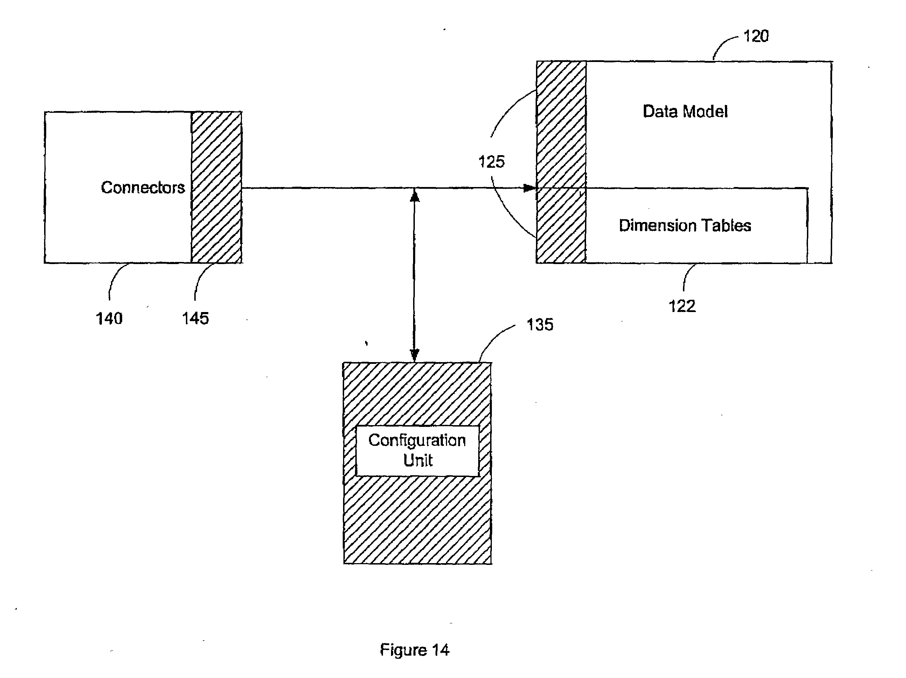

In Figure 14, the configuration 160 is enlarged. The configuration 160 occurs when the operational framework configurable aspects 135 interacts with placeholders located in the data model configurable aspects 125 and the connectors configurable aspects 145. These placeholders are set with data from an organization ERP 10, preferably during the data warehouse system 100 configuration.

The connectors 140 contain ETL code, each connector having a set of codes which perform a certain function. The ETL code functions involve the extraction of data from the ERP 10 and the loading of the data into the data model 120. The connectors may be configurable to allow the data warehouse system 100 to operate with different operational system, resource system, etc. The console 133, may provide the administrator 21 with a set of questions or queries. The answer to these queries will define the configuration options in the ETL 145. The console 133 may also prompt an administrator 21 to specify values for the placeholders in the data model 120.

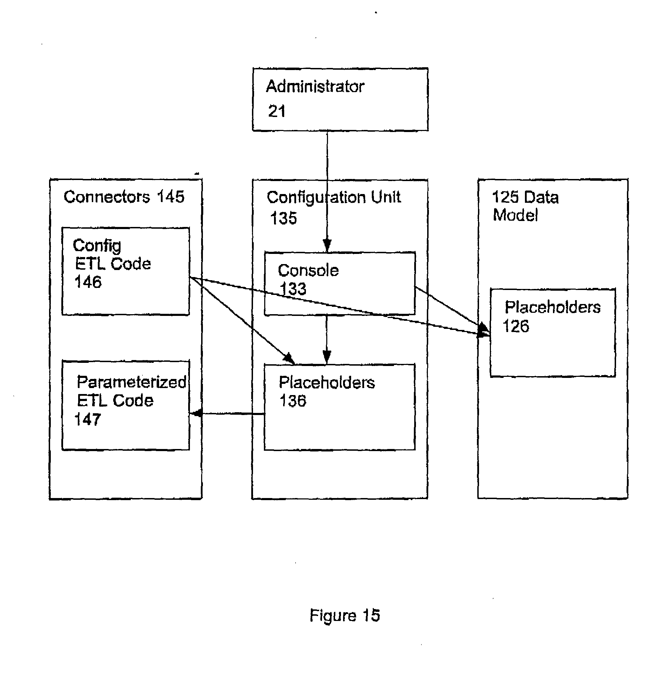

Referring to Figure 15, a configuration view 160 of an integrated data warehouse system 100 is shown in more detail. Figure 15 shows the configurable aspects of the data model 125, the configurable aspect of the operational framework referred to as the configuration unit 135, and the configurable aspects of the connectors 145. The configurable aspects of the data model 125 includes data model placeholders 126. These placeholders 126 represent information that is completed in the data model 120 during configuration. The configuration unit 135 includes the configurable portion of the console 133 and operational framework placeholders 136. These placeholders 136 are stored in a set of operational tables in the operational framework 130. The configurable aspects of the connectors 145 includes configuration ETL code 146 and parameterized ETL code 147. The configuration ETL 146 code may be used to extract values from the ERP 10 to set the placeholders. The parameterized ETL 147 code may then use the values of these placeholders 136 to extract information for the data warehouse system that reflects the configuration for the specific organization.

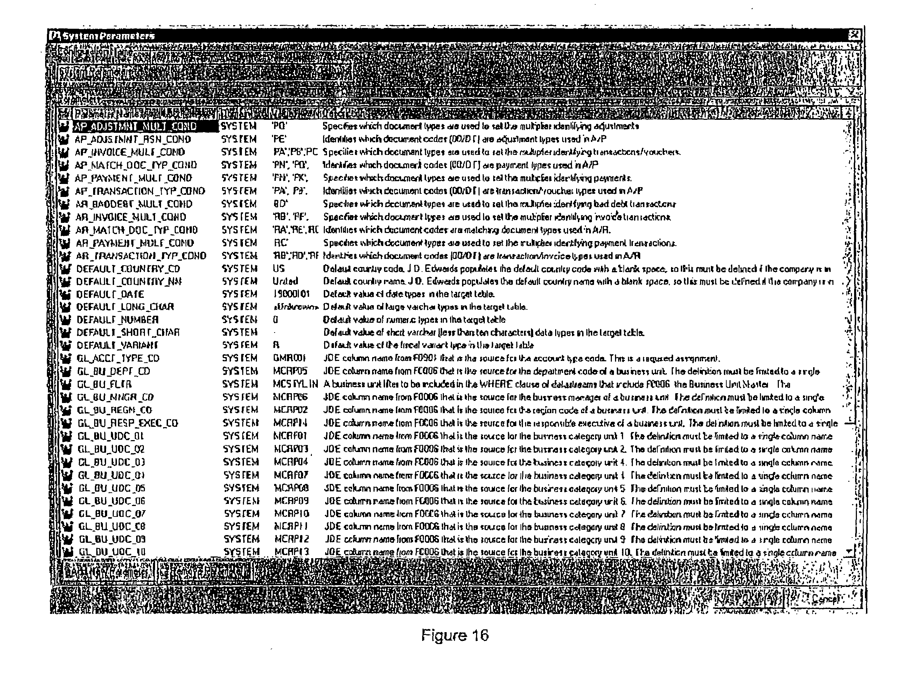

The configuration process involves setting the placeholders 126 and 136. There are two main methods to set the placeholders. One method involves providing the administrator 21 with options during the configuration. The administrator 21 may specify values to options listed in the console 133 that represent the characteristics of the organization that will have its performance measured by the data warehouse system 100. Figure 16 shows a screen shot of an example of a set of a set of configuration placeholders of a data warehouse system 100. A second method involves obtaining the information used to set the placeholders directly from the organization ERP 10. To achieve this, the configuration unit 135 creates a job that extracts the desired information from the organization ERP 10 and load it into the appropriate placeholder 126 or 136. Once the place holders are set, the data warehouse system 100 may operate.

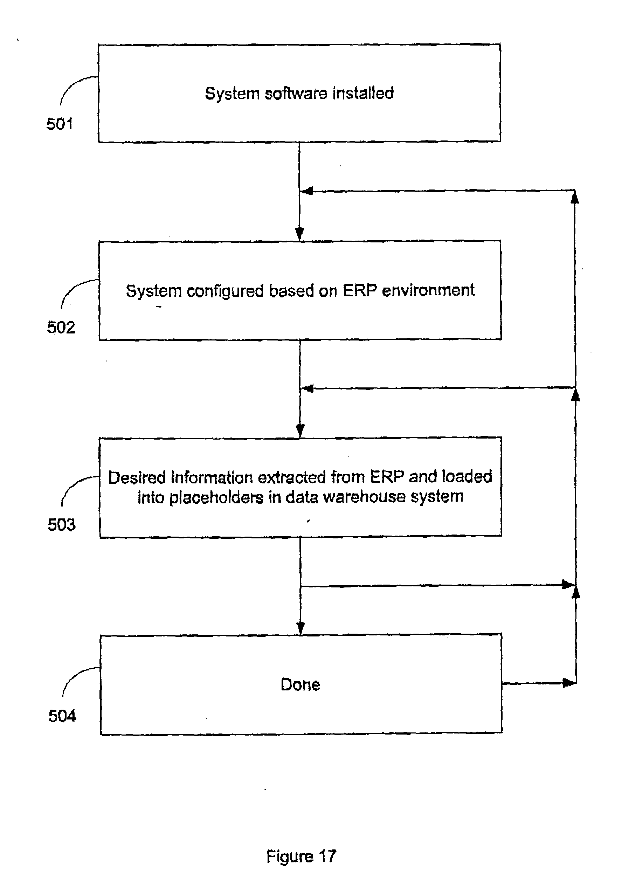

Referring to Figure 17, a flowchart for configuring a configurable data warehouse system 100 is shown. The first step (501) involves installing the data warehouse system 100 software. Once the system software is installed, the administrator 21 may configure the system based on the ERP 10 environment (502). Once the administrative selections are made, the connectors 140 may access the ERP 10 and extract the desired information from the ERP 10. This information is loaded into placeholders in the data warehouse system 100 (503). Once the information is loaded, the data warehouse system 100 is ready to be used (504).

The configuration process 500 may be iterative. The administrator 21 may initially choose to do steps 501 through 504 in sequence. However, at each step in the process new values for the placeholders may be set. Thus, reconfiguration of the data warehouse system may be performed by the administrator 21.

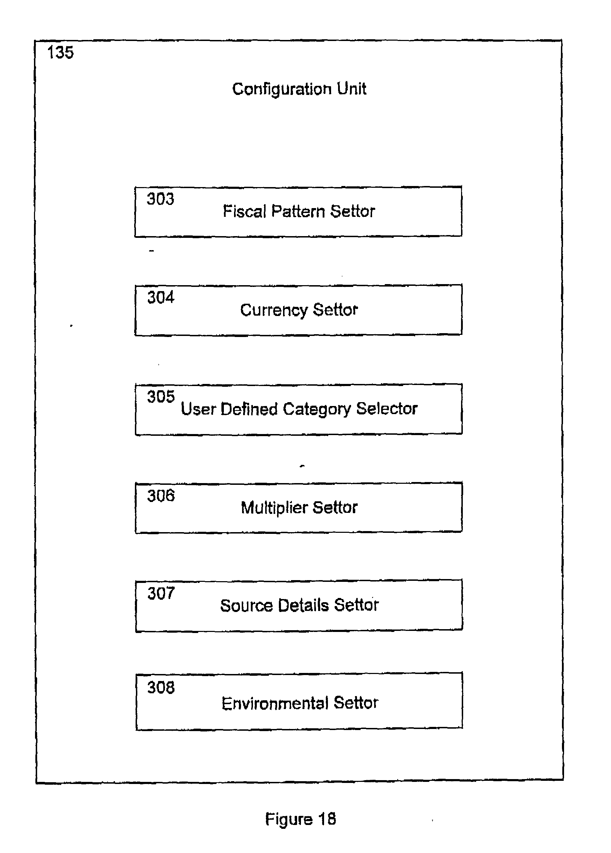

Referring to Figure 18, a component view of an embodiment of a configuration unit 135 is shown. Figure 18 represents an example of the information which may be set with the configuration unit 135. The configuration unit 135 includes a fiscal pattern settor 303, a currency settor 304, a user defined category selector 305, a multiplier settor 306, a source details selector 307, and an environmental settor 308.

The configuration unit 135 may provide means to configure the fiscal patterns to use in the data warehouse system 100. The fiscal pattern settor 303 may be used to set one or more fiscal patterns that reflect one or more fiscal calendars in use for an organization. Fiscal patterns reflect the fiscal reporting requirements of the organization. A fiscal pattern includes the number of periods, the first period in the fiscal year and the start date of each period. They are determined for an organization by accounting practices.

A placeholder 136 in the configuration unit 135 may be set to represent the identifiers of the fiscal patterns in the ERP data source 10. The administrator 21 may set these placeholders. A configuration ETL 146 job uses the information stored in the placeholders 136 to extract this information from the ERP data source system 10 and load the information into the fiscal variant placeholders 126 in the date dimension of data model 125.

Another aspect of the configuration unit is the currency settor. Many organizations have transactions in many currencies. For analysis purposes, it is desirable for all amounts to be in the same currency. To support cross-functional analysis, the currency settor 304 may be used to set a currency to use for amounts subject to analysis. This configuration allows a user to specify a currency to be used for analysis. Amounts not in this currency may be converted into this currency. Thus, one aspect of the business model 110 is the notion of a common currency. This is represented in the data model 120 by amounts that have been converted to the proper currency. Within the operational framework 130 and the configuration unit 135, common currency is represented by a currency to which fiscal amounts are converted in order to analyse the information in the data warehouse system 100. Common currency is also represented by a financial currency conversion table that determines the rate used to convert a transaction in one currency to the common currency.

The configuration unit 135 may provide a means to set the currencies to use in the data warehouse, the currency to use for reporting, and the conversion rates to use to convert to the reporting currency. A placeholder 136 in the configuration unit 135 is set to represent the currency to use for reporting. Additional placeholders 136 may be specified to represent the currencies to expect in the ERP data source 10. The administrator 21 may set these placeholders.

A configuration ETL code 146 job may use the information stored in the placeholder 136 to extract the required currency conversion rates for the currencies, and to load this information into the placeholders of the currency conversion table 126, which is part of the data model 125. The connectors 140 load information into the data warehouse by means of the parameterized ETL code 147. The parameterized ETL code 147 may use information of the reporting currency in the configuration unit placeholders 136 and the conversion rates in the configured data model 126 to convert the fiscal amount to the appropriate currency.

Another aspect of the configuration unit 135 is the user category settor 305. Many organizations attach organization specific classifiers to dimensions 112. For example, for one organization, the color of hair of a customer may be important. The configuration of user 20 specific categories allows such organization specific classifiers to be part of the dimensional framework. Such organization specific classifiers may be considered as placeholders in the ERP 10. When analyzing a dimension 112, it is desirable to use the same types of aspects across all of the different analysis that will be performed.

The user category settor 305 may be used to select one or more user defined categories in each dimension for analysis of an organization. The configuration unit 135 may provide a means to set the user categories that are to be used to analyse information in the data warehouse. Placeholders 136 in the configuration unit 135 are set to reflect the user categories from the ERP 10 that are of interest to the organization for the purposes of business performance management and the placeholder 126 in the data model 125 where the user category is to be placed. The parameterized ETL code 147 of the connector 140 uses the placeholders 136 to determine which user category to select from the source ERP and where to store the information in the data model 125 using the placeholders 126.

Another aspect of the configuration unit is the multiplier settor. The multiplier settor 306 may be used to set multipliers for use during transaction aggregation and rollups. Organizations may attach meaning to specific quantities. For instance, a transaction may be a credit or a debit. The configuration of multipliers allows an organization to attach different meanings to values in business transactions which are organization specific.

The configuration unit may provide a means to set multipliers that are used to aggregate and attach meaning to the amounts which are loaded into the data warehouse system 100. One aspect of the configurable data model 125 is the placeholders 126 which are used to specify the multipliers to use for business performance management by the organization. The values attached to these placeholders are unique to an organization. The configuration unit 135 may use a configuration ETL code 146 job to set the values of the placeholders 126 representing multipliers in the data model, based on default information in the ERP data source 10. The administrator 21 through the console 133 component of the configuration unit 135 may then review and change the values (i.e., override the default values) of these placeholders in the data model 126 to reflect the organization's needs for business performance management.

Another aspect of the configuration unit 135 is the source details settor 307. In an organization each ERP data source 10 is configured to meet the operational needs of the organization. There may be more than one location in the ERP 10 to store information. For example the ERP 10 may represent the relationships between business entities such as customers in a separate relationships table or by direct reference from one customer to another customer. Similarly the ERP system 10 may store all information related to several business entities in a single source table, and user defined (configurable) codes are used to specify which objects represent which types of business entities. For example all business entities associated with an address may be stored in a single table with codes representing which addresses represent customers and which represent vendors. As another example all sales activity may be stored in a single table, but different types of sales activities (order, direct shipments, etc.) may be identified through specific codes.

When the connectors 140 load information from the ERP data source 10 into the data warehouse system 100 they should know what information to extract for the purposes of business performance management. The configuration unit 135 may provide a means to specify this information. Placeholders 136 in the configuration unit 135 are used to specify the ERP 10 specific values that are to be used to extract the appropriate information from the ERP 10. The administrator 21, through the console 133 may set the values of these placeholders 136 to represent the ERP data source 10 for the specific organization. When the data warehouse system 100 is loaded from the ERP data source 10, the parameterized ETL code 147 of the connectors 140 uses the placeholders 136 in the configuration unit 135 to extract the appropriate information.

There are other configuration 160 options that have not been mentioned. These configuration options involve ERP 10 specific issues such as: What is the date format? These options may also include physical implementation details such as the name of the library where these tables exist, etc. This class of configuration options is referred to as the environmental configuration options. The environmental configuration settor 308 allows for the configuration of such options. The environmental configuration settor 308 may also be used to handle the hardware configuration, the operating system configuration, and the database configuration, i.e., how dates are stored for obtaining the date.

The configuration unit may provide a means to set various environmental placeholders. Placeholders 136 in the configuration unit 135 are used to represent the values of the environmental setting. The administrator 21 sets the placeholders 136 in the configuration unit 135 using the console 133. The parameterized ETL code 147 may then use this information to reflect the environment in which the data warehouse system 100 is operating.

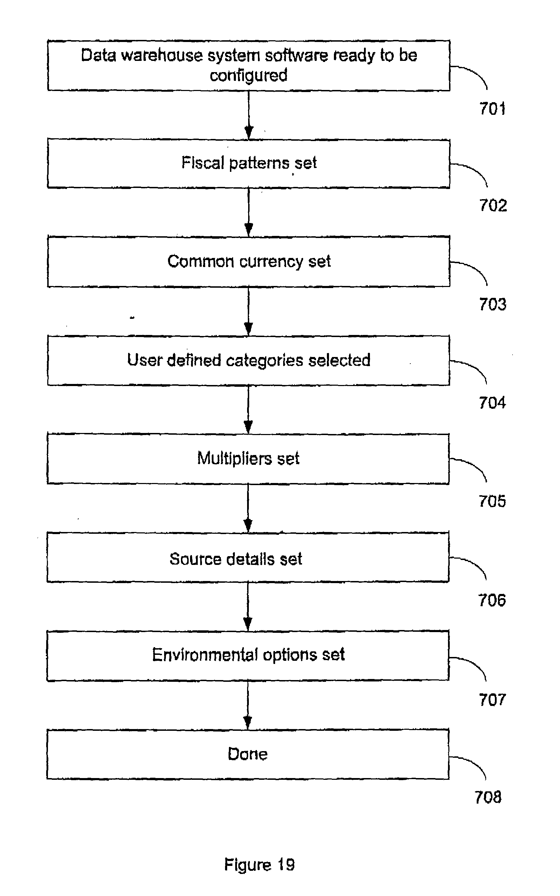

Referring to Figure 19, a flowchart for configuring a data warehouse system 100 is shown. Once the data warehouse system 100 software is ready to be configured (701), one or more fiscal patterns that reflects one or more fiscal calendars used by the specific organization may be set (702). A currency to use for all amounts in the dimensional framework may be set to support cross-functional analysis (703). One or more user defined categories in each dimension 112 may be selected for analysis (704). Multipliers may be set for use during transaction aggregation and rollups (705). Source details may be set to identify what information to extract from which ERP 10 (706). Environmental configuration options may be set (707). These steps may be performed in alternative order. Furthermore, steps may be re-performed by the administrator 21. Once these steps are completed, the data warehouse system 100 is ready to be used (708).

Dimensional Framework

Another aspect of an example of an embodiment of the invention relates to the fact that the data warehouse system 100 analyses and measures a complete organization environment. I.e., the data warehouse contains the dimensions, tables, entities, etc., to reflect any one of an identified group of organizations. This analysis and measurement is performed through the concept of a dimensional framework.

The dimensional framework manifests itself in the dimensions 112, in the dimension tables 122. The dimensions 112 of the business model 110 are a set of business entities, components or dimensions, such as customers, suppliers, vendors, material, employees, time, organization, etc. These types of business entities or dimensions are commonly used to analyze a business or organization in a data warehouse. However, in the configurable data warehouse system 100, the set of dimensions may be applicable to many different organizations; rather than custom-built for one particular organization.

The dimension tables 122 of the data model 120 are connected to fact tables 121, preferably, in a star schema format. This allows the same dimension table 122 to be used to represent the same dimension 112 in any fact table 121 which uses that dimension 112.

The operational framework 130 allows for the handling of hierarchies in the dimensional framework. The dimensional framework has common ways of handling hierarchies. I.e., customers contained within higher customer groups, or materials contained within higher material groups. The handling of hierarchies allows for consistency for analysis in the dimensional framework. From a configuration point of view, the dimensional framework may include certain details or aspects of specific placeholders in the dimension tables that are in the data model 120.

In one example of an embodiment of the present invention, the set of dimensions 112 includes 39 dimensions: company consolidation 320, profit center 321, cost center 322, business area 323, GL budget version 324, chart of accounts 325, accounting document class 326, sales document class 327, movement document 328, material movement class 329, quotation activity document 330, purchase order activity document 331, requisition activity document 332, contract activity document 333, procurement document class 334, vendor 335, material 336, customer 337, employee 338, organization 339, plant 340, material storage 341, storage bin 342, shipping point 343, AR activity document 344, GL activity document 345, AP activity document 346, all time (time, fiscal) 347, unit of measure 348, financial currency conversion 349, unit of measure conversion 350, user category 351, flexi-dimension 352, forecast version 353, sales status 354, procurement status 355, release strategy 356, valuation 357, batch 358, and stock class 359. Dimensions 112 may be added or removed from this set of dimensions 112.

This set of dimensions 112 may be applicable as part of a dimensional framework to many organizations. These dimensions 112 may also be configured to a specific organization through the use of a configuration unit 135. As described above, the configuration unit 135 may include a fiscal pattern settor 303, a currency settor 304, a user category settor 305, a multiplier settor 306, a source details settor 307, and an environmental settor 308.

The dimensional framework may contain one or more dimensions contain one or more placeholders settable to reflect a fiscal pattern of the particular organization. The dimensional framework may contain one or more dimensions contain one or more placeholders settable to reflect a common currency used by the data warehouse system. The dimensional framework may contain one or more dimensions contain one or more placeholders settable to reflect one or more categories defined by a user, the categories used to analyze information in the data warehouse system. The dimensional framework may contain one or more dimensions contain one or more placeholders settable to reflect one or more multipliers used by the data warehouse system.

Providing a dimensional framework for use as a foundation of a data warehouse system may include one or more of the following steps:

- providing placeholders in a set of dimensions, the dimensions representing business reference aspects of multiple organizations, a subset of the set of dimensions representing a particular organization;
- providing a configuration unit for setting the placeholders such that the dimensional framework represents the particular organization;
- providing placeholders comprises the step of providing one or more placeholders in the dimensional framework to reflect a fiscal pattern of the particular organization;
- providing placeholders comprises the step of providing one or more placeholders in the dimensional framework to reflect a common currency used by the data warehouse system;
- providing placeholders comprises the step of providing one or more placeholders in the dimensional framework to reflect a category defined by a user, the category used to analyze information in the data warehouse system; and
- providing placeholders comprises the step of aggregating amounts loaded into the dimensional framework..

Components of the Data Warehouse System

Components of the configurable data warehouse system 100 will now be described in further detail. Built upon an operational framework 130 and a robust production environment, the data warehouse system 100 helps decision-makers derive business value from their enterprise data. By using the data warehouse system 100, organizations receive a wide, cross-functional view of their ERP 10 and e-business data, which provides a strategic perspective on key performance indicators (KPIs). And they reduce implementation costs and effort, which accelerates time to results.

An aspect of the data warehouse system 100 also relates to the challenges that organizations face when implementing data warehouses and traditional "stove pipe" data marts. A solution is provided, i.e., the integrated data warehouse, which comprises a series of coordinated data marts. These coordinated data marts allow organizations to deliver value-laden enterprise-wide data warehouse solutions that are important to competitive advantage in the e-business economy.

One advantage of the data warehouse system 100 lies in the quality of its business content. It is the business content that gives end users the ability to answer complicated questions involving numerous business dimensions 112 and quickly gain the insight required to make strategic decisions. The basis of this content combines business intelligence expertise established by broad studies and best practices proven by experience, including strategies which have helped many of the world's leading companies generate maximum decision-making value from their data. This business content is reflected in the business model 110, as described below.

The Connectors 140

The business driven extractions and source-to-target mappings are labeled as connectors 140 on Figure 2. Business-driven extractions and source-to-target mappings incorporate business rules that unravel ERP systems 10 such as SAP R/3 (TM), Oracle Applications (TM), and J.D. Edwards (TM), and are open to alternative sources.

A complex part of building a traditional data mart involves extracting the right data from the source system, transforming it into the desired form, and loading it into the data marts. To facilitate and expedite this process, a repository is built for the data warehouse system 100 connectors 140. The connectors 140 understand both the source ERP system 10 and the targets. This repository uses business rules to transform data from the ERP system 10 to the targets.

The data warehouse system 100 simplifies the complex process of extracting data from specific source systems such as J.D. Edwards, SAP R/3, and Oracle, overcoming the technical hurdles and addressing the unique characteristics involved in each system.

Extracting data may involve in-depth knowledge about the underlying source system. Traditionally, developers of data warehousing needed to know where the relevant data comes from and what the specific data structures look like. They also needed to know about the technical hurdles specific to their source systems 10. The data warehouse system 100 has functions to adapt to a variety of source systems. An embodiment is based on extensive experience with SAP, Oracle, and J.D. Edwards ERP systems 10. For example, SAP uses pooled and clustered table structures, Oracle provides "flex" fields, and J.D. Edwards maintains address books in a special way. Each system contains unique characteristics that affect data mart building. The data warehouse system 100 addresses these source features. This inherent source system intelligence of the data warehouse system 100 spares users 20 from having to spend time analyzing complex ERP and e-business systems.

In addition to speeding the extraction process, the connectors 140 incorporate safeguards to protect data integrity. As data comes across from the source system 10, the connectors 140 look for specific conditions. If these conditions are absent, the connectors generate an error log and lists the missing data, simplifying system administration and trouble-shooting. Missing data, incomplete data, or inaccurate data may degrade the quality of a business performance management solution and substantially hinder the business results.

To generate consistently high data quality, the connectors 140 contain transformation functions that format and integrate source data before it is stored in a data mart. This process might involve any number of functions: restructuring data files, records, and fields; removing superfluous data; decoding and translating field values to enhance data; improving data readability; validating data; calculating new values from one or more source columns; simplifying data; and changing data types. The transformation process may also reject records that do not satisfy business rules. As part of the transformation process, the data warehouse system 100 may employ surrogate keys that substitute for natural keys to improve processing performance.

Once the source data has been transformed, the data warehouse system 100 loads it into the destination data marts and make the data available to users 20 for analysis and reporting. The data model 120 may be considered as an abstract collection of data marts.

The components of the data warehouse system 100 may apply different updating rules to different tables depending on the nature of the component data. By tailoring the data-loading process to the data, the data warehouse system 100 updates information faster with less demand on the target system. For instance, tables defined as "static" contain data that changes infrequently and therefore needs refreshing only on an *ad hoc* basis. Tables that require more frequent refreshing can be treated differently as well, according to the characteristics of their data. Users 20 may perform a complete refresh, a changed-data capture, or a slowly changing dimension.

The data warehouse also includes stop-recover strategy, which allows extraction jobs that have been interrupted to be restarted. This feature saves administrators time and helps ensure data integrity.

To help ensure that an integrated data warehouse accurately captures changes to dimensions 112 that vary infrequently, such as product hierarchies, sales regions, and so on, the data warehouse system 100 may accommodate slowly changing dimensions. This feature offers two primary benefits. First, it may allow users 20 to go back and find out what was going on at a point in corporate history. In other words, although employees may have moved or sales territories may have been redrawn, the system 100 may present information about these slowly changing dimensions as they existed at the time of interest. This may allow users 20 to derive consistent, repeatable results, solidifying the value of their decision support system by preserving history.

Second, users 20 may see values or changes over time. This capability furnishes the insight to uncover longer-term trends and business impacts. If users 20 have incomplete historical information, they may end up making improper assumptions and compromising the quality of their decisions. Whereas ERP systems 10 may typically archive all but the most recent year or two's worth of data without access to supporting details, the data warehouse system 100 allows users 20 to dig into an issue's past several years or more to gain revealing perspectives about its present. This trend-analysis capability allows companies to track the impact of decisions over time.

In the data warehouse system 100, if a sales person transfers to a different region in mid year, the data marts may allow an organization to record the move and reflect the change in their database. Without record of this slowly changing dimension, a year-end revenue summary by region may allocate their entire year's sales to the new regional manager, overstating their accomplishments and understating the previous manager's performance. Companies that make decisions based on this type of misleading information may end up making incorrect assumptions and that can result in costly mistakes.

With slowly changing dimensions, the revenue that the sales person generated before their departure will properly accrue to the previous regional sales manager, and the revenue that they generate after the move will be credited to the new manager. Over time, certain dimensions such as employees, products, and customers may change, and the data warehouse system 100, by creating another dimension record, has the flexibility to accommodate these changes and produce an accurate view of business performance.

The data warehouse system 100 handles slowly changing dimensions so that the integrated data warehouse accurately captures infrequent but important data changes. Users 20 can rely on the integrity of the data.

The data warehouse system 100 may also include changed-data capture, the capacity to periodically update the data marts with current information without rebuilding them from the ground up. Changed-data capture detects new, modified, or deleted records in source systems 10 and updates the data marts with those changes.

To improve updating speed, the data warehouse system 100 splits the changed-data capture function into two. One inserts new data incrementally in bulk, a quick and efficient approach that eases the pressure on processing resources. The other step updates changes to existing data, a process that involves going into the database, finding the modified row, updating it, and then saving the change. Given that changes are less voluminous than new data, the data warehouse system 100 handles the majority of updating with the more efficient and speedier process. Updating may therefore be conducted successfully even in the face of continually shrinking update windows.

To further its efficiency, the data warehouse system 100 may look only at the data that has changed in the ERP system 10. Recognizing the date and time of the last update, the ETL tool 140 requests only records from that update forward. Asking what records have changed and determining whether the changed records are of interest may filter this subset further. This approach demands far fewer CPU (central processing unit) resources than may be required to extract all the ERP 140 data, to compare it to the data mart, and to load the difference; a process that would involve examining every row in the ERP 140 system. Consequently, changed-data capture improves system performance and speeds updates. Changed-data capture allows users to periodically update data marts without reloading them from scratch.

The Operational Framework 130

The operational framework 130 of the data warehouse system 100 reflects how the data warehouse system 100 may be productized. The operational framework 130 allows the administrator 21 to:

- Customize the data warehouse system 100 to reflect their unique ERP 10 environment;
- Controls the operation of the data warehouse system 100 in a production environment, and contains a component which includes stop-recover strategy; and
- Handles exceptions during data mart updates.

The operational framework 130 provides functionality that makes the data warehouse system 100 responsive to the variations of ERP 10 implementations. The operational framework 130 uses information stored in the operational framework schema to adjust the business-driven extractions and source-to-target mappings business rules of the connectors 140 to reflect the requirements of the particular ERP 10 implementation. The operational framework 130 uses information stored in placeholders in the operational framework schema to determine the status of the extracts that load the data mart and to determine what new data needs to be extracted to the data mart.

The data warehouse system console 133 employs easy-to-use configuration parameters to help administrators 21 tailor components of the data warehouse system 100 to their environment. As has been stated above, the system console 133 assists in the configuration of the dimensional framework.

As has been described, the operational framework may include a configuration unit 135. An administrator 21 may likely customize their SAP, Oracle, or J.D. Edwards source system. If so, their hierarchies, hierarchy types, status codes, charts of accounts, exchange rates types, and other fields may differ from the source system defaults. The system console 133 has parameters which help users configure the data warehouse system 100 to reflect these changes. This convenience saves an administrator 21 effort, speeds configuration, and delivers business performance management value faster.

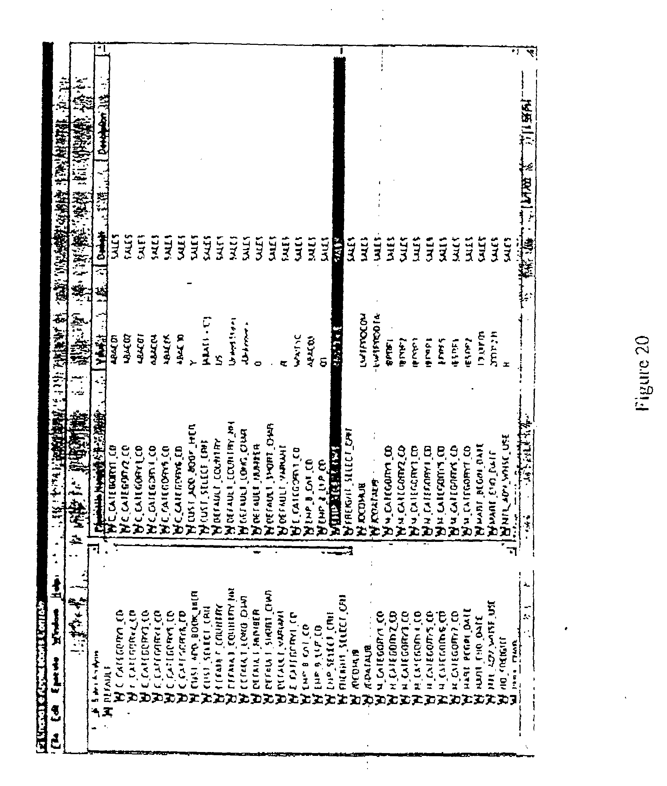

Figure 20 is a screen shot of the system console 133 which enables administrators 21 to augment the data warehouse system 100 to reflect their particular implementation through configuration parameters. The system console 133 matches the configuration to the user's 20 target database and equipment. For example, whether Oracle RBDMS (TM) or Microsoft SQL Server (TM) on NT or Unix platforms are used, the data warehouse system console 133 may tailor its implementation to the physical environment.

The system console 133 enables users to import historical ERP 10 data at a pace convenient to their business. This initial load job may take a long time, a potential problem if administrators 21 attempt to import all this data during a single extended window. Using the system console 133, however, administrators 21 may schedule the loading to occur in phases which users set and populate the data marts during slow network activity periods. This convenience avoids saddling users with degraded network performance while the loading occurs.

Administrators 21 may also use the system console 133 to simplify the ongoing ETL processes 140. It may help administrators 21 sequence jobs and determine which are to run, what data they are to extract, and when they are to run (i.e., date ranges). The system console 133 may also enable administrators 21 to run *ad hoc* jobs or put scheduled jobs on hold.

Moreover, the system console 133 may equip administrators 21 to maintain their system. In the data warehouse system 100, administrative tables within the relational database store information pertaining to the system's 100 operation. The console 133 uses this information to generate job status reports and error reports, giving administrators 21 a firm handle on their system at all times.

The engine behind the data warehouse system 100 resides within the system console 133, an easy-to-use production control environment that simplifies the up front installation, configuration, and loading of the data warehouse system 100. It also makes maintaining the data marts easier once they are up and running.

Administrators 21 may use the system console 133 to set extraction sequences, and establish dependencies and priorities. It may also enable organizations to implement co-ordinated analytic applications incrementally and manage them centrally.

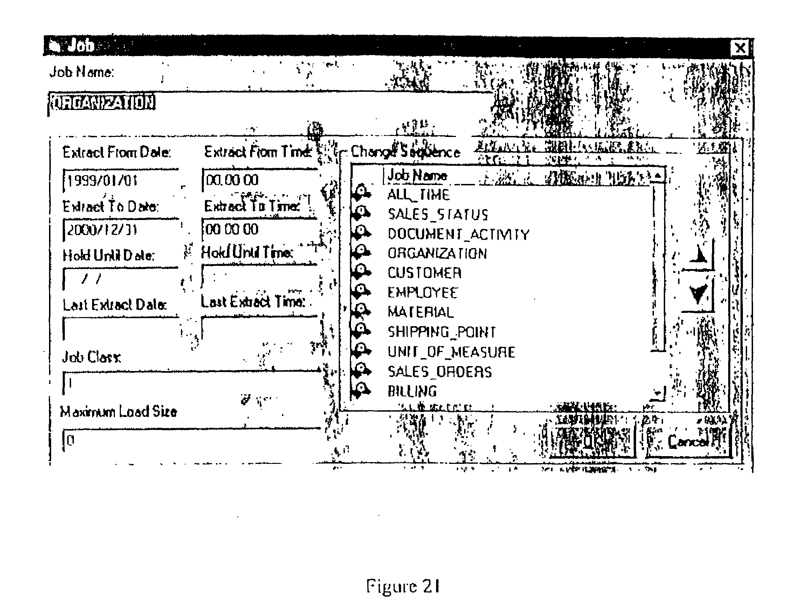

As has been stated, the system console 133 may be considered part of the operational framework 130. The system console 133 provides intelligent connector 140 job control for *ad hoc* or scheduled data loads, sequences extraction jobs, and defines extract dates. It allows an administrator 21 to set configuration parameters so that the data warehouse system 100 reflects ERP 10 site-specific configurations. Figure 21 is a screen shot of the system console 133 that manages connector 140 processes automatically.

The Content Explorer 150

The data warehouse system 100 may also provide packaged reports, OLAP cubes, and catalogs that offer business insight and reflect the information and KPIs used to manage, measure, and improve business performance in each functional area. These reports may be included in the content explorer 150.

Users 20 may generate an array of reports, such as OLAP, relational, standard, *ad hoc*, time trend, etc., to meet information requirements, for positions in the organization. Moreover, these reports are also easy to change. Decision makers can easily adapt them to manage, measure, and improve business performance in their functional areas, greatly reducing the burden on IT. Either way, knowledge workers gain key business insight and derive immediate productivity gains.

Furthermore, the data warehouse system 100, which may be extended to include scorecarding and visualizations, provide the right report for the right users on the client platform of choice: e.g., Windows, Excel, or Web browser, whether users are LAN-based or working remotely.

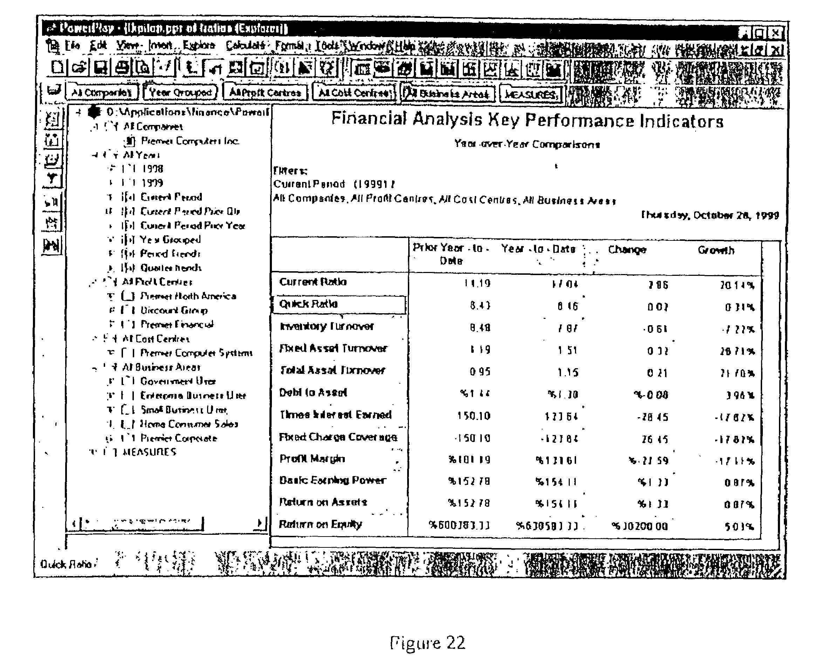

The data warehouse system 100 contains a number of packaged reports that reflect the business requirements for important areas such as finance, sales, and inventory. Figure 22 is a screen shot of an example of a report of the financial (or GL) analysis 403 functional area. This report helps speed reconciliations, period-end closings, and financial reporting and distribution by giving managers the information they use to analyze income statements, balance sheets, cash flows, key financial ratios, or currency rate conversions.

Types of financial reports available to end users include:

- Overview reports, such as income statement and balance sheet;
- Income statement analysis;
- Balance sheet analysis;
- Budget analysis;
- Analysis by legal entity;
- Analysis by management entity; and
- Operational reports, such as cost center and GL Analysis 303.

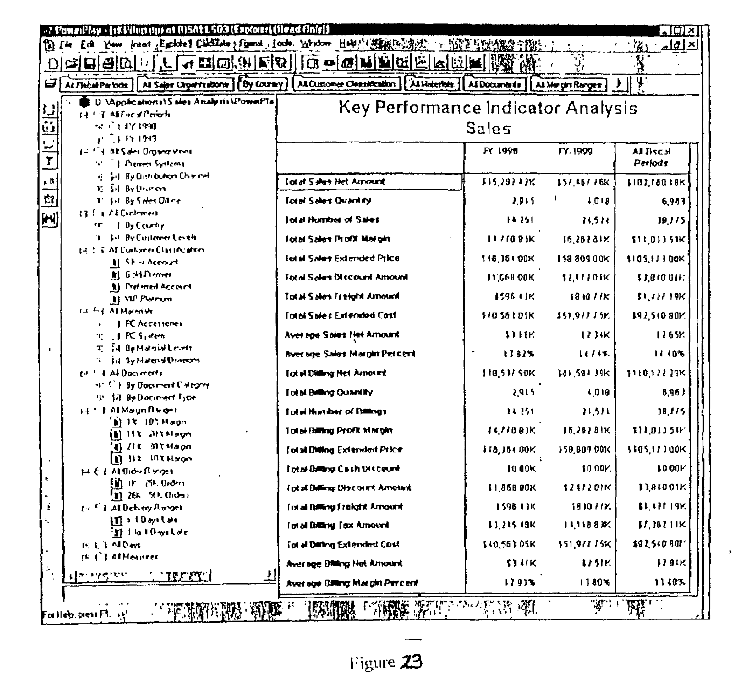

Figure 23 is a screen shot of an example of a report of the sales analysis 401 functional area. This report allows users to analyze forecast accuracy and sales volume, calculate average deal size, and examine revenues and profitability, etc.

Types of sales reports available to end users 20 include:

- Reports by customer, such as customer sales ranking or customer sales by region;
- Reports by product, such as order summary, or product sales ranking;
- Reports by sales organization, such as orders by reps or by country;
- Reports by profit; and
- Reports by quantity sold.

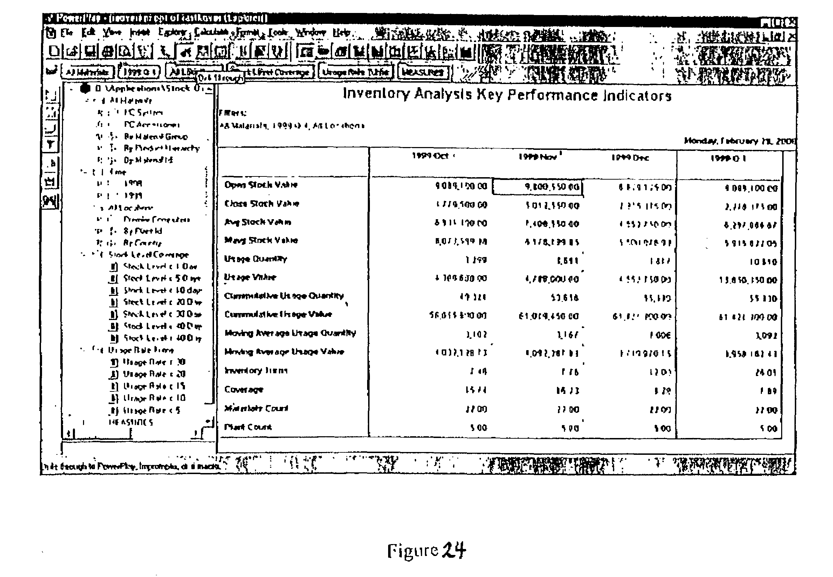

Figure 24 is a screen shot of an example of a report of the inventory analysis 405 functional area. This report provides inventory managers with the information they use to understand supply chains and assess demand forecasting accuracy, inventory carrying costs, supplier performance, and warehouse performance, etc.

Types of inventory reports available to end users include:

- Inventory performance, such as stock level overview or profile of plants by stock level;
- Demand analysis, such as stock usage comparisons, or materials profile of demand;
- Material tracking;
- Vendor analysis by stock movements; and
- Resource activity, such as activity comparisons or plant/employee analysis.

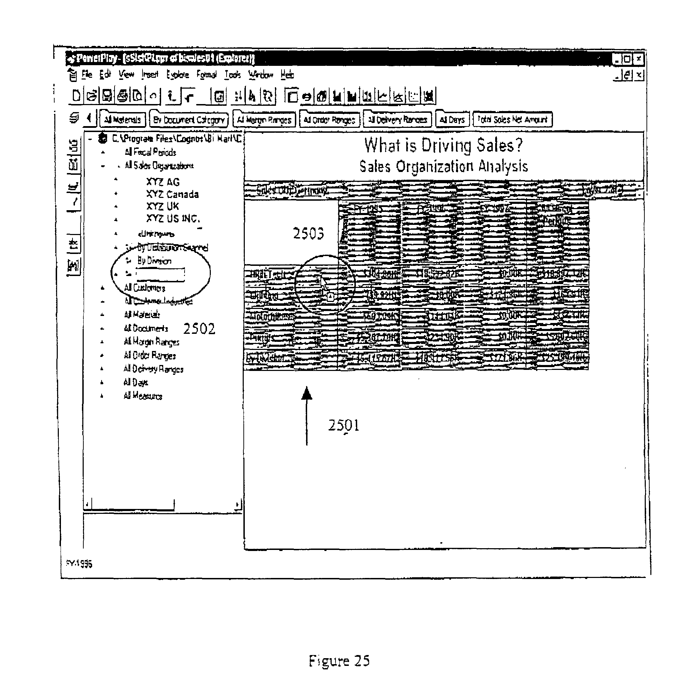

The data warehouse system 100 also allows for ease of report generation. Figures 25 to 27 illustrate the ease with which a series of reports may be generated from any starting point. For example, Figure 25 shows a screen shot of a report highlighting sales revenues over the past several years By Division (identified by arrow 2501). A user 20 may decide that it would be interesting to view revenues over these periods by sales office within the sales organization. To generate this report, the user 20 would simply move the cursor over the Sales Office folder, shown by circle 2502, then drag and drop it on the Divisions column shown within circled 2503.

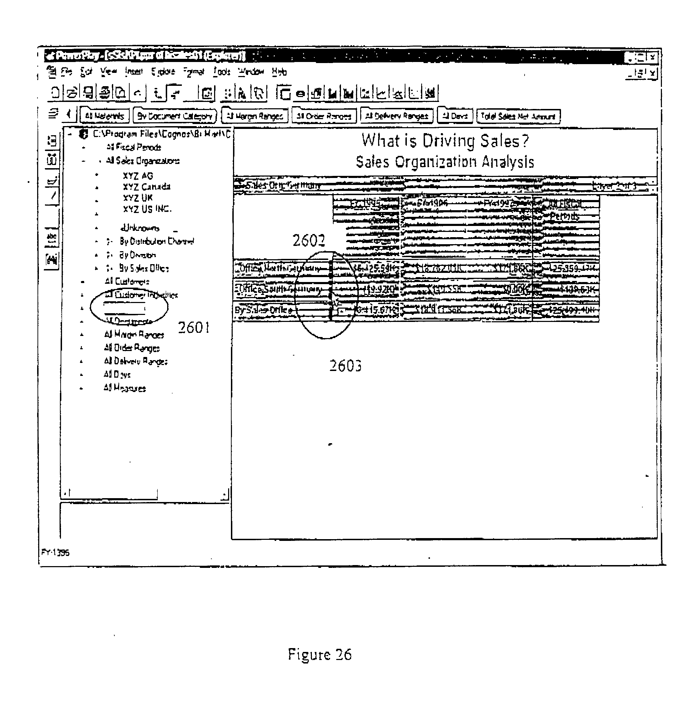

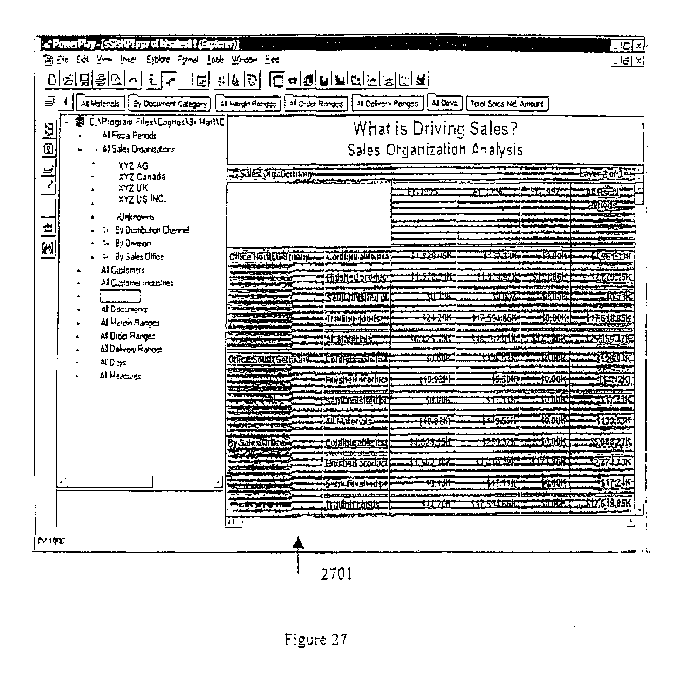

This single step presents the user with a new report which represents sales revenues over time by sales office within, in this example, the Germany Sales Organization. This analysis may be taken one step further by dragging and dropping the materials file (identified by circle 2601 in Figure 26) to the nested row position in the report, (identified by thick vertical line 2602 within circle 2603). Figure 27 shows a screen shot of the result: a new report, identified by arrow 2701, highlighting how revenues are distributed by material groups across sales offices within, in this example, the German sales organization.

Thus, with three clicks, a user 20 is able to view three reports, each of which offer sales related information. Similarly, each of these reports are only clicks away from more varied and valuable analysis.

Other components can be added to the data warehouse system 100 environment.

Further information regarding an example of an embodiment of a data warehouse system 100

Dimensions

The following is a listing of dimensions which may be used in a data warehouse system 100:

```
ACCOUNT CATEGORY PARTY
ACCOUNTING DOCUMENT CLASS
ALL TIME
AP ACTIVITY DETAIL
AP ACTIVITY DOCUMENT
AP DAILY ACTIVITY SUMMARY
AP INVOICE SUMMARY
AP MONTHLY ACCOUNT SUMMARY
AP MONTHLY ACTIVITY SUMMARY
AP PAYMENT SUMMARY
AR ACTIVITY DETAIL
AR ACTIVITY DOCUMENT
AR DAILY ACTIVITY SUMMARY
AR INVOICE SUMMARY
AR MONTHLY ACCOUNT SUMMARY
AR MONTHLY ACTIVITY SUMMARY
AR PAYMENT SUMMARY
BATCH
BUDGET VERSION
BUSINESS AREA
CHART OF ACCOUNT
COMMITTMENT ACTIVITY DETAIL
COMMITTMENT ACTIVITY DOCUMENT
COMPANY CONSOLIDATION
CONTRACT ACTIVITY DETAIL
```

CONTRACT ACTIVITY DOCUMENT
CONTRACT DOCUMENT SUMMARY
CONTROLLING COST OBJECT
CONTROLLING COST OBJECT GROUP MEMBER
COST ACCOUNT ACTUAL
COST ACCOUNT ACTUAL DOCUMENT
COST ACCOUNT PLAN ITEM
COST ACCOUNT PLAN ITEM HEADER
COST ACCOUNT PLAN VERSION
COST CENTER
COST CLASS
COST ELEMENT
COST ELEMENT GROUP MEMBER
COSTING GROUP
COSTING PROJECT
CUSTOMER
CUSTOMER DEMOGRAPHIC
EMPLOYEE
EURO CURRENCY RATE
FINANCIAL CURRENCY CONVERSION
FISCAL
FLEXIDIM
GL ACTIVITY DETAIL
GL ACTIVITY DOCUMENT
GL BALANCE
GL BUDGET
MATERIAL
MATERIAL MOVEMENT
MATERIAL MOVEMENT DOCUMENT
MATERIAL MOVEMENT DOCUMENT CLASS
MATERIAL MOVEMENT DOCUMENT SERIAL NUMBER
MATERIAL RESERVATION
MATERIAL STORAGE
ORGANIZATION
PHYSICAL INVENTORY
PLANT
PROCUREMENT ACTIVITY PERIODIC SUMMARY
PROCUREMENT DOCUMENT CLASS
PROCUREMENT STATUS
PROFIT CENTER
PROMOTION
PURCHASE ORDER ACTIVITY DETAIL
PURCHASE ORDER ACTIVITY DOCUMENT
PURCHASING ORGANIZATION GROUP
QUOTATION ACTIVITY DETAIL
QUOTATION ACTIVITY DOCUMENT
RELEASE STRATEGY
REQUISITION ACTIVITY DETAIL
REQUISITION ACTIVITY DOCUMENT
SALES ACTIVITY PERIODIC SUMMARY
SALES BILLING
SALES BILLING DOCUMENT
SALES CONTRACT
SALES CONTRACT DOCUMENT
SALES DISTRIBUTION
SALES DISTRIBUTION DOCUMENT
SALES DOCUMENT CLASS
SALES ORDER

SALES ORDER DOCUMENT
SALES ORGANIZATION
SALES STATUS
SHIPPING POINT
STOCK CLASS
STOCK LEVEL DAY
STOCK LEVEL MONTH
STOCK LEVEL WEEK
STOCK OPENING BALANCE
STOCK OVERVIEW
STOCK USAGE FORECAST
STOCK USAGE FORECAST VERSION
STOCKOUT
STORAGE BIN
TIME
UNIT OF MEASURE
UNIT OF MEASURE CONVERSION
USER CATEGORY
VALUATION
VENDOR
VENDOR PROFILE
WORK ORDER

Functional areas 203, Areas of analysis 202, and measures 111

Referring back to Figure 11 and Figures 12A to 12AE, the following is a listing of areas of analysis 202 and their measures 111 which may be used in a data warehouse system 100:

Sales

The sales functional area 1703 data model component may include Sales Distribution Detail 1722, Sales Billing Detail 1723, and Sales Order Detail 1724 data structures. The sales functional area 1703 data model component may also include Slaes Contract Detail and Sales Activity Summary data structures.
The Sales Distribution Detail 1722 data structure may comprise:

- Actual Delivered Base Unit Quantity
- Actual Delivered Sale Unit Quantity
- Company Code
- Actual Goods Issue Date Sid
- Changed Date
- Complete Delivery Indicator
- Created Date
- Delivered Date Sid
- Distribution Channel Code
- Document Currency Code
- Group To Document Currency Conversion Rt
- Document Currency Extended Cost Amount
- Document Currency Extended Net Price Amt
- Document Currency Extended Net Value Amt
- Document Item Number
- Document Number
- Document Type Code
- Group Currency Code
- Group Currency Extended Net Price Amount
- Group Currency Extended Net Value Amount
- Loaded Date Sid
- Local Currency Code
- Group to Local Currency Conversion Rate

58

- Local Currency Extended Net Price Amount
- Local Currency Extended Net Value Amount
- Next Planned Shipping Date Sid
- Order Combination Indicator
- Planned Goods Issue Date Sid
- Priority Delivery Code
- Requested Delivery Date Sid
- Scheduled Transportation Date Sid

The Sales Billing Detail 1723 data structure may comprise:

- Adjustment Identifier
- Changed Date
- Created Date
- Customer Transaction Line Number
- Customer Transaction Number
- Document Currency Code
- Group to Document Currency Exchange Rate
- Document Currency Extended Cost Amount
- Document Currency Extended Price Amount
- Document Currency Cash Discount Amount
- Document Currency Freight Amount
- Document Currency Tax Amount
- Document Item Number
- Document Number
- Document Type Code
- Group Currency Code
- Group Currency Discount Amount
- Group Currency Extended Price Amount
- Group Currency Cash Discount Amount
- Group Currency Freight Amount
- Group Currency Profit Margin Amount
- Group Currency Tax Amount
- Local Currency Code
- Group to Local Currency Exchange Rate
- Local Currency Extended Price Amount
- Local Currency Cash Discount Amount
- Local Currency Freight Amount
- Local Currency Tax Amount

The Sales Order Detail 1724 data structure may comprise:

- Changed Date
- Created Date
- Document Currency Code
- Group To Document Currency Conversion Rt
- Document Currency Discount Amount
- Document Currency Extended Cost Amount
- Document Currency Extended Price Amount
- Document Currency Profit Margin Amount
- Document Currency Freight Amount
- Document Currency Tax Amount
- Document Item Number
- Document Number
- Document Type Code
- Group Currency Code
- Group Currency Discount Amount
- Group Currency Extended Cost Amount

- Group Currency Extended Price Amount
- Group Currency Freight Amount
- Group Currency Profit Margin Amount
- Group Currency Tax Amount
- Local Currency Code
- Group to Local Currency Conversion Rate
- Local to Document Currency Conversion Rt
- Local Currency Discount Amount
- Local Currency Extended Cost Amount
- Local Currency Extended Price Amount
- Local Currency Freight Amount
- Local Currency Profit Margin Amount

AR

The AR functional area 1705 data model component may include AR Activity Detail 1728, AR Daily Activity Summary 1729, AR Monthly Activity Summary 1730, and AR Monthly Account Summary 1731 data structures. The AR functional area 1705 data model component may also include AR Invoice Summary and AR Payment Summary data structures.

The AR Activity Detail 1728 data structure may comprise:

- Debit Multiplier
- Credit Multiplier
- Local Currency Amount
- Local Currency Net Amount
- Local Currency Tax Amount
- Local Currency Discount Amount
- Local Currency Cost Amount
- Local Currency Freight Amount
- Local Currency Profit Margin Amount
- Group Currency Amount
- Group Currency Net Amount
- Group Currency Tax Amount
- Group Currency Discount Amount
- Group Currency Cost Amount
- Group Currency Freight Amount
- Group Currency Profit Margin Amount
- Created Date
- Changed Date

The AR Daily Activity Summary 1729 data structure may comprise:

- Daily Open Transaction Count
- Daily New Transaction Count
- Daily Total Open Item Amount
- Daily Total New Item Amount
- Daily Total Transaction Amount
- Daily Total Gross Sales Revenue Amount
- Daily Total Net Sales Revenue Amount
- Daily Total Revenue Amount
- Daily Average Transaction Amount
- Daily Average Gross Sales Revenue Amount
- Daily Average Net Sales Revenue Amount
- Daily New To Open Amount Ratio
- Daily New To Open Count Ratio

The AR Monthly Activity Summary 1730 data structure may comprise:

- Monthly Open Transaction Count
- Monthly New Transaction Count
- Monthly Discount Taken Transaction Count
- Monthly Discount Refused Transaction Count
- Monthly Total Transaction Amount
- Monthly Profit Amount
- Monthly Average Transaction Count
- Monthly Average Transaction Amount
- Monthly New to Open Transact Count Ratio
- Monthly New to Open Transac Amount Ratio
- Monthly Average Daily Sales Volume
- Monthly Average Collection Period
- Monthly Value Past Due Amount
- Monthly Trade Discount Cost Amount
- Monthly Effect on Bottom Line Amount
- Monthly Collection Effectiveness Index
- Dollar Weighted Avg Days Outstanding Amt
- Dollar Weighted Avg Days Beyond Term Amt
- Dollar Weighted Average Days to Pay Amt
- Monthly Net Credit Period
- Monthly AR Account Balance Amount
- Created Date
- Changed Date

The AR Monthly Account Summary 1731 data structure may comprise:

- Monthly Average Cost To Serve Amount
- Monthly Avg Invoice Payment Day Count
- Monthly Cost to Serve Amount
- Monthly Average Daily Sales Volume
- Monthly Average Collection Period
- Monthly Value Past Due Amount
- Monthly Trade Discount Cost Amount
- Monthly Effect on Bottom Line Amount
- Monthly Average Deliquent Day Count
- Monthly Collection Effectiveness Index
- Dollar Weighted Avg Days Outstanding Amt
- Dollar Weighted Avg Days Beyond Term Amt
- Dollar Weighted Average Days to Pay Amt
- Monthly AR Account Balance Amount

GL

The GL functional area 1704 data model component may include GL Activity Detail 1725, GL Balance 1726, and GL Budget 1727 data structures.

The GL Activity Detail 1725 data structure may comprise:

- Local Currency Amount
- Local Currency Credit Amount
- Local Currency Debit Amount
- Local Currency Net Amount
- Group Currency Credit Amount
- Group Currency Debit Amount
- Group Currency Net Amount
- Changed Date
- Created Date

The GL Balance 1726 data structure may comprise:

- Changed Date
- Created Date
- Group Currency Close Bal Amount
- Group Currency Period Credit Amount
- Group Currency Period Debit Amount
- Group Currency Period Net Activity Amt
- Group Currency Period Open Bal Amount
- Group Currency Year Open Bal Amount
- Group Currency YTD Credit Amount
- Group Currency YTD Debit Amount
- Group Currency YTD Net Activity Amount
- Local Currency Close Bal Amount
- Local Currency Period Credit Amount
- Local Currency Period Debit Amount
- Local Currency Period Net Activity Amt
- Local Currency Period Open Bal Amount
- Local Currency Year Open Bal Amount
- Local Currency YTD Credit Amount
- Local Currency YTD Debit Amount
- Local Currency YTD Net Activity Amount
- Year End Indicator

The GL Budget 1727 data structure may comprise:

- Changed Date
- Created Date
- Group Currency Close Bal Amount
- Group Currency Period Activity Amount
- Group Currency Period Open Bal Amount
- Group Currency Year Open Bal Amount
- Group Currency YTD Activity Amount
- Local Currency Close Bal Amount
- Local Currency Period Activity Amount
- Local Currency Period Open Bal Amount
- Local Currency Year Opening Bal Amount
- Local Currency YTD Activity Amount

AP

The AP functional area 1706 data model component may include AP Activity Detail 1732, AP Monthly Activity Summary 1733, AP Monthly Account Summary 1734, and AP Daily Activity Summary 1735 data structures. The AP functional area 1706 data model component may also include AP Invoice Summary and AP Payment Summary data structures.

The AP Activity Detail 1732 data structure may comprise:

- Local Currency Amount
- Local Currency Net Amount
- Local Currency Tax Amount
- Local Currency Discount Taken Amount
- Local Currency Discount Allowed Amount
- Local Currency Freight Amount
- Group Currency Amount
- Group Currency Net Amount
- Group Currency Tax Amount
- Group Currency Discount Taken Amount
- Group Currency Discount Allowed Amount
- Group Currency Freight Amount
- Total Payment Days Count

- Payment Term Day Count
- Payment Discount Day Count
- Created Date
- Changed Date

The AP Monthly Activity Summary 1733 data structure may comprise:

- New Transaction Count
- Open Transaction Count
- Discount Taken Transaction Count
- Discount Refused Transaction Count
- New Transaction Amount
- Open Transaction Amount
- Discount Taken Amount
- Discount Available Amount
- Created Date
- Changed Date

The AP Monthly Account Summary 1734 data structure may comprise:

- AP Account Balance Amount
- Average Days Past Due Count
- Average Collection Period
- Bad Debt Amount
- Invoice Count
- Invoice Amount
- Payment Count
- Payment Amount
- Adjustment Count
- Adjustment Amount
- Best Possible DPI Ratio
- Bottom Line Effect Amount
- Payment Effectiveness Index
- Cost To Serve Amount
- Days of Purchases Instanding Ratio
- Net Credit Purchases Amount
- Past Due Amount
- Trade Discount Profit Amount
- Trade Discount Offered Amount
- Dollar Weighted Avg Days Beyond Term Amt
- Past Due Count
- Dollar Weighted Avg Days Outstanding Amt

The AP Daily Activity Summary 1735 data structure may comprise:

- Open Transaction Count
- New Transaction Count
- Discount Taken Transaction Count
- Discount Refused Transaction Count
- Discount Taken Amount
- Discount Available Amount
- Open Transaction Amount
- New Transaction Amount
- Total Gross Sales Revenue Amount
- Total Net Sales Revenue Amount
- Total Revenue Amount
- Past Due Amount
- Average Transaction amount

- Average Gross Sales Revenue Amount
- Average Net Sales Revenue Amount

Inventory

The Inventory functional area 1702 data model component may include Stock Usage Forecast 1713, Physical Inventory 1714, Material Reservation 1715, Stock Overview 1716, and Material Movement 1721 data structures.
The Stock Usage Forecast 1713 data structure may comprise:

- Forecast First Day Date
- Modified Forecast First Day Date
- Forecast Period Number
- Forecast Value
- Corrected Value
- Seasonal Index Value
- Created Date
- Changed Date

The Physical Inventory 1714 data structure may comprise:

- Document Number
- Document Item Number
- Inventory Fiscal Year
- Book Stock Level Count
- Book Stock Document Cur Extndd Val Amt
- Book Stock Group Currency Extndd Val Amt
- Book Stock Local Currency Extndd Val Amt
- Physical Inventory Count
- Physical Inventory Grp Cur Extnd Val Amt
- Final Count Indicator
- Absolute Stock Accuracy Percentage
- Relative Stock Accuracy Percentage
- User Name
- Last Count Date Sid

The Material Reservation 1715 data structure may comprise:

- Document Number
- Document Item Number
- Reservation Date
- Reserved Quantity
- Reserved Quantity Doc Cur Extndd Val Amt
- Reserved Quantity Grp Cur Extndd Val Amt
- Reserved Quantity Lcl Cur Extndd Val Amt
- Confirmed Quantity
- Withdrawn Quantity
- Confirmed Quantity Grp Cur Extnd Val Amt
- Withdrawn Quantity Grp Cur Extnd Val Amt
- Document Currency Code
- Document Currency Conversion Rate
- Group Currency Code
- Local Currency Code
- Local Currency Conversion Rate
- User Name
- Deletion Indicator
- Final Issue Indicator

The Stock Overview 1716 data structure may comprise:

- Calendar Month
- Absolute Stock Accuracy Percentage
- Average Stock Level
- Average Unrestricted Stock Level
- Closing Stock Level
- Closing Unrestricted Stock Level
- Cumulative Usage Quantity
- Forecast Usage Quantity
- Last Used Date
- Maximum Stock Level
- Maximum Unrestricted Stock Level
- Minimum Stock Level
- Minimum Unrestricted Stock Level
- Moving Average Stock Level
- Moving Average Usage Quantity
- Moving Avg unrestricted Stock Level
- Opening Stock Level

The Material Movement 1721 data structure may comprise:

- Purchase Order Number
- Purchase Order Item Number
- Document Date
- Expiration Date
- Group Currency Value
- Movement Quantity
- Created Date
- Changed Date

Procurement

The Procurement functional area 1701 data model component may include Procurement Activity Periodic Summary 1707, Requisition Activity Detail 1708, Quotation Activity Detail 1709, Purchase Order Activity Detail 1710, Contract Activity Detail 1711, and Contract Document Summary 1712 data structures.

The Procurement Activity Periodic Summary 1707 data structure may comprise:

- Open Entered Document Count
- Open Blocked Document Count
- Open Approved Document Count
- Completed Closed Document Count
- Completed Cancelled Document Count
- Total Document Open Days Count
- Remaining Document Dollar Amount
- Total Document Value
- Changed Date
- Created Date

The Requisition Activity Detail 1708 data structure may comprise:

- Group To Local Exchange Rate
- On Hold Quantity
- Open Quantity
- Received Quantity
- Relieved Quantity
- Requested Transaction Quantity
- Group Currency Estimated Unit Price Amt
- Group Currency Extended Price Amount
- Group Currency Other Expenses Amount

- Group Currency Total Landed Cost Amount
- Group Currency Tax Amount
- Group Currency Duty Amount
- Group Currency Freight Amount
- Touch Count
- Correction Count
- Adjustment Count
- Created Date
- Changed Date

The Quotation Activity Detail 1709 data structure may comprise:

- Transaction Quantity
- On Hold Quantity
- Open Quantity
- Received Quantity
- Relieved Quantity
- Group Currency Unit Price Amount
- Group Currency Extended Price Amount
- Group Currency Other Expenses Amount
- Group Currency Total Landed Cost Amount
- Group Currency Tax Amount
- Group Currency Duty Amount
- Group Currency Freight Amount
- Group To Local Exchange Rate
- Touch Count
- Correction Count
- Adjustment Count
- Created Date
- Changed Date

The Purchase order Activity Detail 1710 data structure may comprise:

- Transaction Quantity
- On Hold Quantity
- Open Quantity
- Received Quantity
- Relieved Quantity
- Group Currency Unit Price Amount
- Group Currency Extended Price Amount
- Group Currency Other Expenses Amount
- Group Currency Total Landed Cost Amount
- Group Currency Tax Amount
- Group Currency Duty Amount
- Group Currency Freight Amount
- Group To Local Exchange Rate
- Touch Count
- Correction Count
- Adjustment Count
- Created Date
- Changed Date

The Contract Activity Detail 1711 data structure may comprise:

- Transaction Quantity
- On Hold Quantity
- Open Quantity
- Relieved Quantity

- Cumulative Received Quantity
- Received Quantity
- Group Currency Unit Price Amount
- Group Currency Target Commitment Amount
- Group To Local Exchange Rate
- Touch Count
- Correction Count
- Adjustment Count
- Created Date
- Changed Date

The Contract Document Summary 1712 data structure may comprise:

- Total Contract Dollar Value
- Remaining Dollar Value
- Created Date
- Changed Date

Reports

The following is a listing of some of the reports and groupings of reports for some functional areas:

Procurement Reporting:

MATERIAL DEMAND ANALYSIS

- Internal Customer Profile and Ranking
- Material Demand Analysis and Trends
- Demand Rationalization

VENDOR PROFILE

- Vendor Ranking
- Vendor Expenditure Overview
- Contract Activity Analysis
- Contract Analysis
- Vendor - Material Rationalization
- Vendor Profiling

OPERATIONAL EFFECTIVENESS

- Procurement Activity Overview
- Buyer Account Management Status
- Buyer Comparisons
- Procurement Process Efficiency
- Buyer Activity Overview
- Contract Usage Analysis
- Release Strategies

OPERATIONAL REPORTING

- Document Lists

Inventory Reporting:

INVENTORY PERFORMANCE

- Stock Level Overview and Comparisons
- Stock Level Analysis (Plant, Material)
- Detailed Storage Stock Levels

DEMAND ANALYSIS

- Stock Usage Overview and Comparisons
- Stock Usage Analysis
- Detailed List of Usage

MATERIAL TRACKING

- Material Movement Overview and Comparisons
- Movements Analysis

RESOURCE ACTIVITY

- Resource Activity Overview
- Activity Comparisons
- Plant/Employee Analysis

STOCK ACCURACY

- Stock Overview
- Stock Comparisons
- Stock Analysis

RESERVATIONS

- Reservations Overview
- Reservations Comparisons
- Reservations Analysis

FORECASTS

- Stock Forecast Overview and Comparisons
- Stock Forecast Analysis
- Stock Forecasts Profile

VENDOR ANALYSIS (MOVEMENTS)

- Vendor Overview and Comparisons
- Vendor Analysis
- Vendor Activity Profile

AP Reporting:

AP MANAGEMENT OVERVIEW

- Ageing Overview

- Payments Analysis
- Quality of Accounts Receivable
- Bad Debt Analysis

VENDOR ACCOUNT MANAGEMENT

- Vendor A/P Overview
- Vendor Ageing
- Top Ten Vendor Activity Report
- Overdue Accounts
- Vendor Account Overview
- Vendor Transaction Summary
- Vendor Activity Analysis
- Analysis of Adjustments
- Vendor Profile Status

VENDOR PAYABLES SCORECARDING

- Vendor Cost Analysis
- Discount Analysis

OPERATIONAL EFFECTIVENESS

- Organizational Overview
- Account Management Status
- Analyst Activity Overview
- Analyst Profile Overview
- Analyst Profile Status
- Document Flow Report

CASH OUTFLOW MANAGEMENT

- Payment Schedule
- Cash Outflow Forecasts

GL Reporting:

INCOME STATEMENT ANALYSIS

- Income Statement Time Comparisons
- Vertical Analysis
- Detailed Income Statement
- Income Statement Budget Variances

BALANCE SHEET ANALYSIS

- Balance Sheet Time Comparisons
- Balance Sheet Time Trends
- Detailed Balance Sheet
- Balance Sheet Budget Variance

FINANCIAL/LEGAL ENTITY ANALYSIS

- Company, Profit and Cost Center Comparison of Financial Reports
- Company, Profit Center and Cost Center Rankings and Comparisons
- Ratio Trends

BUDGET ANALYSIS

- Customer Profitability Analysis
- Customer Cost Analysis
- Discount Analysis

OPERATIONAL REPORTS

- Cost Center Analysis
- Account Analysis
- Trial Balance
- General Ledger Detail

KEY FINANCIAL RATIOS

Multi-dimensional analysis of key financial ratios:

- Leverage Ratios including Debt to Asset and Times Interest Earned
- Liquidity Ratios including Current, Quick Ratio, Fixed Asset Turnover, Total Asset Turnover
- Profitability or Efficiency Ratios including Profit Margin, Inventory Turnover, Return on Assets, Return on Equity

Sales Reporting:

SALES ORDER LIFE CYCLE

- Sales Orders Overview and Comparison
- Sales Orders Analysis
- Sales Order List By Customer
- Customer Order Profiles

CUSTOMER BUYING TRENDS

- Customer Buying Overview and Comparisons
- Trends Analysis
- Billings List By Customer
- Customer Ranking

SALES/PRODUCT PERFORMANCE

- Sales and Product Overview/Comparison
- Sales and Product Performance Analysis
- Sales Office and Sales Rep Performance Profiles
- Product Sales List
- Product Performance Profile

SHIPPING CHANNEL TREND/DRIVERS

- Shipping Overview and Analysis
- Shipping Channel Comparisons
- Shipping Performance Overview/Comparisons
- Shipping Profile and Document List by Product

CHANNEL PERFORMANCE

- Channel Overview and Comparisons
- Channel Performance Analysis
- Billing List by Channel; Channel Profile

DELIVERY/ON-TIME DELIVERY ANAYSIS

- Delivery Effectiveness Overview and Comparisons
- Delivery Effectiveness Analysis
- Shipping Point Profile

AR Reporting:

AR MANAGEMENT OVERVIEW

- Ageing Overview
- Collection Analysis
- Quality of Accounts Receivable
- Bad Debt Analysis

CUSTOMER COLLECTION MANAGEMENT

- Customer A/R Overview
- Customer Ageing
- Top Ten Customer Activity Report
- Overdue Accounts

CUSTOMER ACCOUNT MANAGEMENT

- Customer Account Overview
- Customer Transaction Summary
- Customer Activity Analysis
- Analysis of Adjustments
- Customer Profile Status

CUSTOMER SCORECARDING

- Customer Profitability Analysis
- Customer Cost Analysis
- Discount Analysis

OPERATIONAL EFFECTIVENESS

- Organizational Overview
- Account Management Status
- Analyst Activity Overview
- Analyst Profile Overview
- Analyst Performance Comparison
- Document Flow Report

AR AND SALES ANALYSIS

- Accounts Receivable and Sales Related KPIs
- Customer AR Sales Overview

The data warehouse system of the present invention may be implemented by any hardware, software or a combination of hardware and software having the above described functions. The software code, either in its entirety or a part thereof, may be stored in a computer readable memory. Further, a computer data signal representing the software code which may be embedded in a carrier wave may be transmitted via a communication network. Such a computer readable memory and a computer data signal are also within the scope of the present invention, as well as the hardware, software and the combination thereof.

While specific embodiments of the present invention have been described, various modifications and substitutions may be made to such embodiments. Such modifications and substitutions are within the scope of the present invention, and are intended to be covered by the following claims.

**Claims**

1. A business model for use in a data warehouse system adaptable for multiple organizations, the business model comprising:

   a set of dimensions representing business reference aspects of the multiple organizations, a subset of the set of dimensions representing the business reference aspects of a particular organization;
   a set of measures representing measurements of business activity aspects of the multiple organizations, a subset of the set of measures representing the business activity aspects of the specific organization; and
   relationships between the set of dimensions and measures, the relationships allowing for functional areas of analysis to use common dimensions for cross-functional analysis.

2. The business model claimed in claim 1, wherein one or more dimensions include one or more placeholders settable such that a subset of the set of dimensions represents the business reference aspects of the specific organization.

3. The business model claimed in claim 1, wherein the dimensions are grouped into groupings of dimensions.

4. The business model claimed in claim 3, wherein a grouping of dimensions includes organizational dimensions for financial analysis of the multiple organizations.

5. The business model claimed in claim 3, wherein a grouping of dimensions includes functional document dimensions.

6. The business model claimed in claim 3, wherein a grouping of dimensions includes master dimensions.

7. The business model claimed in claim 3, wherein a grouping of dimensions includes operational entity dimensions.

8. The business model claimed in claim 3, wherein a grouping of dimensions includes financial transaction activity dimensions.

9. The business model claimed in claim 3, wherein a grouping of dimensions includes organizational dimensions for financial analysis of the multiple organizations.

10. The business model claimed in claim 3, wherein a grouping of dimensions includes universal dimensions.

11. The business model claimed in claim 3, wherein a grouping of dimensions includes functional specific dimensions.

12. The business model claimed in claim 1, wherein one or more measures comprise a key performance indicator.

13. The business model claimed in claim 1, wherein the set of measures is grouped into areas of analysis to answer business questions applicable to the multiple organizations, a subset of the business questions used to analyze the particular organization.

14. The business model claimed in claim 1, wherein the set of measures is grouped into functional areas of analysis to answer business questions applicable to a functional area of the multiple organizations, a subset of the business questions used to analyze the functional area of the particular organization.

15. The business model claimed in claim 1, wherein a grouping of the set of measures relates to at least one of:

   sales analysis of the multiple organizations for providing information used to analyse and make decisions within a sales division of an organization;
   accounts receivable analysis of the multiple organizations;
   general ledger analysis of the multiple organizations;

accounts payable analysis of the multiple organizations.
inventory analysis of the multiple organizations.
procurement analysis of the multiple organizations.

**16.** The business model claimed in claim 1, wherein one or more measure includes one or more placeholders settable such that the subset of the set of measures represent the measurements of business activity aspects of the specific organization.

**17.** A method for creating a business model for use in a data warehouse system adaptable for multiple organizations, the method comprising steps of:

merging business questions of the multiple organizations into areas of analysis; and
decomposing the areas of analysis into:

a set of dimensions representing business reference aspects of the multiple organizations, a subset of the set of dimensions representing the business reference aspects of a particular organization; and
a set of measures representing measurements of business activity aspects of the multiple organizations, a subset of the set of measures representing the measurements of business activity aspects of the specific organization; and

determining relationships between the set of dimensions and set of measures, the relationships allowing for functional areas of analysis to use common dimensions for cross-functional analysis.

**18.** A method for creating a data warehouse system for managing the performance of an organization, the data warehouse system adaptable for multiple organizations, the method comprising steps of:

creating a business model of organizations, the business model for answering business questions of the multiple organizations;
implementing the business model in a data model, the data model having placeholders settable such that the model represents a particular organization; and
implementing configurable aspects of the data model in a configuration unit for setting the placeholders in the data model to the particular organization.

**19.** The method claimed in claim 18, wherein the step of implementing the business model in a data model comprises the step of providing one or more placeholders in the set of dimensions, the placeholders settable to configure the set of dimensions to the particular organization.

**20.** The method claimed in claim 18, wherein the step of implementing the business model in a data model comprises the step of providing one or more placeholders in the set of measures, the placeholders settable to configure the set of measures to the particular organization.

**21.** The method claimed in claim 18, wherein the step of implementing the business model in a data model comprises the step of determining relationships between the set of dimensions and set of measures comprises the step of determining which dimensions in the set of dimensions are used by each measure.

**22.** The method claimed in claim 18, wherein the step of implementing the business model in a data model the step of providing placeholders in the data model, the placeholders settable such that the data model represents a particular organization.

**23.** The method claimed in claim 22, wherein the step of providing placeholders comprises one or more steps of:

providing one or more placeholders in the data model to reflect a fiscal pattern of the particular organization;
providing one or more placeholders in the data model to reflect a common currency used by the data model; and
providing one or more placeholders in the data model to reflect a category defined by a user, the category used to analyze information in the data model.

**24.** The method claimed in claim 18, wherein the step of implementing connectors to extract source data from one or more data sources and to load the extracted data into the data model.

**25.** The method claimed in claim 24, wherein the step of implementing connectors comprises the step of providing placeholders in the configuration unit, the connectors for extracting data from one or more data source systems and loading the data into the data model, the placeholders settable such that the configuration unit represents a particular data source.

**26.** The method claimed in claim 25, wherein the step of providing settable parameters comprises the step of providing settable parameters in the connectors for configuring the connectors to the particular data source.

**27.** The method claimed in claim 25, wherein the step of providing settable parameters comprises the step of providing one or more settable placeholders in the data model for configuring the connectors to the particular data source system.

**28.** The method claimed in claim 25, wherein the step of providing settable parameters comprises the step of providing one or more settable options in the configuration unit to reflect environmental settings of the particular data source system.

**29.** The method claimed in claim 25, wherein the step of providing parameters in one or more connectors comprises the step of providing extraction transformation loading (ETL) software code.

**30.** The method claimed in claim 25, wherein the step of providing parameters in one or more connectors comprises steps of:

> providing ETL code for extracting values from a data source system to set the placeholders in the data model and to set the parameters in the configuration unit; and
> providing ETL code for using the values to extract information from the data source system, transform the data and load the data into the data model.

**31.** A dimensional framework for use as a foundation of a data warehouse system adaptable for multiple organizations, the dimensional framework comprising a set of dimensions of the multiple organizations, the dimensions representing business reference aspects of the multiple organizations, a subset of the dimensions representing the business reference aspects of a particular organization.

**32.** A method for creating a dimensional framework for use as a foundation of a data warehouse system adaptable for multiple organizations, the method comprising steps of:

> collecting common dimensions of the multiple organizations, the dimensions representing the business reference aspects of the multiple organizations;
> implementing the common dimensions into a dimensional framework data model, the dimensional framework data model having placeholders settable such that the dimensional framework represents a particular organization; and
> implementing configurable aspects of the dimensional framework data model in a configuration unit for setting the placeholders in the dimensional framework to the particular organization.

**33.** The method claimed in claim 32, further comprising the step of implementing connectors to extract source data from one or more data sources and to load the extracted data into the dimensional framework data model

**34.** A computer program product for use in the execution in a computer of a data warehouse system adaptable for multiple organizations, the data warehouse system for managing performance of a particular organization, the data warehouse system comprising:

> a set of dimensions representing business reference aspects of the multiple organizations, a subset of the set of dimensions representing the business reference aspects of a particular organization;
> a set of measures representing measurements of business activity aspects of the multiple organizations, a subset of the set of measures representing the business activity aspects of the specific organization; and
> relationships between the set of dimensions and measures, the relationships allowing for functional areas of analysis to use common dimensions for cross-functional analysis.

**35.** A computer program product for use in the execution in a computer of a dimensional framework for use as a foundation of a data warehouse system adaptable for multiple organizations adaptable for multiple organizations, the dimensional framework comprising a set of dimensions of the multiple organizations, the dimensions representing business reference aspects of the multiple organizations, a subset of the dimensions representing the business reference aspects of a particular organization.

110 Business Model

202 Business Functional Areas

203 Area of Analysis

204

Key Performance Indicators /
Measures /
Attributes

112

Dimensions

Figure 1

Figure 2

- 20 User
- 21 Administrator
- 100 Data Warehouse System
- 150 Content Explorer
- 110 Business Model
- 111 Measures
- 112 Dimensions
- 120 Data Model
- 121 Fact Tables
- 122 Dimension Tables
- 130 Operational Framework
- 133 Console
- 140 Connectors
- 10 ERP Data Source

Figure 3

```
┌─────────────────────────────────────────────────────┐
│                   Select a market                     │ ⟍ 3001
└─────────────────────────────────────────────────────┘
                          │
                          ▼
┌─────────────────────────────────────────────────────┐
│           Identify organizations in the market        │ ⟍ 3002
└─────────────────────────────────────────────────────┘
                          │
                          ▼
┌─────────────────────────────────────────────────────┐
│   Analyze an organization to collect organizational   │ ⟍ 3003
│                    information                         │
└─────────────────────────────────────────────────────┘
                          │
                          ▼
┌─────────────────────────────────────────────────────┐
│  Determine business questions from the collected      │ ⟍ 3004
│                  information                           │
└─────────────────────────────────────────────────────┘
                          │
                          ▼
              ◇◇◇◇◇◇◇◇◇◇◇◇◇◇◇◇◇◇◇◇◇◇
   Yes    ◇◇◇      Is there another      ◇◇◇
◀─────────◇◇◇   organization to analyze?  ◇◇◇
              ◇◇◇◇◇◇◇◇◇◇◇◇◇◇◇◇◇◇◇◇◇◇   3005
                          │ No
                          ▼
┌─────────────────────────────────────────────────────┐
│      Merge the business questions into areas of       │ ⟍ 3006
│                    analysis                            │
└─────────────────────────────────────────────────────┘
                          │
                          ▼
┌─────────────────────────────────────────────────────┐
│  Decompose areas of analysis into dimensions,         │ ⟍ 3007
│            measures and attributes                    │
└─────────────────────────────────────────────────────┘
                          │
                          ▼
┌─────────────────────────────────────────────────────┐
│  Design the business model based on the dimensions,   │ ⟍ 3008
│              measures and attributes                  │
└─────────────────────────────────────────────────────┘
                          │
                          ▼
┌─────────────────────────────────────────────────────┐
│                      Done                             │ ⟍ 3009
└─────────────────────────────────────────────────────┘
```

Figure 4

| Business Model Development | |
|---|---|
| | 2001 |

↓

| Requirements Definition | |
|---|---|
| | 2011 |

↓

| Configurable Data Warehouse Model Specification | |
|---|---|
| | 2020 |

↓

| Configurable Data Warehouse Product Development and Packaging | |
|---|---|
| | 2030 |

↓

| Done |
|---|

Figure 5A

Select Market

2002

Identify Development Partners who are representative of all aspects of the Market

2003

Investigate the Key Business Drivers of the Market

2004

Identify the "Business" Questions that need to be answered to manage business performance

2007

Define Business Model that represents the typical business functions of the businesses

2008

Done

Figure 5B

Figure 5C

```
┌─────────────────────────────────────────────────────────┐
│   Design a Data Warehouse Model specification to answer the │
│                   business questions                        │
└─────────────────────────────────────────────────────────┘
                                                          2021
                            │
                            ▼
┌─────────────────────────────────────────────────────────┐
│   Design a high level functional specification to show how these │
│               questions are to be answered                  │
└─────────────────────────────────────────────────────────┘
                                                          2022
                            │
                            ▼
┌─────────────────────────────────────────────────────────┐
│  Analyze each selected Source System to determine how and what to │
│           extract to meet the defined requirements          │
└─────────────────────────────────────────────────────────┘
                                                          2023
                            │
                            ▼
┌─────────────────────────────────────────────────────────┐
│   Across all the source systems identify source system specific │
│                       variations                            │
└─────────────────────────────────────────────────────────┘
                                                          2028
                            │
                            ▼
┌─────────────────────────────────────────────────────────┐
│  Within each source system identify implementation specific variations │
└─────────────────────────────────────────────────────────┘
                                                          2029
                            │
                            ▼
┌─────────────────────────────────────────────────────────┐
│                         Done                                │
└─────────────────────────────────────────────────────────┘
```

Figure 5D

Design the "configurable" version of the Data Warehouse Model and ETL code

2031

Implement the configurable aspects of the solution in the Configuration Unit

2034

Package the complete solution as a product

2035

Done

Figure 5E

Figure 6

| 391 Organizational Dimensions for Financial Analysis | 392 Functional Document Dimensions | 393 Master Dimensions |
|---|---|---|
| 320 321 322 323 324 325 | 326 327 328 329 330 331 332 333 334 | 335 336 337 338 339 |

390

| 401 Sales Analysis | 402 AR Analysis | 403 GL Analysis | 404 AP Analysis | 405 Inventory Analysis | 406 Procurement Analysis |
|---|---|---|---|---|---|
| 410 | 420 | 430 | 440 | 450 | 460 |
| 411 | 421 | | | 451 | 461 |
| 412 | 422 | 431 | 441 | 452 | 462 |
| 413 | 423 | 432 | 442 | 453 | 463 |
| | 424 | | | 454 | 464 |
| 414 | 425 | 433 | 443 | 455 | 465 |

390

| 340 341 342 343 344 | 345 346 347 | 348 349 350 351 352 353 354 | 355 356 357 358 359 360 |
|---|---|---|---|
| Operational Entity Dimensions 394 | Financial Transaction 395 Activity | Universal Dimensions 396 | Functional Specific Dimensions 397 |

Figure 7

Figure 8

Figure 9

Figure 10

Figure 11

**348** All Time

Time

**357** Release Strategy

**322** Cost Center

**1707**

Procurement Activity Periodic Summary

**336** Vendor

**339** Employee

**335** Procurement Document Class

Figure 12A

348
All Time

Time

357
Purchasing
Organizaiton
Group

Release Strategy

322
Cost Center

341
Plant

1708

Requisition Activity Detail

337
Material

333
Requisition Activity
Document

335
Procurement Document
Class

336
Vendor

339
Employee

340
Organization

356
Procurement Status

349
Unit of Measure

338
Customer

Figure 12B

EP 1 248 216 A1

92

| | |
|---|---|
| 348 All Time | |
| Time | |

| 331 Quotation Activity Document | |
|---|---|

| 336 Vendor | |
|---|---|

| 339 Employee | |
|---|---|

357 Release Strategy

322 Cost Center

341 Plant

337 Material

1709 Quotation Activity Detail

335 Procurement Document Class

334 Contract Activity Detail

Purchasing Organization Group

340 Organization

356 Procurement Status

349 Unit of Measure

338 Customer

Figure 12C

341 Plant

337 Material

335 Procurement Document Class

334 Contract Activity Docuemnt

338 Customer

322 Cost Center

349 Unit of Measure

357 Release Strategy

1710 Purchase Order Activity Detail

356 Procurement Status

Purchasing Organization Group

340 Organization

348 All Time

Time

332 Purchase Order Activity Document

336 Vendor

339 Employee

Figure 12D

Figure 12E

348
All Time

Time

1712

Contract Document Summary

334
Contract Activity
Document

336
Vendor

339

Employee

340

Organization

356

Procurement Status

335
Procurement Document
Class

Figure 12F

342 Material Storage

341 Plant

349 Unit of Measure

1713 Stock Usage Forecast

354 Forecast Version

348 All Time

Time

337 Material

Figure 12G

EP 1 248 216 A1

359
Batch

360
Stock Class

1714
Physical Inventory

342
Material Storage

337
Material

349
Unit of Measure

341
Plant

Figure 12H

359

Batch

328

Movement Document
Class

1715

Material Reservation

342

Material Storage

337

Material

349

Unit of Measure

341

Plant

343

Storage Bin

Figure 12f

342 Material Storage

341 Plant

349 Unit of Measure

1716 Stock Overview

358 Valuation

337 Material

Figure 12J

341 Plant

359 Batch

329 Movement Document Class

360 Stock Class

1721 Material Movement

336 Vendor

337 Material

358 Valuation

328 Movement Document

349 Unit of Measure

342 Material Storage

343 Storage Bin

Figure 12K

Sales Organization

Sales Contract Document

327 Sales Document Class

Sales Distribution Document

338 Customer

344 Shipping Point

Customer Demographic

341 Plant

1722 Sales Distribution Detail

339 Employee

350 Financial Currency Conversion

348 All Time

Fiscal

Time

349 Unit of Measure

355 Sales Status

337 Material

Figure 12L

EP 1 248 216 A1

| 348 All Time | | 350 Financial Currency Conversion | 341 Plant | Sales Organization |

348 All Time

Fiscal

Time

350
Financial Currency Conversion

341
Plant

Sales Organization

1723

Sales Billing Detail

349
Unit of Measure

327
Sales Document Class

Sales Contract Document

337
Material

355
Sales Status

339
Employee

Sales Billing Document

338
Customer

Figure 12M

| 348 All Time | | | 1755 | 1763 | |
| Time | Fiscal | | Financial Currency Conversion | Plant | Sales Organization |

| 349 Unit of Measure | | 1724 | Sales Contract Document |
| | | Sales Order Detail | |
| 337 | | | 327 Sales Document Class |
| Material | | | |
| | 355 Sales Status | 339 Employee | Sales Order Document | 338 Customer |

Figure 12N

Figure 120

348 All Time

1755 Financial Currency Conversion

Fiscal

Time

Sales Organization

349 Unit of Measure

Sales Contract Detail

Sales Contract Document

327 Sales Document Class

337 Material

355 Sales Status

339 Employee

338 Customer

EP 1 248 216 A1

EP 1 248 216 A1

Figure 12P

106

Figure 12Q

EP 1 248 216 A1

Figure 12R

EP 1 248 216 A1

| 324 | 320 | 348 |
|---|---|---|
| GL Budget Version | Company Consolidation | All Time |

All Time

Time

1727

GL Budget

353

Flexi-Dimension

325

Chart of Account

323

Business Area

Figure 12S

348

All Time

Fiscal

Time

326

Accounting
Document
Class

320

Company
Consolidation

322

Cost Center

350

Financial Currency
Conversion

1728

AR Activity Detail

325

Chart of Account

338

Customer

340

Organization

323

Business Area

339

Employee

345

AR Activity
Document

Figure 12T

Figure 12U

348

All Time

Time

Fiscal

326
Accounting
Document
Class

320
Company
Consolidation

322

Cost Center

350

Financial Currency
Conversion

1730

AR Monthly Activity Summary

325

Chart of Account

323

Business Area

339

Employee

340

Organization

338

Customer

Figure 12V

Figure 12AD

Figure 12AE

Figure 13

EP 1 248 216 A1

Figure 14

EP 1 248 216 A1

Figure 15

**System Parameters**

| Parameter Name | | Value | Description |
|---|---|---|---|
| AP_ADJSTMNT_MULT_COND | SYSTEM | 'PO' | Specifies which document types are used to set the multiplier identifying adjustments |
| AP_ADJSTMNT_RSN_COND | SYSTEM | 'PE' | Identifies which document codes (00/DT) are adjustment types used in A/P |
| AP_INVOICE_MULT_COND | SYSTEM | PA','PB',PC | Specifies which document types are used to set the multiplier identifying transactions/vouchers |
| AP_MATCH_DOC_TYP_COND | SYSTEM | 'PN', 'PO', | Identifies which document codes (00/DT) are payment types used in A/P |
| AP_PAYMENT_MULT_COND | SYSTEM | 'PN', 'PX', | Specifies which document types are used to set the multiplier identifying payments |
| AP_TRANSACTION_TYP_COND | SYSTEM | 'PA', PJ'. | Identifies which document codes (00/DT) are transaction/voucher types used in A/P |
| AR_BADDEBT_MULT_COND | SYSTEM | BD' | Specifies which document types are used to set the multiplier identifying bad debt transactions |
| AR_INVOICE_MULT_COND | SYSTEM | 'RB', 'RF', | Specifies which document types are used to set the multiplier identifying invoice transactions |
| AR_MATCH_DOC_TYP_COND | SYSTEM | 'RA','RE', RC | Identifies which document codes are matching document types used in A/R |
| AR_PAYMENT_MULT_COND | SYSTEM | RC' | Specifies which document types are used to set the multiplier identifying payment transactions |
| AR_TRANSACTION_TYP_COND | SYSTEM | RB','RD', RF | Identifies which document codes (00/DT) are transaction/invoice types used in A/R |
| DEFAULT_COUNTRY_CD | SYSTEM | US | Default country code. J.D. Edwards populates the default country code with a blank space, so this must be defined if the company is in |
| DEFAULT_COUNTRY_NM | SYSTEM | United | Default country name. J.D. Edwards populates the default country name with a blank space, so this must be defined if the company is in |
| DEFAULT_DATE | SYSTEM | 19000101 | Default value of date types in the target table. |
| DEFAULT_LONG_CHAR | SYSTEM | <Unknown> | Default value of large varchar types in the target table. |
| DEFAULT_NUMBER | SYSTEM | 0 | Default value of numeric types in the target table |
| DEFAULT_SHORT_CHAR | SYSTEM | - | Default value of short varchar (less than ten characters) data types in the target table. |
| DEFAULT_VARIANT | SYSTEM | R | Default value of the fiscal variant type in the target table |
| GL_ACCT_TYPE_CD | SYSTEM | GMR001 | JDE column name from F0901 that is the source for the account type code. This is a required assignment. |
| GL_BU_DEPT_CD | SYSTEM | MCRP05 | JDE column name from FC006 that is the source for the department code of a business unit. The definition must be limited to a single |
| GL_BU_FLTR | SYSTEM | MCSTYLIN | A business unit filter to be included in the WHERE clause of datastreams that include FC006, the Business Unit Master. The |
| GL_BU_MNGR_CD | SYSTEM | MCRP06 | JDE column name from F0006 that is the source for the business manager of a business unit. The definition must be limited to a single |
| GL_BU_REGN_CD | SYSTEM | MCRP02 | JDE column name from F0006 that is the source for the region code of a business unit. The definition must be limited to a single column |
| GL_BU_RESP_EXEC_CD | SYSTEM | MCRP14 | JDE column name from F0006 that is the source for the responsible executive of a business unit. The definition must be limited to a single |
| GL_BU_UDC_01 | SYSTEM | MCRP01 | JDE column name from F0006 that is the source for the business category unit 1. The definition must be limited to a single column name |
| GL_BU_UDC_02 | SYSTEM | MCRP03 | JDE column name from F0006 that is the source for the business category unit 2. The definition must be limited to a single column name |
| GL_BU_UDC_03 | SYSTEM | MCRP04 | JDE column name from F0006 that is the source for the business category unit 4. The definition must be limited to a single column name |
| GL_BU_UDC_04 | SYSTEM | MCRP07 | JDE column name from F0006 that is the source for the business category unit 4. The definition must be limited to a single column name |
| GL_BU_UDC_05 | SYSTEM | MCRP08 | JDE column name from F0006 that is the source for the business category unit 5. The definition must be limited to a single column name |
| GL_BU_UDC_06 | SYSTEM | MCRP09 | JDE column name from F0006 that is the source for the business category unit 6. The definition must be limited to a single column name |
| GL_BU_UDC_07 | SYSTEM | MCRP10 | JDE column name from F0006 that is the source for the business category unit 7. The definition must be limited to a single column name |
| GL_BU_UDC_08 | SYSTEM | MCRP11 | JDE column name from F0006 that is the source for the business category unit 8. The definition must be limited to a single column name |
| GL_BU_UDC_09 | SYSTEM | MCRP12 | JDE column name from F0006 that is the source for the business category unit 9. The definition must be limited to a single column name |
| GL_BU_UDC_10 | SYSTEM | MCRP13 | JDE column name from F0006 that is the source for the business category unit 10. The definition must be limited to a single column name |

Figure 16

```
501 ──╮   ┌─────────────────────────────────────────┐
       │   │          System software installed        │
           └─────────────────────────────────────────┘
                              │
                              ▼
502 ──╮   ┌─────────────────────────────────────────┐
       │   │    System configured based on ERP environment │
           └─────────────────────────────────────────┘
                              │
                              ▼
503 ──╮   ┌─────────────────────────────────────────┐
       │   │ Desired information extracted from ERP and loaded │
           │   into placeholders in data warehouse system  │
           └─────────────────────────────────────────┘
                              │
                              ▼
504 ──╮   ┌─────────────────────────────────────────┐
       │   │                    Done                     │
           └─────────────────────────────────────────┘
```

Figure 17

135

Configuration Unit

303 Fiscal Pattern Settor

304 Currency Settor

305 User Defined Category Selector

306 Multiplier Settor

307 Source Details Settor

308 Environmental Settor

Figure 18

```
┌─────────────────────────────────────────┐
│ Data warehouse system software ready to be │
│               configured                  │
└─────────────────────────────────────────┘
                     │                        701
                     ▼
┌─────────────────────────────────────────┐
│            Fiscal patterns set            │
└─────────────────────────────────────────┘
                     │                        702
                     ▼
┌─────────────────────────────────────────┐
│           Common currency set             │
└─────────────────────────────────────────┘
                     │                        703
                     ▼
┌─────────────────────────────────────────┐
│        User defined categories selected   │
└─────────────────────────────────────────┘
                     │                        704
                     ▼
┌─────────────────────────────────────────┐
│              Multipliers set              │
└─────────────────────────────────────────┘
                     │                        705
                     ▼
┌─────────────────────────────────────────┐
│            Source details set             │
└─────────────────────────────────────────┘
                     │                        706
                     ▼
┌─────────────────────────────────────────┐
│          Environmental options set        │
└─────────────────────────────────────────┘
                     │                        707
                     ▼
┌─────────────────────────────────────────┐
│                  Done                     │
└─────────────────────────────────────────┘
                                              708
```

Figure 19

Figure 20

Figure 21

EP 1 248 216 A1

PowerPlay - [Ikpilon.ppt of Ratios (Explorer)]

File Edit View Insert Explore Calculate Format Tools Window Help

All Companies | Year Grouped | All Profit Centres | All Cost Centres | All Business Areas | MEASURES

O:\Applications\finance\Powerf
- All Companies
  - Premier Computers Inc
- All Years
  - 1998
  - 1999
  - Current Period
  - Current Period Prior Qtr
  - Current Period Prior Year
  - Year Grouped
  - Period Trends
  - Quarter Trends
- All Profit Centres
  - Premier North America
  - Discount Group
  - Premier Financial
- All Cost Centres
  - Premier Computer Systems
- All Business Areas
  - Government Unes
  - Enterprise Business Unit
  - Small Business Unit
  - Home Consumer Sales
  - Premier Corporate
- MEASURES

## Financial Analysis Key Performance Indicators

Year-over-Year Comparisons

Filters:
Current Period (1999)
All Companies, All Profit Centres, All Cost Centres, All Business Areas

Thursday, October 28, 1999

| | Prior Year-to-Date | Year-to-Date | Change | Growth |
|---|---|---|---|---|
| Current Ratio | 14.19 | 17.04 | 2.86 | 20.14% |
| Quick Ratio | 8.43 | 8.46 | 0.02 | 0.31% |
| Inventory Turnover | 8.48 | 7.87 | -0.61 | -7.22% |
| Fixed Asset Turnover | 1.19 | 1.51 | 0.32 | 26.71% |
| Total Asset Turnover | 0.95 | 1.15 | 0.21 | 21.10% |
| Debt to Asset | %1.44 | %1.30 | %-0.08 | 3.96% |
| Times Interest Earned | 150.10 | 127.64 | -28.45 | -17.62% |
| Fixed Charge Coverage | -150.10 | -127.64 | 26.45 | -17.62% |
| Profit Margin | %101.19 | %123.61 | %-22.59 | -17.11% |
| Basic Earning Power | %152.78 | %154.11 | %1.33 | 0.87% |
| Return on Assets | %152.78 | %154.11 | %1.33 | 0.87% |
| Return on Equity | %600383.11 | %630583.11 | %30200.00 | 5.03% |

Quick Ratio:

Figure 22

# Key Performance Indicator Analysis
## Sales

| | FY 1998 | FY 1999 | All Fiscal Periods |
|---|---|---|---|
| Total Sales Net Amount | $45,292.43K | $57,467.76K | $102,780.18K |
| Total Sales Quantity | 2,915 | 4,018 | 6,943 |
| Total Number of Sales | 14,251 | 24,524 | 38,775 |
| Total Sales Profit Margin | $4,770.93K | $6,282.81K | $11,013.51K |
| Total Sales Extended Price | $46,361.00K | $58,809.00K | $105,173.00K |
| Total Sales Discount Amount | $1,668.00K | $2,177.01K | $3,840.01K |
| Total Sales Freight Amount | $596.43K | $810.77K | $1,327.19K |
| Total Sales Extended Cost | $40,561.05K | $51,977.75K | $92,510.80K |
| Average Sales Net Amount | $3.18K | $2.34K | $2.65K |
| Average Sales Margin Percent | 13.82% | 14.74% | 14.10% |
| Total Billing Net Amount | $48,517.90K | $61,584.39K | $110,122.29K |
| Total Billing Quantity | 2,915 | 4,018 | 8,963 |
| Total Number of Billings | 14,251 | 24,524 | 38,775 |
| Total Billing Profit Margin | $4,770.93K | $6,282.81K | $11,013.51K |
| Total Billing Extended Price | $46,364.00K | $58,809.00K | $105,173.00K |
| Total Billing Cash Discount | $0.00K | $0.00K | $0.00K |
| Total Billing Discount Amount | $1,868.00K | $2,172.01K | $3,840.01K |
| Total Billing Freight Amount | $596.43K | $810.77K | $1,427.19K |
| Total Billing Tax Amount | $3,215.49K | $4,118.83K | $7,382.11K |
| Total Billing Extended Cost | $40,561.05K | $51,977.75K | $92,510.80K |
| Average Billing Net Amount | $3.41K | $2.51K | $2.84K |
| Average Billing Margin Percent | 12.93% | 13.80% | 13.48% |

Figure 23

Figure 24

Figure 25

Figure 26

Figure 27

**European Patent Office**

**DECLARATION**

**Application Number**

which under Rule 45 of the European Patent Convention EP 01 30 9701
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims 1-10 relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

| Place of search | Date | Examiner |
|---|---|---|
| THE HAGUE | 18 February 2002 | Marcu, A |

EPO FORM 1504 (P04C37)